Europäisches Patentamt

European Patent Office

Office européen des brevets

(19)

(11) **EP 0 475 233 B1**

(12) **EUROPEAN PATENT SPECIFICATION**

(45) Date of publication and mention
of the grant of the patent:
**09.02.2000 Bulletin 2000/06**

(51) Int. Cl.$^7$: **H04L 12/56**

(21) Application number: **91114741.1**

(22) Date of filing: **02.09.1991**

(54) **A routing system using a neural network**

Leitweglenkungssystem mittels eines neuralen Netzwerkes

Système de routage utilisant un réseau neuronal

(84) Designated Contracting States:
**DE FR GB**

(30) Priority: **31.08.1990 JP 22842890**

(43) Date of publication of application:
**18.03.1992 Bulletin 1992/12**

(73) Proprietor: **FUJITSU LIMITED**
**Kawasaki-shi, Kanagawa 211 (JP)**

(72) Inventors:
• **Chugo, Akira,**
**Room 517 Shinyamashita-Bay-City**
**Yokohama-shi, Kanagawa 231 (JP)**
• **Iida, Ichiro**
**Yokohama-shi, Kanagawa 244 (JP)**
• **Kurita, Toshihiko**
**Nakahara-ku, Kawasaki-shi, Kanagawa 211 (JP)**

(74) Representative:
**Lehn, Werner, Dipl.-Ing. et al**
**Hoffmann Eitle,**
**Patent- und Rechtsanwälte,**
**Postfach 81 04 20**
**81904 München (DE)**

(56) References cited:
**EP-A- 0 373 228**

• **IEEE INTERNATIONAL CONFERENCE ON**
**SYSTEMS, MAN AND CYBERNETICS vol. 1 ,**
**November 1989 , CAMBRIDGE, US pages 194 -**
**199 I.IIDA ET AL 'AUTONOMOUS ROUTING**
**SCHEME FOR LARGE SCALE NETWORK**
**BASED ON NEURAL PROCESSING'**
• **INTERNATIONAL JOINT CONFERENCE ON**
**NEURAL NETWORKS vol. 2 , June 1990 , SAN**
**DIEGO, US pages 29 - 36 XP144320 J.E.JENSEN**
**ET AL 'NEURAL NETWORK CONTROLLER FOR**
**ADAPTIVE ROUTING IN SURVIVABLE**
**COMMUNICATIONS NETWORKS'**

**Description**

The present invention relates to an adaptive packet routing system in a packet network and more particularly to a routing system using a neural network in which respective nodes maintain a neural network and which determines an optimum output direction of a packet from the self node or source node by using the neural network.

A future communication network will require increased operation speed and capacity and is expected to develop into a multi media integrated network in which various media can be installed in a mixed manner. In such an integrated network, the required performance such as a communication speed, reliability and a real time operation varies with time. Therefore, a routing technique is necessary which can set a flexible communication path in accordance with a variation of a state of a network and can set a detour path immediately upon an occurrence of a fault.

As a technology of realizing such communication, a packet exchange network has been considered. As an exchange method in a packet exchange network, a datagram method is provided which does not set a logical link between terminals, namely, which does not use a concept of a call, or a virtual call method which provides a logical channel between terminals. In a datagram system operated in such a packet exchange network, routing information up to the destination node is rewritten depending on the changes of the state of the network. This is because the traffic variation is relatively small and the optimum path is assumed not to frequently vary. In the routing of the virtual call method, the amount of traffic to be using a network is predicted upon designing the network and thus the optimum route is obtained so that the predicted traffic is not concentrated on a particular node between the sending and receiving node.

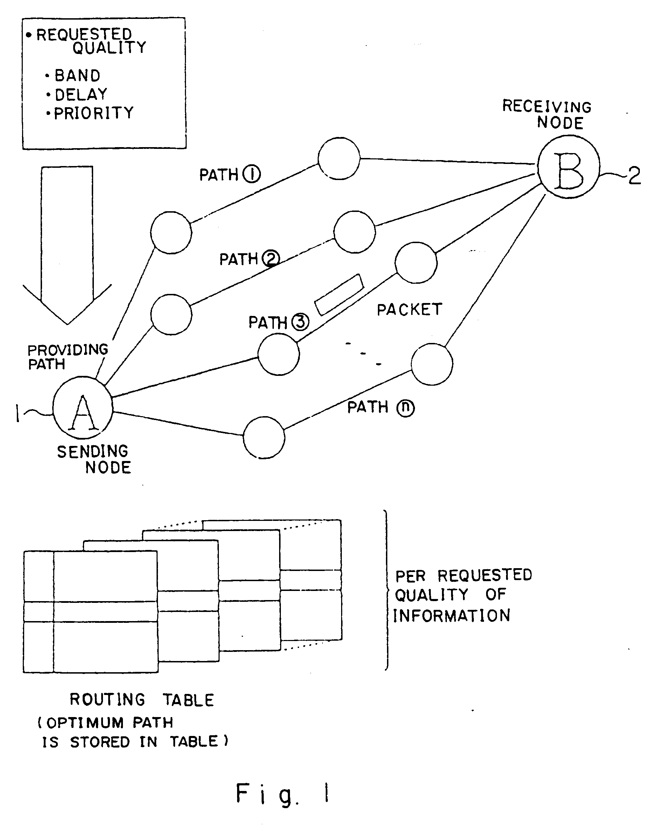

Figure 1 of the accompanying drawings shows a prior art example of the routing system in a packet exchange network. In Figure 1, a packet is transmitted from a sending node (A) 1 to an receiving node (B) 2 and paths 1 to n exists between a sending node 1 and a receiving node 2. Routing tables for providing optimum path information are provided in respective nodes for each requested quality of the information such as the requested band of the media, and the path determination is made based on the content of these tables.

In the virtual call, a plurality of detour routes are provided between transmitting and receiving nodes so that a faulty portion can be avoided. When the fault occurs, a default path is provided between transmitting and receiving nodes, thereby re-opening communication in a virtual call

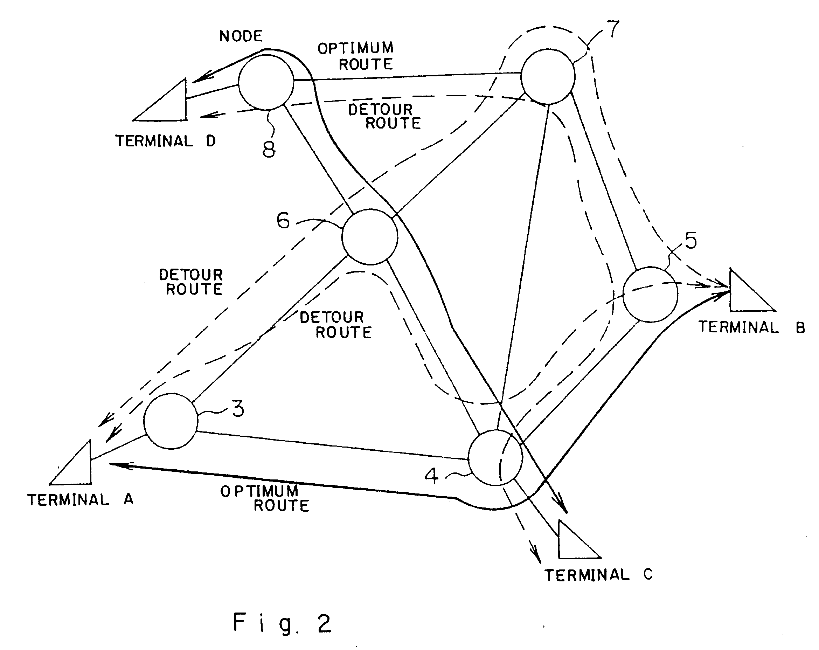

Figure 2 of the accompanying drawings shows a prior art of establishing a fault detour route in a packet exchange network. In Figure 2, between terminals A and B a route going through nodes 3, 4 and 5 are provided as an optimum route, and routes going through nodes 3, 6, 4 and 5 and going through nodes 3, 6, 7 and 5 are provided as a detour route. Between terminals C and D a route goijng throuth nodes 4, 6 and 8 are provided as an optimum route and a route going throuth nodes 4, 5, 7 and 8 are provided as a detour route.

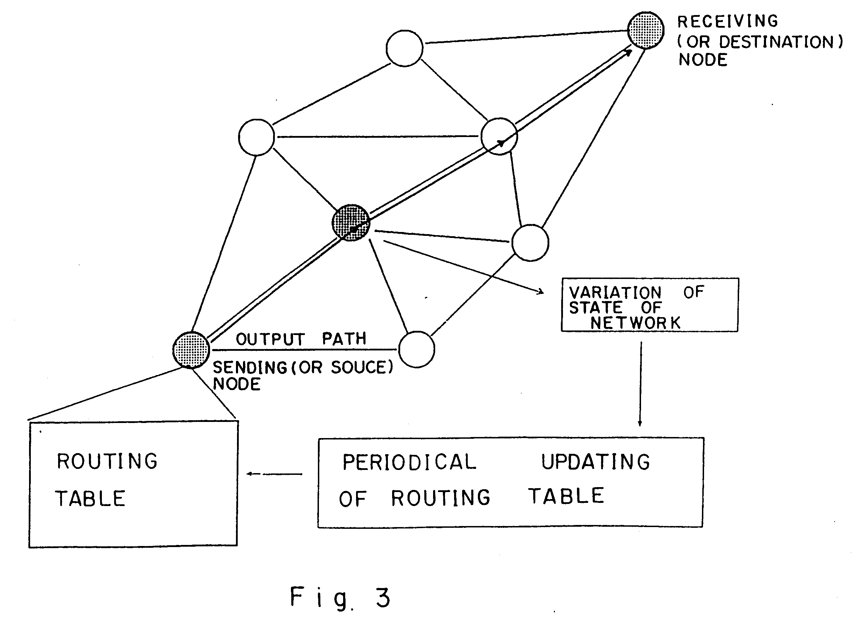

As described above, in the prior art routing of a datagram method, it becomes necessary that a routing table from a source node to a destination node is periodically updated in accordance with the change of the state of the network as shown in Figure 3. When the scale of the network becomes large and further the traffic variation is large, there is a problem that a time required for calculating an optimum path increases explosively and that an adaptive routing cannot be realized in accordance with the always changing state.

Even if an optimum path is obtained upon an input of the packet by using a virtual call system, a rate of a change of media kind & quantity installed therein with time becomes extremely large as compared with the prior art packet exchange network, it is impossible to obtain or determine an optimum path per the kind of media and the state of network by predicting such aspects of the network. In addition, there is a problem that a time for calculating an optimum path explosively increases with the scale of the network. There is also a problem that, if a detour path is again determined between a transmitting and receiving node when a link or node fault occurs, communication of a virtual call is interrupted during the period from the occurrence of the fault to the setting of the detour circuit, thereby reducing the reliability of a communication.

In the prior art, a single media is usually to be dealt with by a network and thus routing which satisfies different quality request from various medias is not always carried out. In the multimedia integrated network it is necessary to realize a routing which satisfies a quality required by each of medias.

To realize such routing, we filed patent application (Tokuganhei 01-507916 filed on July 6, 1989, EP-A-373 228 and WO-A-90 00 842) in which a routing adaptive to a state of the network is realized by a control network interconnecting threshold elements.

In the above applications, a threshold element corresponding to a neuron is provided to each node, thereby forming a neural network in the whole actual network. In this case, a time required until the neural network becomes stable and the optimum path is obtained depends on the distance between the nodes and thus there is a problem that a network with a long distance between the notes is not adaptive to the state variation.

An object of the present invention is to realize an adaptive routing which satisfies conditions required by various medias and reliability of communication.

According to the present invention there is provided a routing system for use in a packet switching network for performing communication of media in a packet format comprising:

a neural network;
characterized by:
the neural network being an inter correction type neural network for enabling respective nodes forming the packet switching network to determine an output direction of a packet from the self-node; and
an external stimulus input unit for outputting an external stimulus to a neuron forming said neural network in accordance with the present state of the packet switching network and a condition required by a medium included in the switching network; thereby enabling an optimum direction to be in a packet output direction in accordance with the present state of the packet switching network and the condition required by the media.

For a better understanding of the invention and to show how the same may be carried into effect, reference will now be made, by way of example, to the accompanying drawings, in which:

Figure 1 shows a conventional example of a path setting method in the packet switching network;
Figure 2 shows a conventional example of a fault detour route setting in the packet switching network;
Figure 3 is a view for explaining the problems in the conventional routing method;
Figure 4A designates a block diagram of a principle of the first and sixth embodiments of the invention;
Figure 4B designates a block diagram of the principle of the second embodiment of the invention;
Figure 4C designates a block diagram of the principle of the third embodiment of the invention;
Figure 4D designates a block diagram of the principle of the fourth embodiment of the invention;
Figure 4E shows a block diagram of the principle of the fifth embodiment of the invention;
Figure 5 depicts a connection relation between two neurons;
Figure 6 designates a structure of an embodiment of a neural network in respective nodes;
Figure 7 shows a block diagram of a structure of an embodiment of the node according to the first embodiment of the invention;
Figure 8 shows a block diagram of a structure of an embodiment of an external stimulus input processing unit according to the first embodiment of the invention;
Figure 9 designates the structure of an embodiment of the neural network according to the first embodiment of the invention;
Figure 10 designates a format of an embodiment of the data packet according to the first embodiment of the invention;
Figure 11 shows a format of an embodiment of the state notifying packet according to the first embodiment of the invention;
Figure 12 shows an embodiment of the content of the network state holding unit according to the first embodiment of the invention;
Figure 13 shows a structure of an embodiment of the state information creation notifying packet creation unit;
Figure 14 shows a block diagram of a structure of an embodiment of the optimum path representing unit;
Figure 15 shows a flowchart of an embodiment of the packet output direction determining processes;
Figure 16 designates an embodiment of the header information in the data packet according to the second embodiment of the invention;
Figure 17 shows a block diagram of a structure of a first embodiment of the node number detection and neuron output fixing unit according to the second embodiment of the invention;
Figure 18 shows a block diagram of a structure of the second embodiment of the node number detection and neuron output fixing unit;
Figure 19 shows a block diagram of the third embodiment of the node number detection and neuron output fixing unit;
Figure 20 designates a block diagram of a structure of the state notifying packet processing unit according to the third embodiment of the invention;
Figure 21 designates a block diagram of a structure of the sequence number checking unit;
Figure 22 shows a block diagram designating a structure of the state information value decrease processing unit;
Figure 23 shows a format of an embodiment of the state notifying packet according to the fourth embodiment of the invention;
Figure 24 shows a block diagram of a structure of an embodiment of the state notifying packet assembling unit according to the fourth embodiment of the invention;
Figure 25 designates a block diagram of a detailed structure of the state information decrease processing unit;
Figure 26 snows an explanatory view of a concept of the fifth embodiment of the invention;
Figure 27 shows an explanatory view of the relay range of the state notifying packet and the use range during the period of the routing;

Figure 28 shows a block diagram of a structure of an embodiment of the state calculating circuit;

Figure 29 designates a block diagram of a detailed structure of the state information creation.notifying packet creation unit according to the fifth embodiment of the invention;

Figure 30 designates a block diagram of a detailed structure of the state notifying packet processing unit;

Figure 31 designates a format of an embodiment of the state notifying packet according to the sixth embodiment of the invention

Figure 32 shows a block diagram of a detailed structure of the number-of-hop determination processing unit;

Figure 33 designates an explanatory view of a concept of state information prediction;

Figures 34A and 34B show an embodiment of the prediction function;

Figures 35A and 35B show an embodiment of the neural network for use in the prediction function unit;

Figure 36 shows an embodiment of the prediction function unit where the packet delay time and the packet loss ratio are input to the same three layer neural network;

Figure 37 shows a block diagram of a structure of an embodiment of the node according to the sixth embodiment of the invention;

Figure 38 shows a block diagram of a structure of an embodiment of the external stimulus input processing unit according to the sixth embodiment of the invention;

Figure 39 shows an embodiment of the content stored in the network state holding unit according to the sixth embodiment of the invention;

Figure 40 shows a format of an embodiment of the state notifying packet according to the sixth embodiment of the invention;

Figure 41 designates an explanatory view of the process by the delay time calculating unit;

Figure 42 shows a format of an embodiment of a call connection requirement and call setting packet;

Figure 43 shows an explanatory view of the process by the received packet processing unit;

Figure 44 shows an embodiment of the content stored in the routing table;

Figure 45 shows a flowchart of a procedure for the call setting packet creation;

Figures 46A to 46C show explanatory view of the example of the call setting packet creation process;

Figure 47 shows an embodiment of the call setting in the virtual call method;

Figure 48 designates an embodiment of a simulation model of the optimum path setting;

Figure 49 designates the result of the simulation; and

Figure 50 shows an example of a detour path setting upon the occurrence of the link fault.

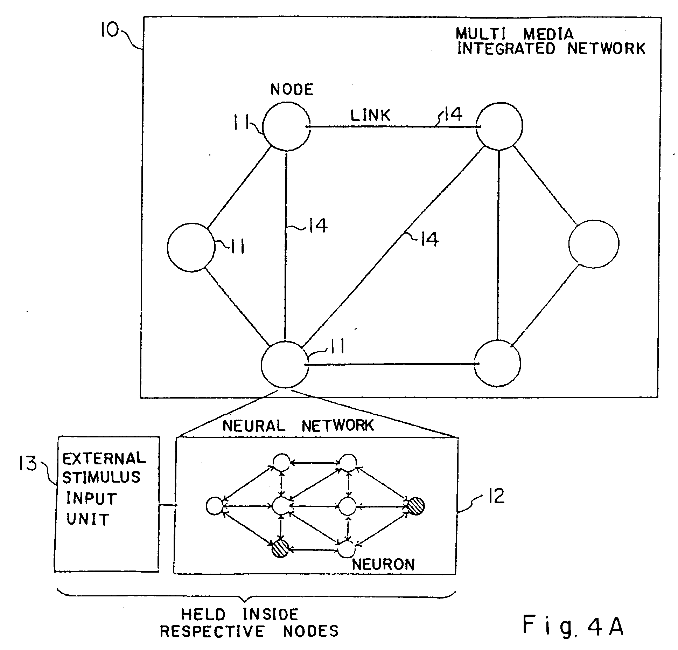

Figures 4A to 4E show principle block diagrams of an embodiment of the present invention. Figures 4A to 4E designate principle blocks diagrams of a routing system using a neural network in a multi media integrated network 10 which transmits a various media such as voice, image and data in a format of packet.

In Figures 4A to 4E, multi media integrated network 10 is composed of a plurality of nodes 11 and links 14 connecting the nodes. Neural network 12 provided inside respective nodes 11 forming multi media integrated network 10 determines an output direction of a packet from the self node and external stimulus input means 13 inputs external stimuli to a neuron in a neural network 12 in accordance with a present state of a multi media integrated network 10 and a condition required by media transmitted in integrated network 10. A neuron designated by a black in neural network 12 in Figures 4A to 4E represents the node in neural network 12 in which a packet treated as a subject of the routing control exists (and which is called a routing node) and a source node and destination node of the packet exist.

Figure 4A shows a principle block diagram of the first and sixth embodiments of the invention. The first embodiment is applied to a multi media integrated network using the datagram system. A loss ratio of a packet and a delay time of a packet in respective links 14, for example, are used to indicate the present state of integrated network 10 and the allowable packet loss ratio designating to what extent the packet can be lost in accordance with the designation by the terminal etc. to which the packet is input is used as a condition required by media. Based on these values, that is the loss ratio of the packet and the allowable loss ratio of the packet, an optimum output direction of the packet from the node is determined based on neural network 12 by using an external stimulus provided by external stimulus input means 13.

Inter connected type neural network 12 shown in Figure 4A comprises two kinds of neurons. A first kind of neuron corresponds to each respective node 11 on one-to-one basis and the second kind of neuron corresponds to each respective link 14 on one-to-one basis. External stimulus input means 13 provides an external stimulus to a neuron corresponding one-to-one to each link 14 and respective neurons forming a neural network 12 as an input from other neurons to the external stimulus. The result of the addition is subjected to a threshold processing, thereby outputting 0 or 1. This operation is repeated. As a result, it is determined that a node corresponding to the node correspondence neuron whose output stabilizes at 1 is the node in the packet output direction and that the link corresponding to the link correspondence neuron whose output is stabilized at 1 is a link in a packet output direction.

As for a communication media using a datagram method, each time the packet is to move in the multi-media integrated network, the optimum output direction of the packet is obtained at a node to which the packet has been input. By repeating this operation, the packet reaches the destination node through an optimum path.

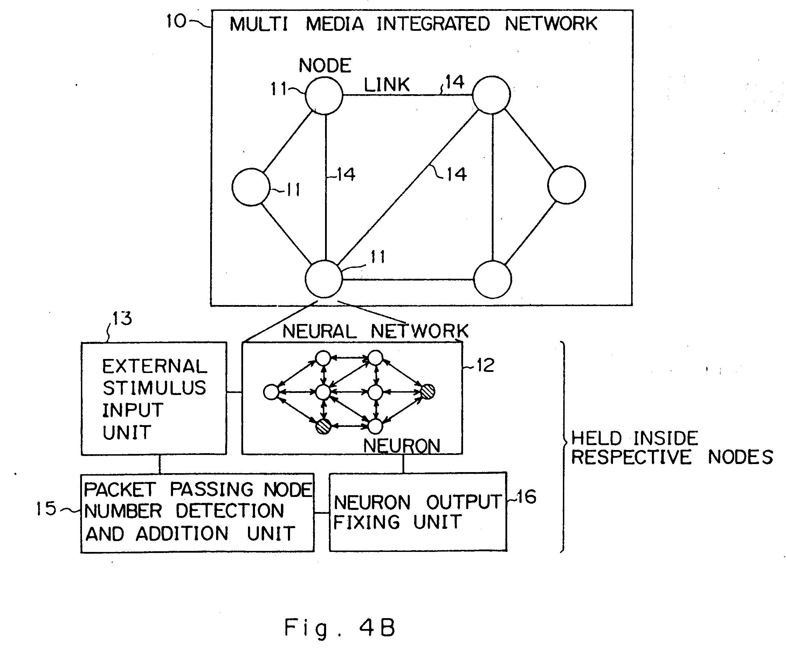

Figure 4B designates the principle block diagram of the second embodiment. The second embodiment is applied to the multi-media integrated network using the datagram method. When Figure 4B is compared with Figure 4A designating the principle of the first invention, Figure 4B is different from Figure 4A in that the packet passing node number detection and addition unit 15, and the neuron output fixing unit 16 are added.

Packet passing node number detection and addition (or insertion) unit 15 detects the number of the nodes to which the packet is transmitted, from the packet input to the self-node, and adds the number of the self-node to the packet, thereon transmitting the packet to the adjacent node. Neuron output fixing unit 16 fixes the output of the neuron corresponding one-to-one to the node through which the input packet is transmitted, to be 0 in neural network 12.

Thereby, the second embodiment excludes the path going through the nodes through which the input packet has been transmitted, thereby performing a routing of the input packet, and thus decreasing a time required for the calculation by neural network 12 and thus avoiding the path in which a ping-pong phenomena or loop phenomena of the packet occurs.

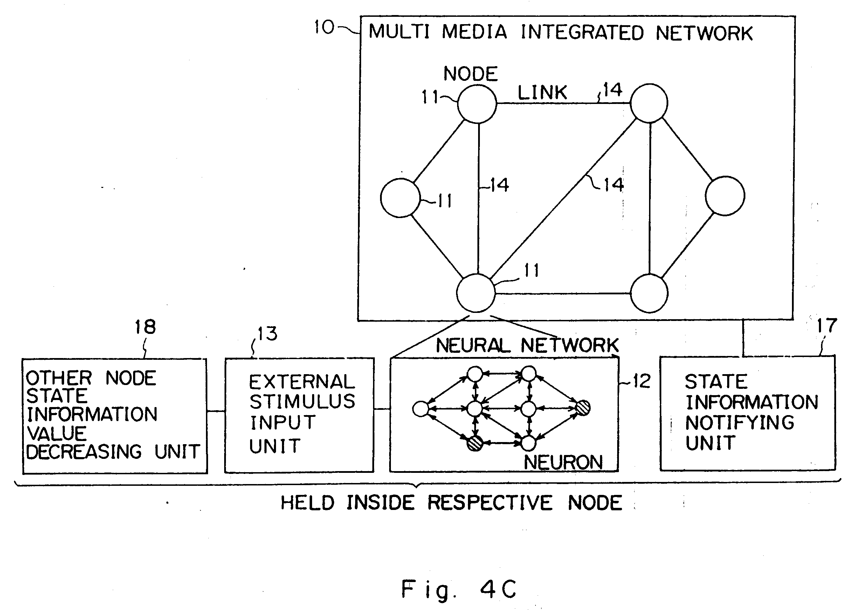

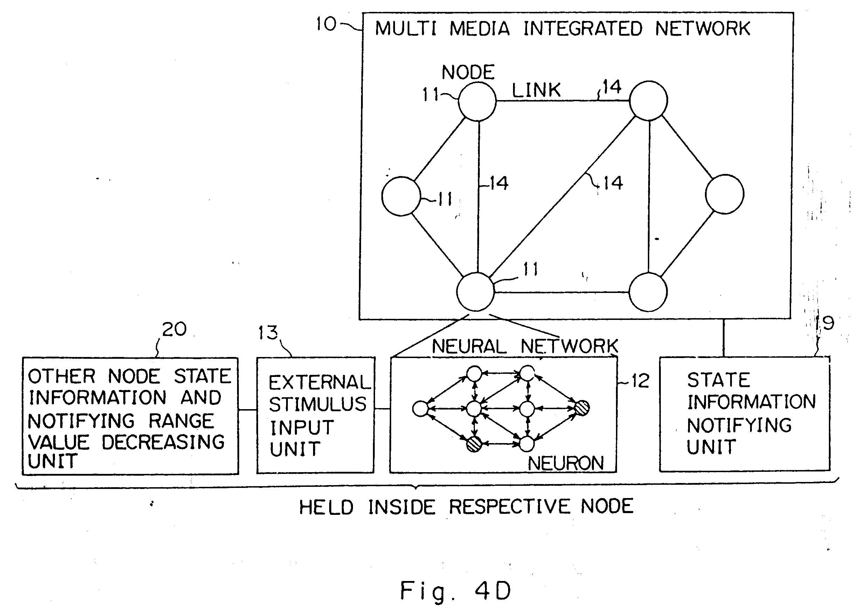

Figure 4C shows a principle block diagram of the third embodiment. In Figure 4C, a state information notifying unit 17 and an other node state information value decreasing unit 18 are added to Figure 4A.

State information notifying unit 17 notifies all the nodes forming integrated network 10 of the information representing the state relating to the self-node out of the present states of multi-media integrating network 10. In the third embodiment, the notified state information comprises the packet loss ratio of respective links and the packet delay time which represent the state of the respective output link of the node. Other node state information value decreasing unit 18 decreases the value of the state information received from state information notifying unit 17 of other node in accordance with the distance from the self-node to the other node and the decreased result is output to external stimulus input unit 13, thereby being used for calculation of the external stimulus.

The third embodiment can obtain an optimum path without being affected by the state of the node which is distant from the routing node on the path, when the output direction of the packet is obtained in the routing node. Namely, with increase of the distance from the routing node, the received state information value is decreased and the influence of the state of the node which is distant from the routing node can be decreased.

Figure 4D shows a principle block diagram of the fourth embodiment. When the Figure 4D is compared with Figure 4C designating the principle of the third embodiment, it will be noted that Figure 4B is different from Figure 4C only in that the other node state information and notifying range value decreasing unit 20 is provided.

However, state information notifying means is different from state information notifying unit 19 in the third invention in that the state relating to the self-node amongst the present states of multi-media integrated network 10, such as a range of notifying the state information within the integrated network 10 in addition to the state of the output links described above, is notified to all the other nodes.

Therefore, the other node state information and notifying range value decreasing unit 20 decreases the value of the state information provided by other nodes and the value of the notifying range in accordance with the distance up to the other node. When the result of decreasing the notifying range is not 0, the result of the decrease is notified to the adjacent node and is output to external stimulus input unit 13 in the self-node. When the result of decreasing the notifying range is o, the decrease result is output to external stimulus input unit 13 without notifying the adjacent node of the decrease result.

Therefore, the fourth embodiment not only decreases the value of the state information in accordance with the distance as in the third embodiment, but also limits the range of notifying the state information, thereby further decreasing the volume of communication used for the state notification.

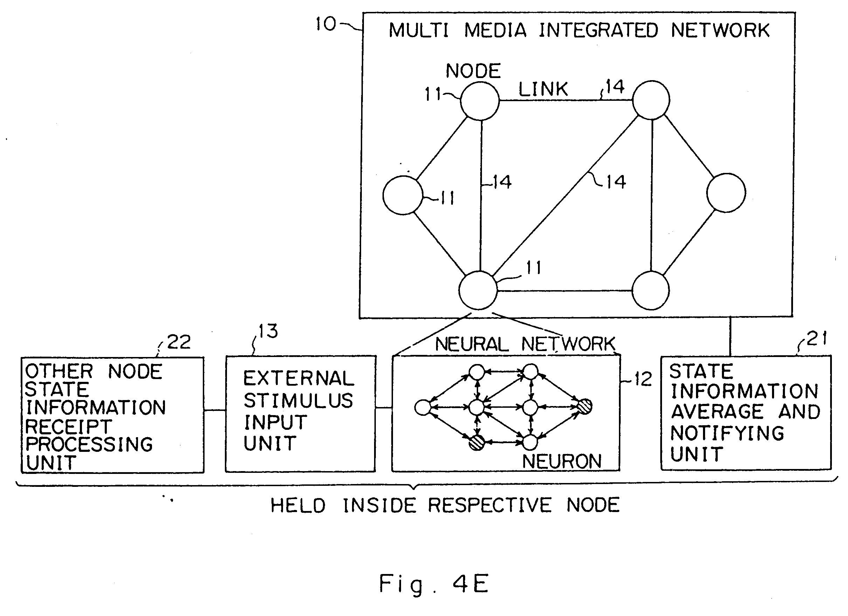

Figure 4E shows a principle block diagram of the fifth embodiment. Figure 4E is different from Figure 4A designating the principle of the first embodiment in that state information average and notifying unit 21, and other node state information receipt processing unit 22 are added.

State information average and notifying unit 21 performs an averaging operation of the values representing the state of respective output link of the self-node out of states of the integrated network 10 in a plurality of kinds of periods and notifies respective nodes forming the integrated network of the scope of the notification of the average result in the integrated network and the average result, the notification scope being valuable in accordance with the period. Other node state information receiving processing unit 22 decreases the value designating the notification range received from other node-state information average and notifying unit 21 by 1. When the decrease result is not o, the received state information average value is output to external stimulus input unit 13 and the result of the decrease of notification range and the state information average value are output to all the adjacent nodes.

When the decrease result of the notifying range is o, the state information average value is output to external stimulus input means 13 without being output to the adjacent node.

Therefore, the fifth embodiment provides a plurality of notification frequencies and notification ranges of the link state information which are notified from respective node to other node. In the routing node, an optimum route can be calculated by using the the instantaneous value which varies in a real-time manner in the state of a near node and using the average value for a long time period in the state of a remote node. Therefore, an increase of a traffic caused by the state notification is prevented and the routing suitable for the network state can be realized.

The principle of the sixth embodiment is the same as that of Figure 4A, as stated above. However, the state of the network and a condition required by the media which are used upon an input of the external stimulus by external stimulus input means 13 are different from the first embodiment. The sixth embodiment is directed to a multi-media integrated network using the virtual call method, and the usable frequency band of respective links, the frequency band being used, allowable utilizing ratio of the link, or a delay of the packet are used for the state of multi-media integrated network 10, and frequency band required by the information input from the terminal is used for a condition required by the media.

The virtual call method uses an interconnected type neural network 12 maintained in the self-node upon setting the call in the source node of the packet, and determines the node corresponding to the node correspondence neuron whose output is stabilized at 1, as the node in the packet output direction, and further determines the link corresponding to the link correspondence neuron whose output is stabilized at 1, as the link in the packet direction. Based on this result, the whole path upto the destination node is provided. The following data packet is transmitted to the destination node through the above provided path.

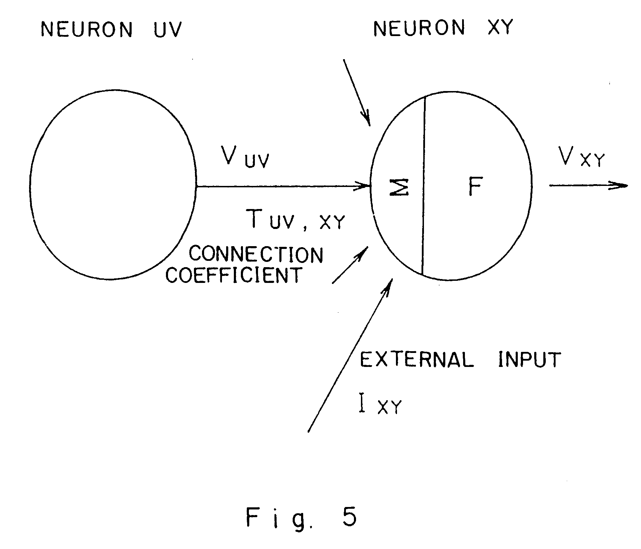

Figure 5 shows a connection relation of two neurons in neural network 12. In Figure 5, a neoron UV and neuron XY are integrated by connection coefficient $T_{uv, xy}$ and the product of the output $V_{uv}$ of neuron UV and the connection coefficient is input to neuron XY. The neuron XY receives the output of other adjacent neurons in neural network 12 and the output of the self-neuron after they are weighted by respective connection coefficients. Further, neuron XY receives external input $I_{xy}$, also. Neuron XY obtains the total sum of these inputs and performs a threshold processing of the result, thereby outputting output $V_{xy}$. The output value is either of 0 or 1.

According to the systems described herein, respective nodes forming the multi-media integrated network maintain the neural network of the same structure and the outputs from neurons are processed within the node, with an object function satisfying the condition required by the media and minimizing the transmission delay of the packet corresponding to the energy function of the neural network on a one-to-one basis, and the energy function is minimized, thereby providing a direction of an optimum output of the packet to be obtained.

The operation of respective node in the neural network is defined in the state equation shown by the following expression (1). The output state becomes stable when the energy function expressed by expression (3) defined by the whole neural network is minimized.

$$\frac{du_{XY}}{dt} = \sum_{X'}^{N} \sum_{Y'}^{N} T_{XY, X'Y'} V_{X'Y'} + I_{XY} \tag{1}$$

$$V_{XY} = f(U_{XY}) \tag{2}$$

$$E = -\frac{1}{2} \sum_{X}^{N} \sum_{Y}^{N} \sum_{X'}^{N} \sum_{Y'}^{N} T_{XY, X'Y'} V_{XY} V_{X'Y'} - \sum_{X}^{N} \sum_{Y}^{N} I_{XY} V_{XY} \tag{3}$$

$U_{xy}$ represents an internal state of neuron XY, $V_{xy}$ an output state of neuron XY, $T_{xy, x'y'}$ the connection coefficients between neuron XY and neuron X'Y', Ixy an external stimulus (external input) to neuron XY, and f(X) a threshold function.

In order to obtain the optimum output direction of the packet from the node in the multi-media integrated network by using the above-described neural network, these outputs $V_i$, $V_{ij}$ of the neurons corresponding to respective node i and link ij are defined as a variable which becomes "1" when the node and link are located on the route of the optimum path. In the neural network in which the output of the neuron corresponding to the source node and destination node is fixed to "1", the route minimizing the transmission delay of the packet between the source and destination nodes is determined by using the above-described energy minimizing principle. An object function for minimizing the transmission delay between the source and destination nodes is provided by the following expression.

$$\Phi = C_1 \sum_{i \ne d} ( V_i - \sum_j V_{ij} )^2$$
$$+ C_2 \sum_{i \ne s} ( V_i - \sum_j V_{ji} )^2$$
$$+ C_3 \sum_i \sum_j V_{ij} ( V_{ij} - A_{ij} )$$
$$+ C_4 \sum_i \sum_j d_{ij} V_{ij} \qquad\qquad (4)$$

where s is a suffix designating a source node and d is a suffix designating a destination node, $d_{ij}$ represents a delay time of a packet when the packet transmitted through the link ij and $A_{ij}$ is a variable which becomes "1" when the link ij is usable and becomes "0" when the link ij is not usable.

The first to third terms in the expression (4) are the restriction conditions required for the existence of only one optimum path. And the fourth term represents the transmission delay between the source and the destination nodes by making the object function correspond one-to-one to the above-described energy function of the neural network, namely, the expression (3). The connection function between respective neurons and an external stimulus to the neuron are obtained.

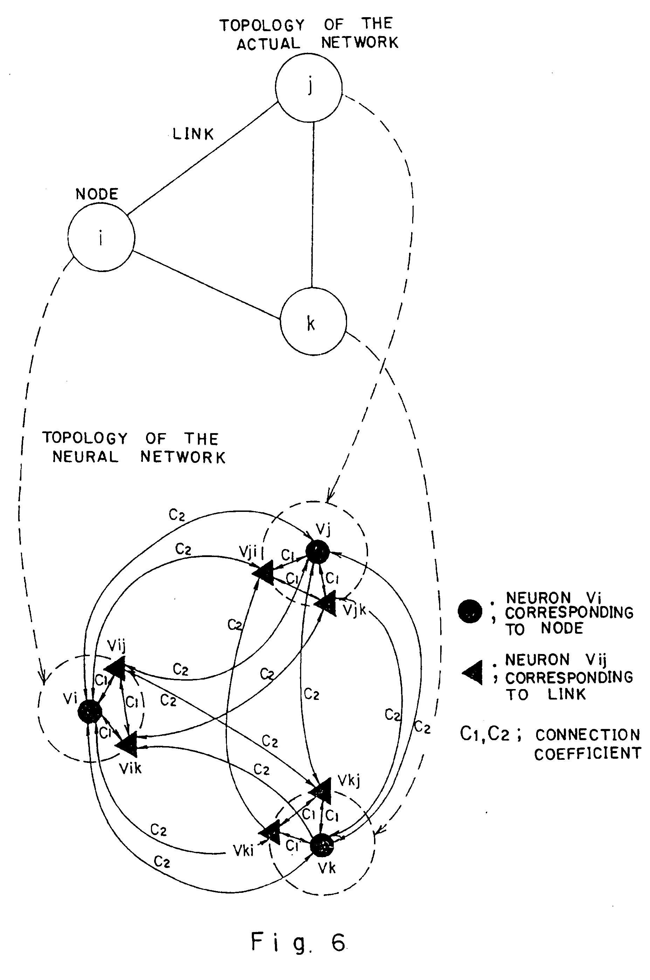

Figure 6 designates an embodiment of the connection relation of the neurons in the neural network, and the embodiment corresponds to the actual network in which the multi-media integration network is composed of three nodes i, j, and k. The same structure of the neural network shown in Figure 6 is provided in the three nodes i, j, and k. The connection coefficients of the neurons in the neural network are made equal to coefficients $C_1$ and $C_2$ within the object function as the object function is made to correspond to the energy function.

The external stimulus to the link correspondence neuron ij is provided by the following expression by referring to a coefficient of variable $V_{ij}$ in the expression (4).

$$C_3 A_{ij} - C_4 d_{ij} \qquad\qquad (5)$$

The external stimulus represents the value input from external stimulus input unit 13 in Figure 4, and particularly variable $A_{ij}$ representing whether the link corresponding to the link correspondence neuron ij is usable can be expressed by a model using a different neuron in accordance with the following state equation.

$$A_{ij} = f[L - PL_{ij}] \qquad\qquad (6)$$

where $f(X)$ represents a threshold function, L represents an allowable packet loss ratio designated by an input terminal of the packet as a condition required by the media, and $PL_{ij}$ represents a packet loss ratio at link ij. When the allowable packet loss ratio (L) is larger than the packet loss ratio ($PL_{ij}$) of the link, the link can receive the packet, and therefore the variable $A_{ij}$ representing whether the link is usable or not becomes "1".

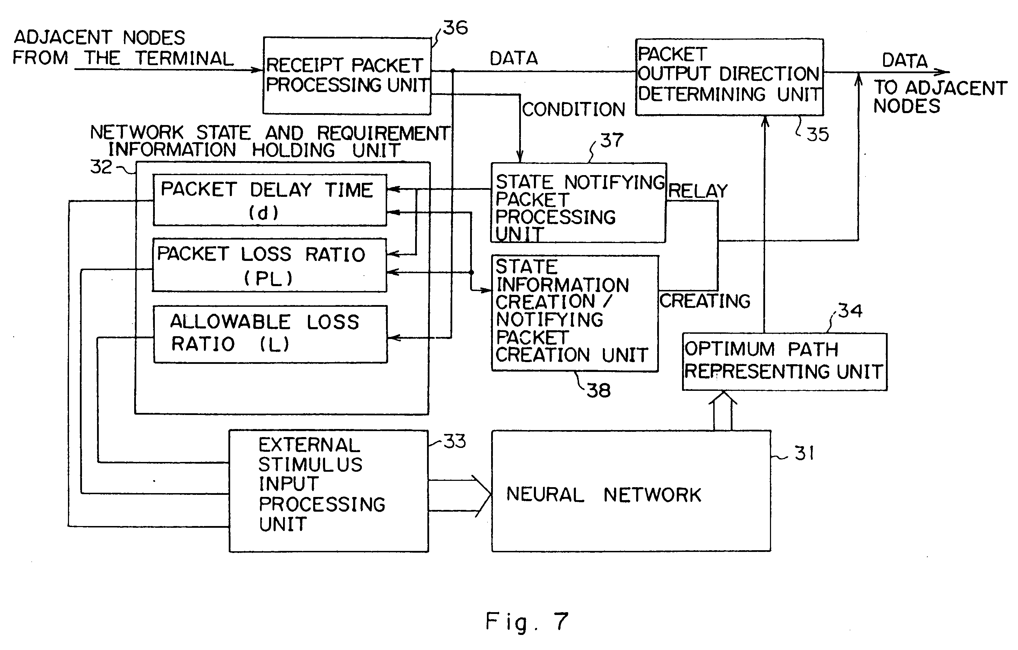

Figure 7 shows the block diagram of a structure of a type of node according to the first embodiment. In Figure 7, the node comprises neural network 31 for determining the output direction of the packet from the self-node, network state and requirement information holding unit 32 for holding the state of the multi-media integrated network and the condition required by the media, external stimulus input processing unit 33 for outputting the external stimulus to the neural network 31 by using the stored result in the network state and requirement information holding unit 32, optimum path representing unit 34 for holding the output result of neural network 31 and representing the optimum path, a packet output direction determining unit 35 for determining the output direction of the packet from the self-node, receipt packet processing unit 36 for receiving the input packet from the terminal connected to the adjacent node or the self-node, state notifying packet processing unit 37 for processing the packet received by received packet processing unit 36 and for outputting the packet delay time of respective links of the other nodes and the packet loss ratio to network state and requirement information holding unit 32 when the packet received by receipt packet processing unit 36 is a state notifying packet, and state information creating and notifying packet creating unit 38 for creating the network state information relating to the self-node, outputting the network state information to network state and requirement information holding unit 32 and for creating the state notifying packet to be sent to the other nodes.

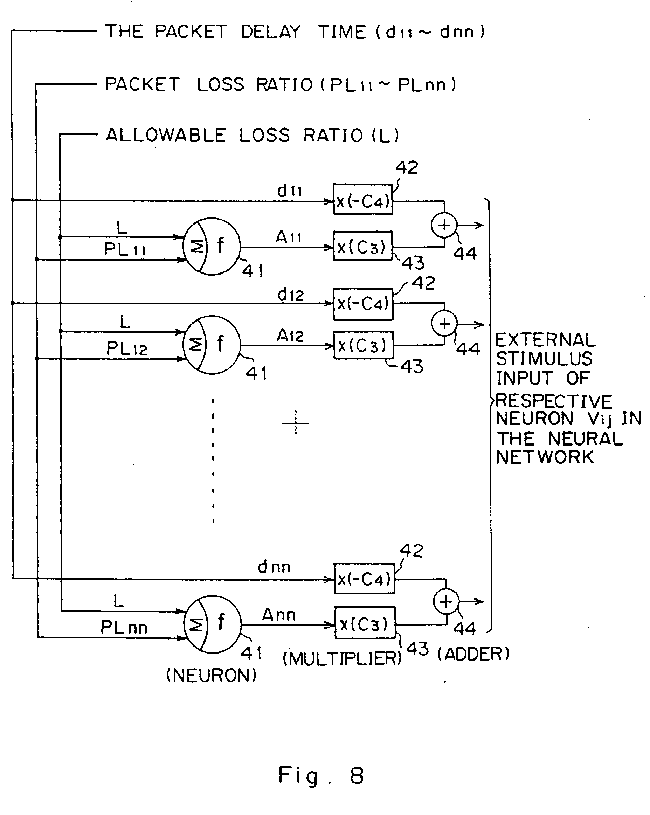

Figure 8 shows a block diagram of a structure of an embodiment of the external stimulus input processing unit according to the first embodiment. In Figure 8, neurons 41 are provided for respective links corresponding to i=1 to n, j=1 to n in the external stimulus input processing unit, and the allowable packet loss ratio L and packet loss ratio $PL_{ij}$ of respective links are input to respective neurons. The value of $A_{ij}$ is obtained by expression (6), and by using the value of $A_{ij}$ and the packet delay time $d_{ij}$, the external stimulus is output to the neurons which correspond to the links in the neural network 31 shown in Figure 7 on one-to-one basis according to expression (5) through coefficient unit 42 and 43 and adder 44.

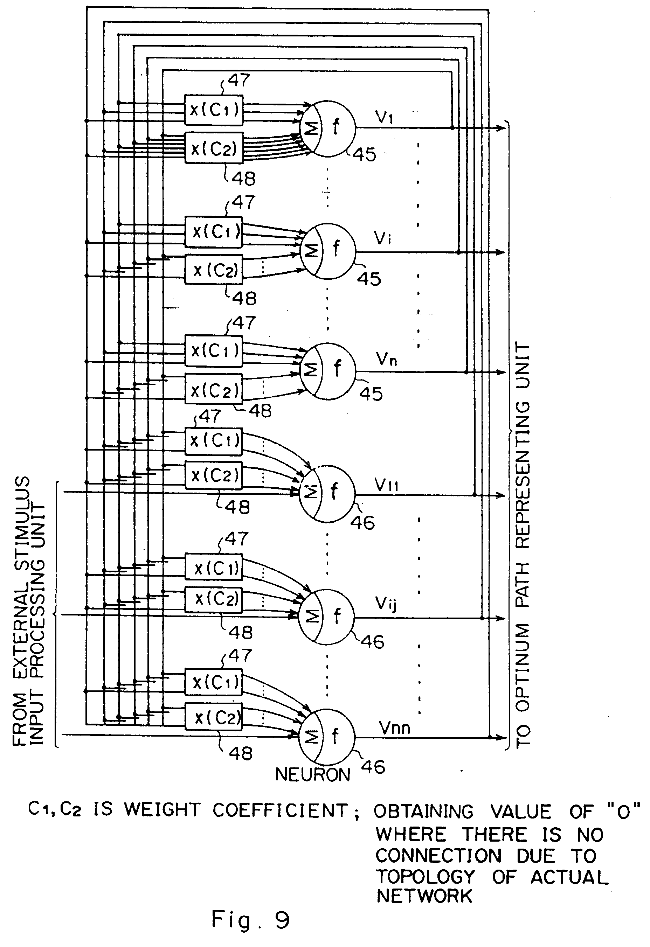

Figure 9 shows a structural view of an embodiment of the neural network according to the first embodiment. In Figure 9, the neural network is provided with neurons 45 corresponding to the node on by-one-by basis and neurons 46 corresponding to the links on one-to-one basis. Respective neurons are connected by coefficient unit 47 and 48 representing connection coefficients $C_1$ and $C_2$ as explained in Figure 6, and the neuron corresponding to respective links receives the external stimulus from external stimulus input processing unit 33.

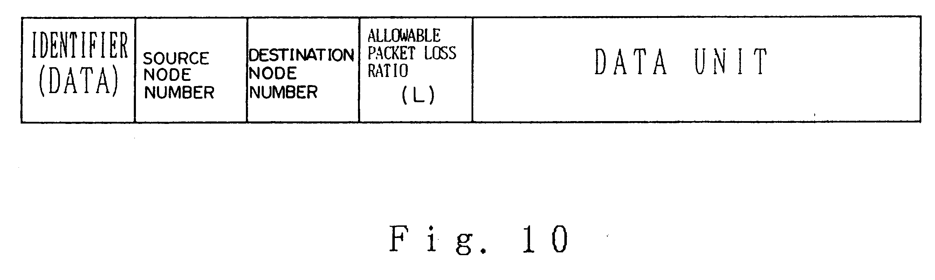

Figure 10 shows an embodiment of the format of the data packet according to the first embodiment. In Figure 10, the data packet stores an identifier indicating that the packet is a data packet, the numbers of the source and destination nodes of the data packet, and the allowable packet loss radio as the condition required by the media included in the packet.

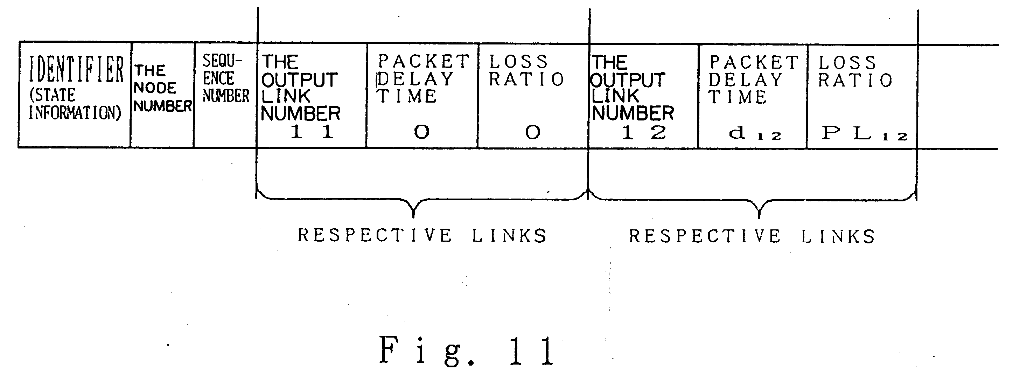

Figure 11 shows an embodiment of a format of the state notifying packet for notifying the other nodes of the state of the respective nodes. In Figure 11, the state notifying packet stores an identifier indicating that the packet comprises the state notifying packet, the number of the node transmitting the packet, a sequence number of the transmitting node for the state notifying packet, and following the sequence number, the number of the links, the packet delay time in the link, and the packet loss ratio with regard to the respective output links of the nodes.

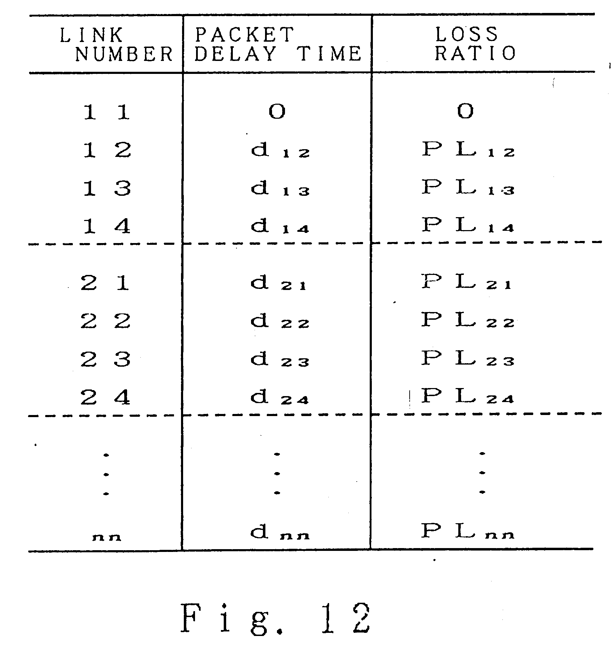

Figure 12 shows an embodiment of a content of the network state holding unit which holds a packet delay time and packet loss ratio, in the network state and requirement information holding unit 32 shown in Figure 7. In Figure 12, the number of output links from self-node 1 is determined as 4, for example, the link numbers are provided as 11 to 14. The number of output links of the other node, such as node 2, are provided as 21 to 24, and the packet delay time and packet loss ratio are stored for respective links. The allowable packet loss ratio is determined as the only one value for the packet of the object of the routing in the network state and requirement information holding unit 32, as explained in Figure 10. The value is held in the buffer not shown.

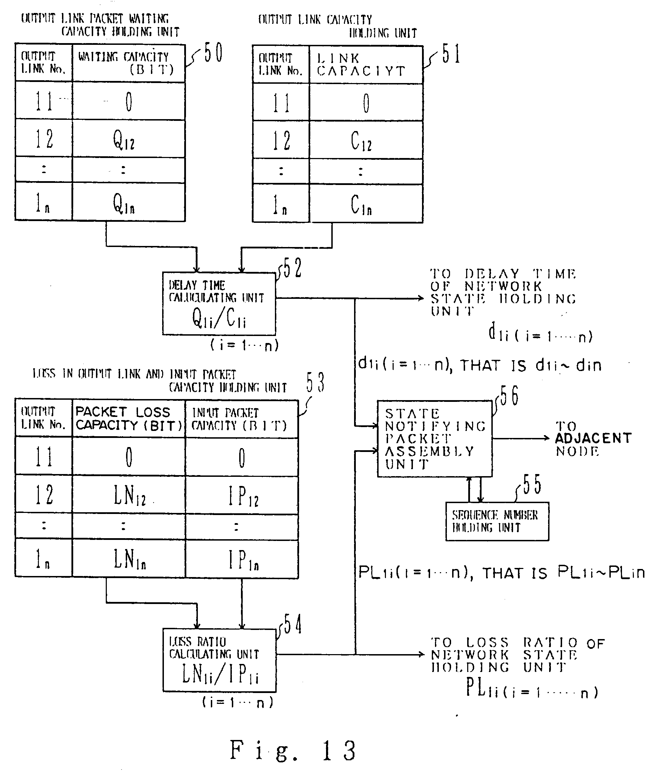

Figure 13 designates a block diagram of a structure of the embodiment of state information creation/notifying packet creation unit 38 in Figure 7. In Figure 13, the state information creation/notifying packet creation unit 38 comprises output link packet waiting capacity holding unit 50 for holding a capacity for waiting the packet in correspondence with the respective output links from the self-node, output link capacity holding unit 51 for holding the capacity of the respective output links from the self-node, delay time calculating unit 52 for computing the delay time of the packet per link by using the content of two holding unit 50 and 51, a loss and input packet capacity holding units 53 for holding the capacity of lost packet and the capacity of input packet in correspondence with respective output links, loss ratio calculating unit 54 for computing the packet loss ratio by using the content of the holding unit 53, sequence number holding unit 55 for holding the sequence number for the state notifying packet, and state notifying packet assembly unit 56 for assembling the state notifying packet to be sent to the other node by using the output of the delay time calculating unit 52 and loss ratio calculating unit 54 and by adding the sequence number outputted from the sequence number holding unit 55 and for outputting the assembled packet to the adjacent node.

The packet delay time is obtained by dividing the packet waiting capacity at the output link by the capacity of the corresponding output link, and the result of the division is input to state notifying packet assembly unit 56 and is also input to the network state and requirement information holding unit 32 shown in Figure 7 as the delay time for the output link of the self-node. Similarly, the packet loss ratio is obtained by dividing the packet loss capacity at respective links by the input packet capacity and the result of the division is input to the state notifying packet assembly unit 56 and the network state and the requirement information holding unit 32.

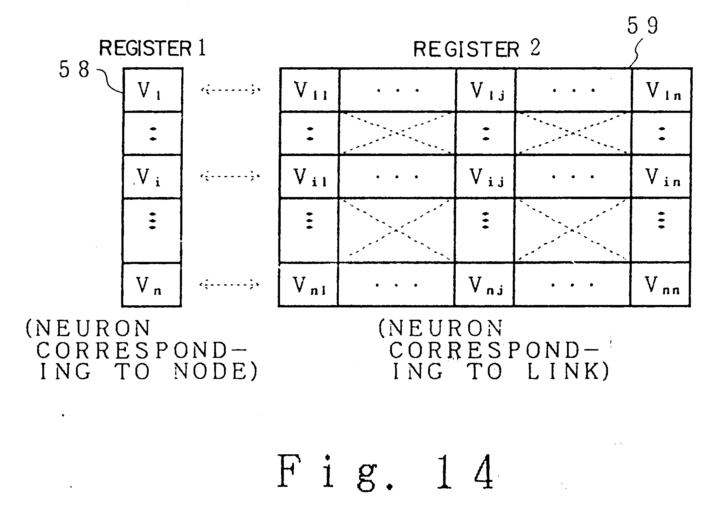

Figure 14 shows a block diagram of the structure of the embodiment of the optimum path representing unit 34 shown in Figure 7. In Figure 14, the optimum path representing unit comprises the first register (Reg 1) 58 storing the output of the neuron corresponding one-to-one to the node in the neural network 31, and the second register (Reg 2) 59 for storing the output of the neuron corresponding one-to-one to the link. In Figure 14, an arrow shown by the dashed line represents the correspondence between the node and the output link from the node.

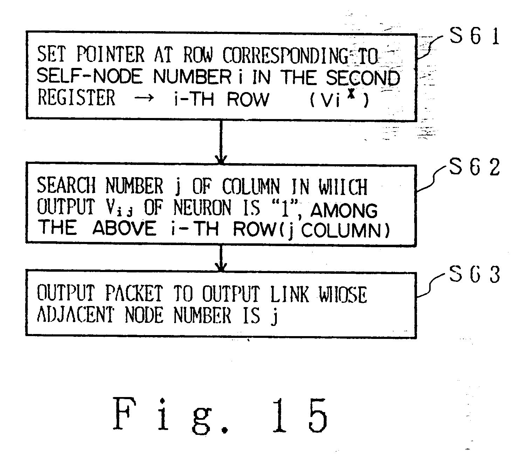

Figure 15 shows a flowchart of an embodiment of the packet output direction determining processing performed by packet output direction determining unit 35 shown in Figure 7. In Figure 15, step S61 sets a pointer at a row corresponding to the number i in the self-node in the second register 59 shown in Figure 14 and step S62 searches the number j of the column in which the output $V_{ij}$ of the neuron is "1" out of the outputs $V_{ij}$ of the neuron corresponding one-to-one to the output link in the row pointed out by step S62, and the step S63 outputs the packet to the output link whose adjacent node number is j.

Next, an example of the second embodiment will be explained. As described above, the second embodiment is applied to the multi-media integrated network using the datagram method. In order to avoid the pingpong phenomena in which the packet is repeatedly transmitted and received between two nodes, and the loop phenomena in which the packet is repeatedly transmitted on the same path, the number of the node through which the packet passes is added to the header of the packet and the output of the neuron corresponding to the node number on one-to-one basis is fixed to "0", thereby excluding the path going through the node through which the packet has passed and thereby decreasing a calculation time for the neural network. As an embodiment, the recording of the node number through which the packet has passed is limited to 5, or the recording is limited to the adjacent node outputting the packet to the self-node, or is limited to the source node of the packet.

The second embodiment is almost identical to the first embodiment in respect of the configuration of the node shown in Figure 7 and the portion different from the first embodiment will be explained.

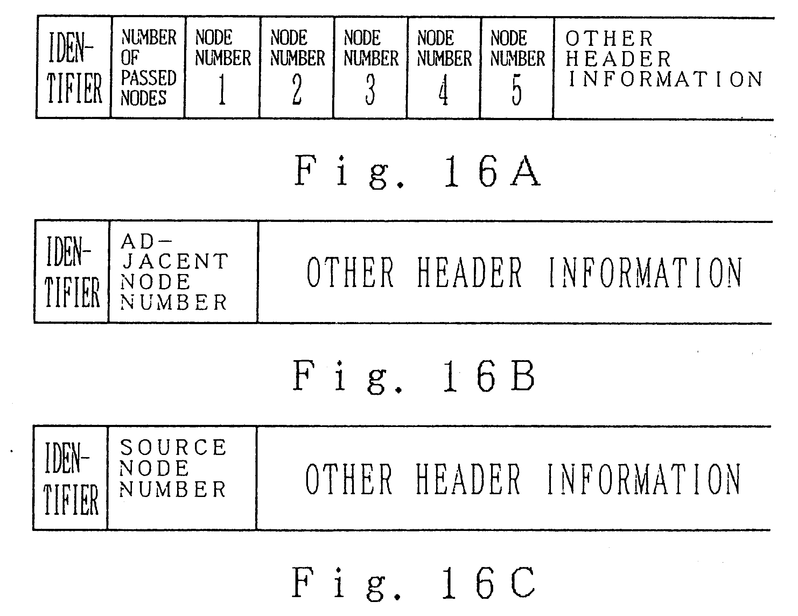

Figure 16 designates an embodiment of the header information within the data packet according to the second embodiment. In Figure 16A, the head (next to the identifier) of the header stores the number (the maximum of 5) of the nodes through which the packet passes and the node number of the nodes through which the packet passes and thereafter the other header information, such as the source/destination node number shown in Figure 10.

In Figure 16B, the header maintains only the number of the self-node in the packet in the output packet node whose number is equivalent to that of the adjacent node. The number is hereafer called an adjacent number. The other header information is stored, following the adjacent node number.

In Figure 16C, the head of the header holds only the source node number of the packet and the remaining header stores the other header information.

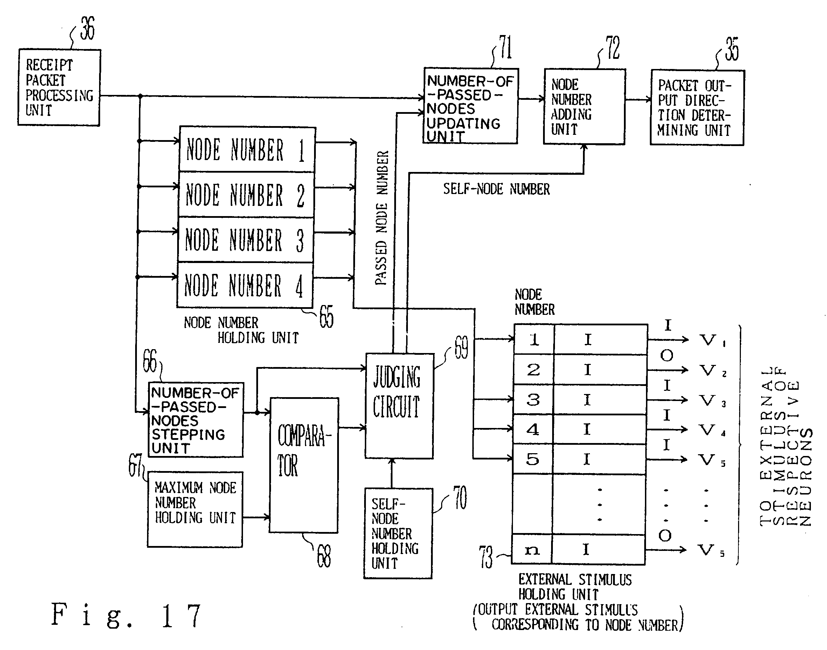

Figure 17 shows a block diagram of the structure of the first embodiment of the node number detecting and neuron output fixing unit according to the second embodiment. The components of the node number detecting and neuron output fixing unit shown in Figure 17 is provided between receiving packet processing unit 36 and packet output direction determining unit 35 in the node shown in Figure 7.

In Figure 17, the node number detecting and neuron output fixing unit comprises node number holding unit 65 for holding the node number of the passed node maintained in the received packet, the passed node number setting unit 66 for adding "1" to the number of the passed nodes maintained in the packet, the maximum node number holding unit 67 for holding the maximum node number for example, "5" in this embodiment in the packet, comparator 68 for comparing the content of the passed node number setting unit 66 and the maximum node number holding unit 67, deciding circuit 69 for deciding the output result of the comparator 68, a self-node number holding unit 70 for outputting the self-node number to the deciding circuit 69, a passed node number updating unit 71 for updating the passed node number stored in the packet based on the output of the deciding circuit 69, a node number adding unit 72 for adding the number of the self-node to the packet based on the output from the deciding circuit 69, and an external stimulus holding unit 73 for inputting the external stimulus for making the output of the neuron 0 based on the output of the node number holding unit 65, the neuron corresponding to the passed node number.

The external stimulus output to the neuron corresponding to the respective node on one-to-one basis from external stimulus holding unit 73 is made "0" as for the node through which the packet does not pass. The external stimulus is made to be the negative number "I" whose absolute value is large and which makes the output of the neuron corresponding to the node through which the packet passes, to be "0", as for the node through which the packet has pass.

In Figure 17, the comparator 68 calculates the difference between the result of the addition of the number passed nodes and "1", and the maximum node number such as "5" in this embodiment and when the difference is positive, not including "0", "1" is output to the deciding circuit 69 and when the difference is negative, including "0", "0" is output to the deciding circuit 69.

When the output from comparator 68 is "1", the number of passed nodes held in the packet becomes the maximum value such as "5" in this embodiment, it is not necessary to update the number of the passed nodes. Therefore, the deciding circuit 69 does not output the result of the addition of the number of the passed nodes input from the number-of-passed-nodes stepping unit 66 and "1" to the number-of-passed-nodes updating unit 71, and the self-node number from self-node number holding unit 70 is output to the node number adding unit 72, thereby performing the addition or insertion of the self-node number.

In this case, the number-of-passed-nodes updating unit 71 shifts five node numbers shown in Figure 16A to the left one-by-one and provides an empty region on the right most side. Node number adding unit 72 sets the self-node number in the empty region and the packet is input to packet output direction determining unit 35.

On the other hand, when the output from comparator 68 is "0", the region storing the node number includes an empty region and the number of passed nodes plus "1" is output from the deciding circuit 69 to the number-of-passed-nodes updating unit 71 in order to update the number of passed nodes, thereby updating the number of passed nodes in the packet. The stored node number is not shifted and the packet is output to the node number adding unit 72, thereby adding the self-node number at a position for the value of the number of updated passed nodes.

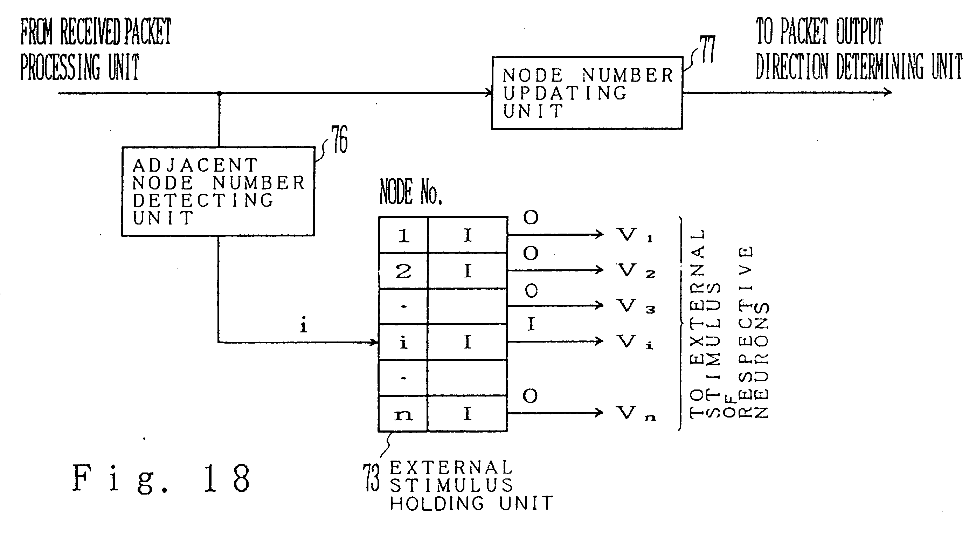

Figure 18 shows a block diagram of a structure of the second embodiment of the node number detecting and neuron output fixing unit. In Figure 18, as is similar to the first embodiment shown in Figure 17, the second embodiment comprises an external stimulus holding unit 73 for outputting the external stimulus to the neuron which corresponds to the node on one-to-one basis, adjacent node number detecting unit 76 for detecting the adjacent node number held in the input packet from the received packet processing unit 36 and the node number updating unit 77 for updating the passed node number stored in the packet.

The adjacent node number detecting unit 76 detects the adjacent node number of the adjacent node outputting the packet to the self-node and in accordance with the result of the detection by adjacent node number detecting unit 76, the negative value "I" with the large absolute value is output to the neuron corresponding to the adjacent node, thereby fixing the output of the neuron to be "0".

After the node number updating unit 77 stores the self-node number in the input packet as the adjacent node number, the packet is output to the adjacent node through the packet output direction determining unit 35.

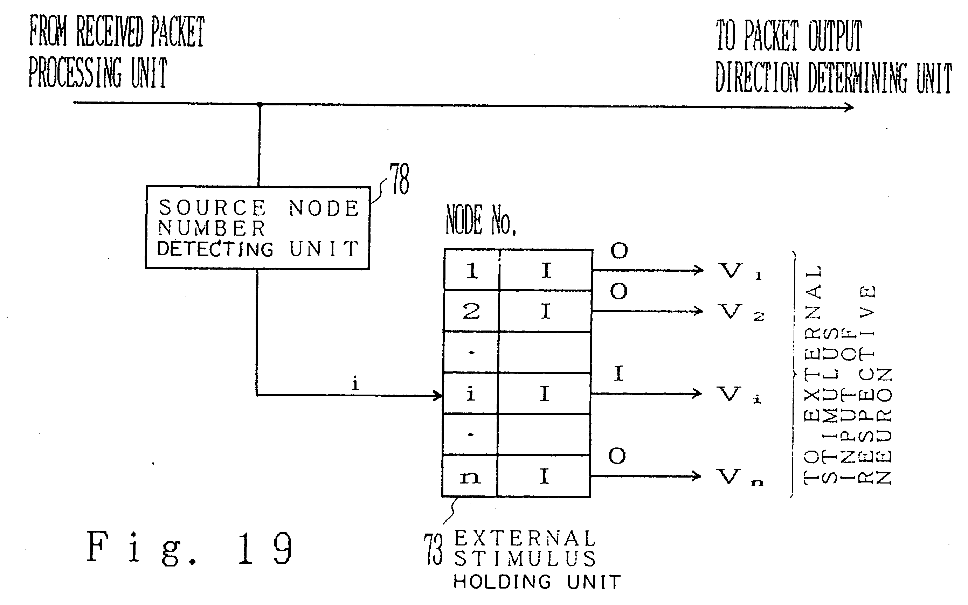

Figure 19 shows a block diagram of a structure of the third embodiment of the node number detecting and neuron output fixing unit. Figure 19 shows an embodiment where only the source node number is held in the packet, as shown in Figure 16C. In Figure 19, the source node number detecting unit 78 detects the source node number from the input packet outputted from the received packet processing unit and external stimulus holding unit 73 outputs the external stimulus I fixing the output of the neuron to be 0 to the neuron which corresponds to the detected node on one-to-one basis.

Next, an example of the third embodiment whose principle is shown in Figure 4C is explained. When the output direction of the packet is determined in the routing node, the third embodiment uses a method of decreasing the value of state information notified by the other node in accordance with the distance from the other node to the self-node in order to obtain an optimum path without being affected by the state of the remote node.

The third embodiment is similar to the first embodiment which is explained by referring to Figures 7 to 15, including the structure of the node. Only the path which is different from the first embodiment of the invention is explained.

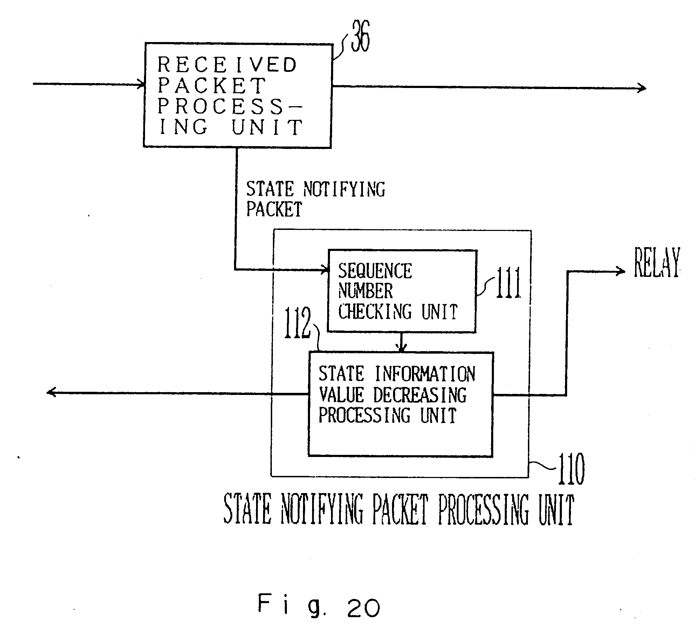

Figure 20 shows a block diagram of a structure of state notifying packet processing unit in the third embodiment, namely, block 37 in Figure 7. In Figure 20, the state notifying packet processing unit 110 is provided with the sequence number checking unit 111 for checking the sequence number that was added to the received packet based on the received packet output from the received packet processing unit 36 in Figure 7 and the state information value decreasing processing unit 112 for decreasing the value of the state information of the other node stored in the received state notifying packet in accordance with the distance from the self-node to the other node.

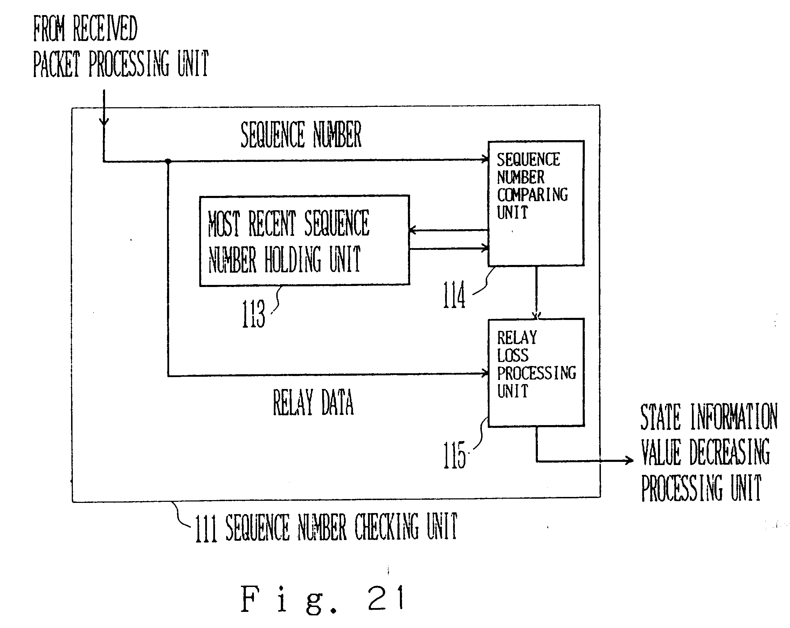

Figure 21 shows a block diagram of a structure of the sequence number checking unit 111. In Figure 21, the sequence number checking unit comprises the most recent sequence number holding unit 113 for holding the number of the packet which is most recently received, sequence number comparing unit 114 for comparing the sequence number of the packet input from the received packet processing unit with the number held in the most recent sequence number holding unit 113, a relay loss processing unit 115 for discarding the received packet when the sequence number of the received packet is less than the most recently received sequence number held in the holding unit 113 and for relaying the received packet to the state information value decreasing processing unit 112 when the sequence number of the received packet is larger than the most recently received sequence number, as a result of the comparison in the sequence number comparing unit 114.

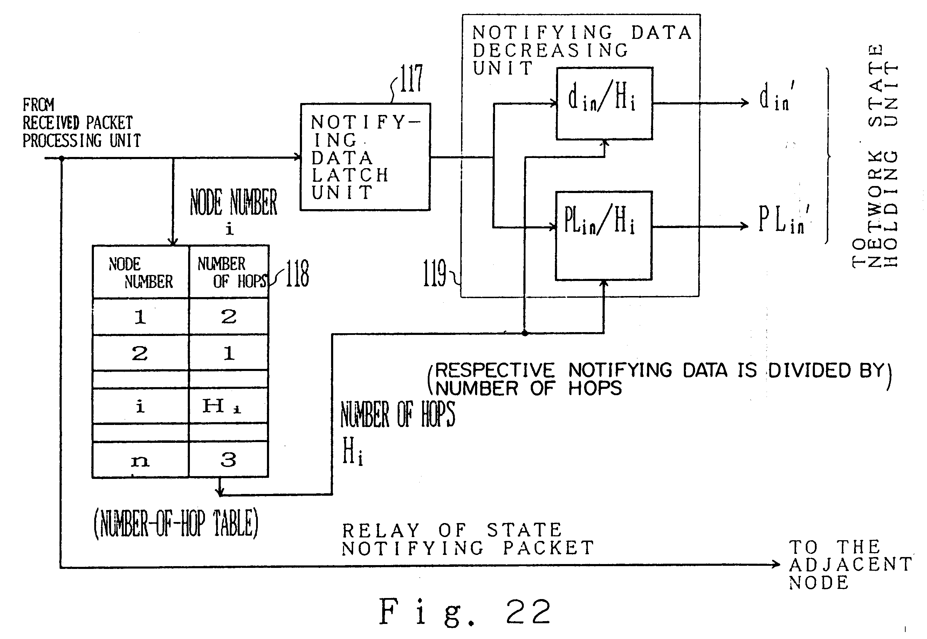

Figure 22 shows a block diagram of a structure of the state information value decreasing processing unit according to the third embodiment. In Figure 22, the state information value-decreasing processing unit 112 comprises a notifying data latch unit 117 for latching the notifying data based on the state notifying packet transmitted from the sequence number checking unit 111, the number-of-hop table 118 for holding the number of hops from the self-node to the other node in the network and notifying data decreasing unit 119 for decreasing the notifying data latched in the notifying data latch unit 117.

In Figure 22, when the state notifying packet is received from the received packet processing unit through the sequence number checking unit 111, the packet is relayed to the adjacent node and the node number having transmitted the packet is obtained from the packet. The number of hops from the self-node to the particular node is detected from the number-of-hop table and the state information stored in the packet, i.e., the notifying data is latched in notifying data latch unit 117.

The notifying data latched in the notifying data latch unit 117, such as the packet delay time d in respective output links in the packet transmitting node and the packet loss ratio PL, is divided by the number of hops Hi stored in the number-of-hope table 118 by using the notifying data decreasing unit 119. The result of the division is output to the network state holding unit within the node, namely, block 32 of Figure 7.

Sequentially, an example of the fourth embodiment whose principle is shown in Figure 4D is explained. In a manner similar to the third embodiment, the value of the state information from the other node is decreased in accordance with the distance up to the node and simultaneously the notifying range in which the packet is to be notified is held in the state notifying packet in the fourth embodiment. The value of the notifying range is decreased in accordance with the distance, thereby stopping the relay of the state notifying packet when the notifying range becomes "0". As in the fourth embodiment, only the part which is different from the first and the third embodiments will be explained.

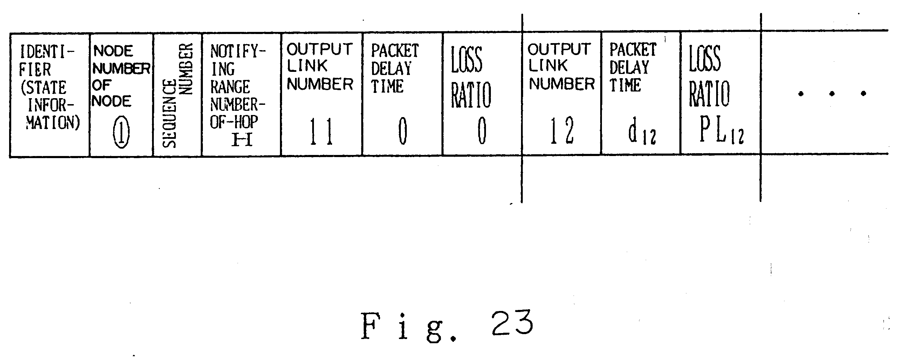

Figure 23 shows a format of an embodiment of the state notifying packet according to the fourth embodiment. The format shown in Figure 23 is different from Figure 11 relating to the first invention only in that the number-of-hop H designating the notifying range is stored next to and following the sequence number.

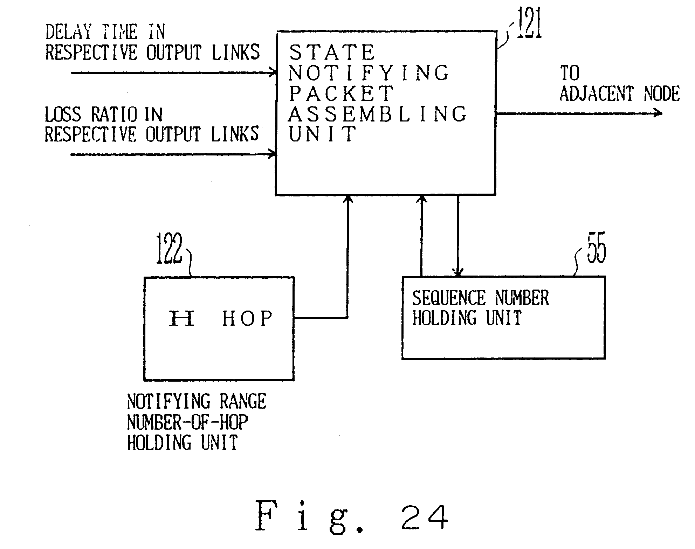

Figure 24 shows a block diagram of a structure of the state information creation/notifying packet creation unit for notifying the state information to other nodes, the state notifying packet assembling unit in block 38 of Figure 7, namely, block 56 of Figure 13. In Figure 24, the state notifying packet assembling unit 121 is connected to the sequence number holding unit 55 as in Figure 13, and is also connected to the notifying-range the number-of-hop holding unit 122. The state notifying packet assembling unit 121 uses the delay time in respective output links and the packet loss ratio, which are input therein, and forms the state notifying packet storing the value H of the notifying range held in the notifying-range number-of-hop holding unit, thereby outputting the packet to the adjacent node.

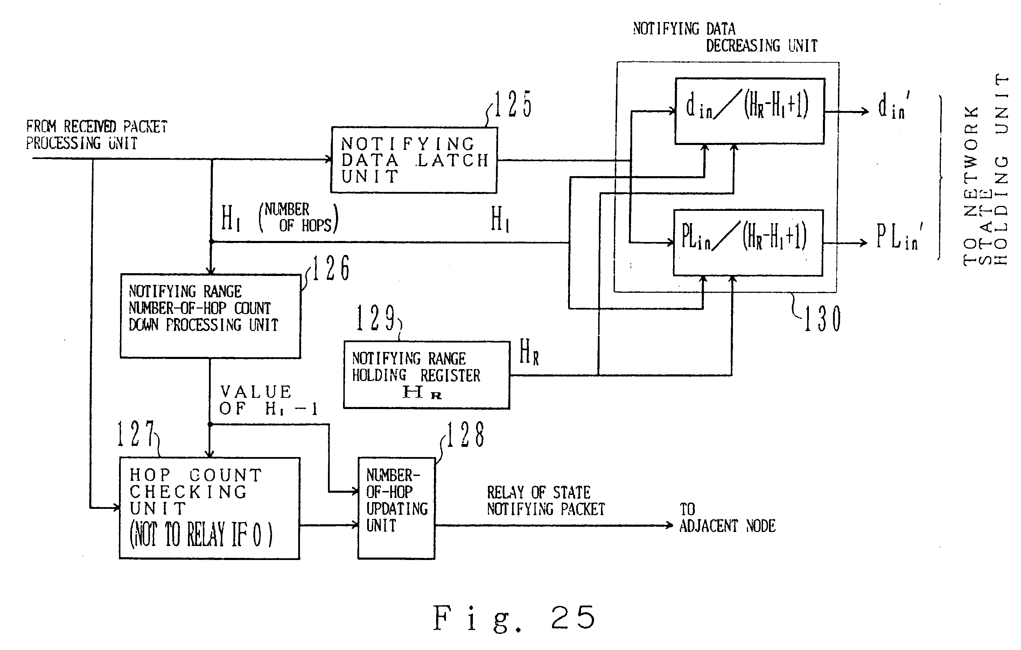

Figure 25 shows a block diagram of a detailed structure of the state information decreasing processing unit according to the fourth embodiment. The state information decreasing processing unit is provided to the state notifying packet processing unit as in Figure 20.

In Figure 25, the state information value decreasing processing unit comprises a notifying data latch unit 125 for latching the notifying data transmitted from the other node based on the received packet input from the received packet processing unit through the sequence number checking unit, notifying-range the number-of-hop count down processing unit 126 for decreasing the number of hops $H_1$ and for designating the scope of the notification stored in the received state notifying packet by 1; a hop count checking unit 127 for checking the output of the notifying-range number-of-hop count down processing unit 126, the number-of-hop updating unit 128 which updates the number of hops in the state notifying packet input through the hop count checking unit 127 if the count down value $H_1$-1 for the notifying range is not 0 as the result of the check by the hop count checking unit 127, and then outputting the state notifying packet to the other node, the notifying range holding register 129 for holding the value $H_R$ of the notifying range of state notifying packet in the network which is fixed to a constant value by the state of the network for a predetermined time period, and notifying data decreasing unit 130 for decreasing the value of the state information latched in the notifying data latch unit 125.

Notifying data decreasing unit 130 divides the state information of the other node latched in the notifying data latch unit 125, namely, the packet delay time d and packet loss ratio PL by the following value.

$$H_R - H_1 + 1$$

The result is then output to the network state and requirement condition holding unit. In the above value, $H_R$ designates the number of hops representing the notifying range held in the notifying range holding register 129 and $H_1$ is the notifying-range number-of-hops stored in the received state notifying packet. Where the node notifying the state notifying packet in the network is limited only to the adjacent node, $H_R$ held in the notifying range holding register 129 becomes 1. In the state notifying packet transmitting node, the packet is output with the notifying-range the number-of-hops of 1 which is stored in the packet and thus the number of hops $H_1$ stored in the received packet becomes 1. As a result notifying data decreasing unit 130 outputs the value of the state information received from the adjacent node to the network state and requirement condition holding unit as it is. This is the same as in Figure 22 relating to the third embodiment in that the notifying data decreasing unit 119 divides the notifying data from the adjacent node by the number of hops "1" up to the adjacent node, namely, it outputs the value of the state information from the other node without being changed. For example, "5" is held in the notifying range holding register as the value of $H_R$. Where the node for transmitting the state notifying packet transmits the packet by determining the notifying-range number-of-hops H as "5", in the second node from the transmitting node the value $H_1$ detected from the received packet becomes "4" and, as a result, the value of the received state information is divided by 2 and is used for-routing the packet.

Next, an embodiment of the fifth embodiment whose principle is shown in Figure 4E is explained. As in the fourth embodiment, the present embodiment designates the notifying range of the state information in the state information notifying packet and transmits the packet. The node receiving the packet decreases the value of notifying range and relays the packet to the adjacent node but does riot decrease the value of the state information. A plurality of notifying ranges are provided and the frequency of the notification in the packet changes in accordance with the plurality of notifying ranges. Therefore, the average state value obtained for a long period of time is notified to the node apart from the self-node and the instantaneous state value changing at real time is notified to the near node, thereby preventing an increase in the traffics caused by the state notification, thereby performing an adaptive routing of the packet suitable for the network state.

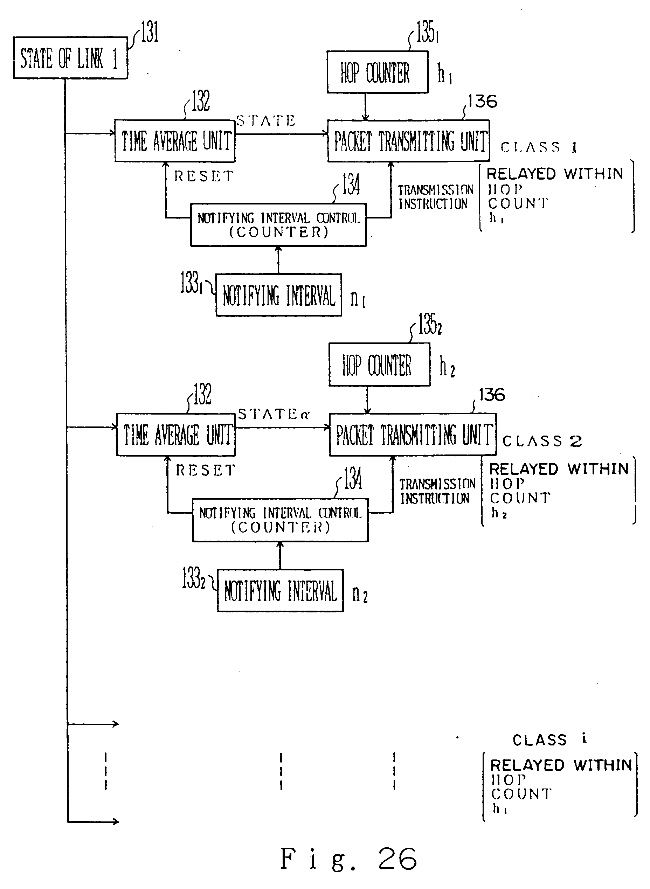

Figure 26 shows an explanatory view designating a concept of the fifth embodiment. In the fifth embodiment, the values of the information designating the state of a particular link such as l is subjected to an average operation with regard to a plurality of time intervals. The average value whose time interval is short is notified to the node near the self-node and the average whose time interval is long is notified to the node apart from the self-node. The time interval of the state notification and the notifying range have several classifications in this embodiment. An average of the state of the links is obtained with regard to respective classes 1, 2.... and the time interval for notifying it and the notifying range are divided into a several stages.

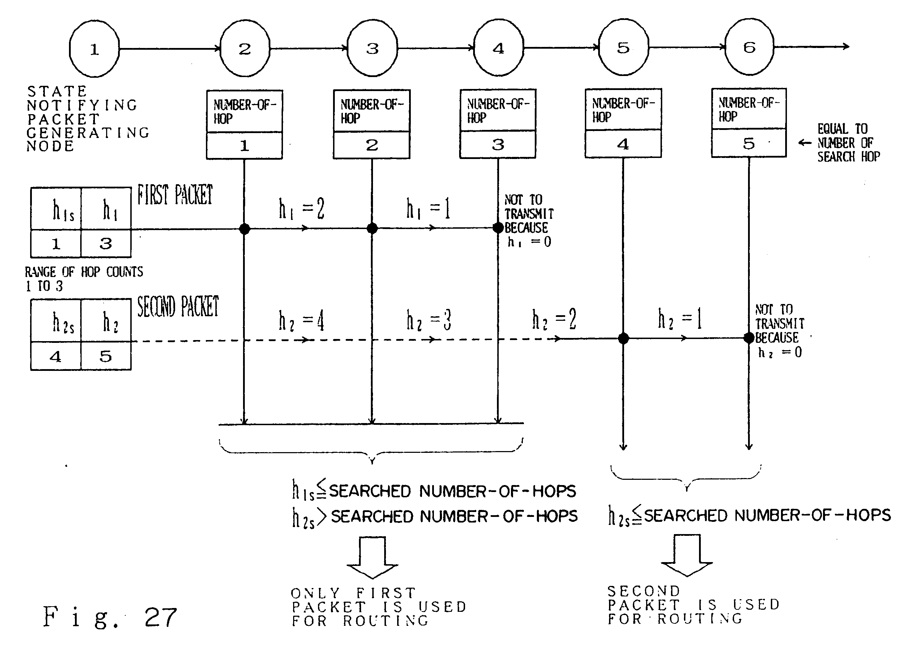

In Figure 26, with regard to respective classes 1, 2... time average unit 132 is provided for the state 131 of the link l, and notifying interval control 134 is performed in accordance with the notifying intervals $133_1$, $133_2$... When it

passes the notifying time interval, the state value as an output from time average unit 132 is transmitted to the range designated by hop counters $135_1$, and $135_2$ by packet transmitting unit 136 in accordance with the transmission instruction. The hop counts $h_1$, $h_2$...$h_i$ for the classes 1, 2... i designate the range of the relay of the packet and the state information stored in the packet is not always used in all the relay nodes. This will be explained in more detail by referring to Figure 27.

Figure 27 designates an explanatory view of the relay range of the state notifying packet and the use range for the routing according to the fifth embodiment. As is described later, the state notifying packet stores the number of hops $h_{1s}$, $h_{2s}$... from the node in which the state information stored in the packet is used during the routing in addition to the relay range $h_1$, $h_2$... of the packet with regard to respective classes 1, 2... In Figure 27, the first packet in the state notifying packet stores 3 as the relay range $h_1$ and 1 as the number of hops $h_{1s}$. The state notifying packet is relayed by decreasing the relay range $h_1$ by 1 every time the state notifying packet reaches the adjacent node. The state notifying packet is used for the routing in the adjacent node 2, the second node 3, and the third node 4 which are viewed from the packet creating node 1. In contrast, the second packet of the state notifying packet stores 5 as the relay range $h_2$ and 4 as the number of hops $h_{2s}$. The state notifying packet is relayed by decreasing the relay range $h_2$ by 1 from the packet creating node to node 6 whose number of hops is 5. As the number of hops $h_{2s}$ is 4, the second packet is only relayed from node 2 to node 4 and is not used for the routing. It is used for routing in nodes 5 and 6.

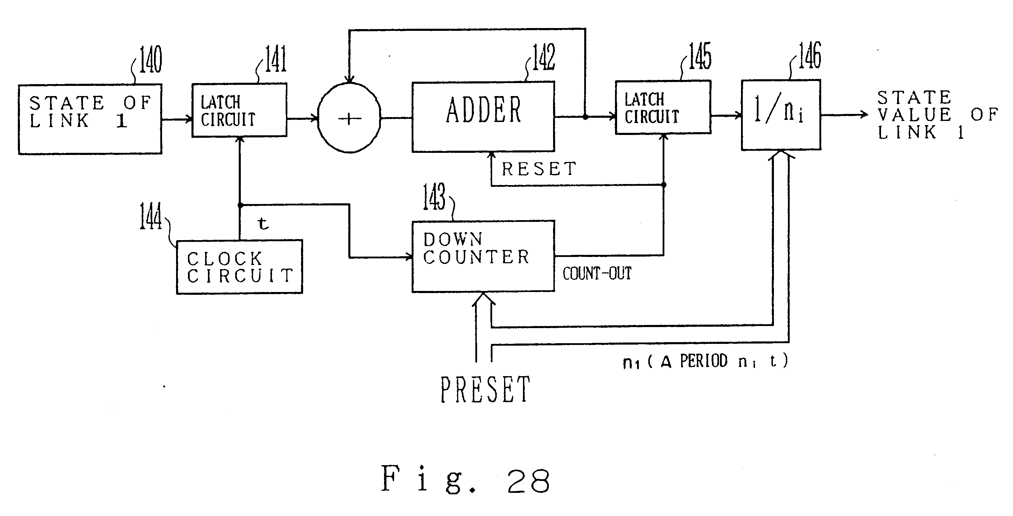

Figure 28 shows a block diagram of a structure of an embodiment of a state calculating circuit for the link l in class i in which the time average of the state of the link L is obtained in Figure 26. In Figure 28, the state calculating circuit comprises a latch circuit 141 for latching state 140 of link l, an adder 142 for adding the output from the latch circuit 141 at every time period t, a down counter 143 for designating the completion of the addition period, a clock circuit 144 for supplying a clock with a time interval t to the latch circuit 141 and the down counter 143, a latch circuit 145 for latching the output of the adder 142 when the down counter 143 performs a count-out operation, and a dividing circuit 146 for dividing the output of the latch circuit 145 by the number $n_i$ of the notifying interval clocks. The number of clock $n_i$ corresponding to the interval of the notification of the time average and the state value is preset in down counter 143 and dividing circuit 146, thereby providing the notifying time interval as $n_i$ x t. The state calculating circuit is provided so that the number of the state calculating circuit becomes equal to (the number of output links from the self-node) x (the kinds of the values of the network state) with regard to respective classes. Namely, if the network state value comprises two kinds of value, namely, the packet delay time and the packet loss ratio in the respective output links from the self-node and if the number of the output links from the self-node is 3, six state calculating circuits are provided for respective classes.

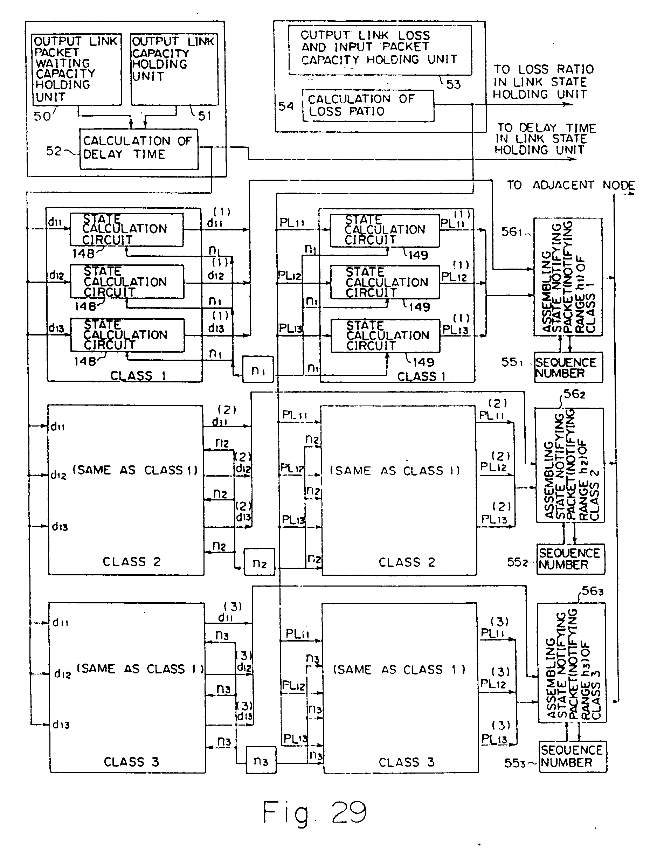

Figure 29 shows a block diagram of a detailed structure of the state information creation/notifying packet creation unit, namely, the block 38 shown in Figure 7 within the node. Figure 29 is different from Figure 13 in that the sequence number holding units $55_1$, $55_2$, $55_3$ and the state notifying packet assembling units $56_1$, $56_2$, and $56_3$ are respectively provided for the classes, and that the state calculating circuit for calculating the state information of respective links are added. In Figure 29, the number of output links from the self-node is 3, the case of classes 1 to 3 are designated, a further three state calculation circuits 148 for calculating the average value of the packet delay time d of respective links, and three state calculating circuits 149 for calculating the average value of the packet loss ratio PL are provided for respective classes.

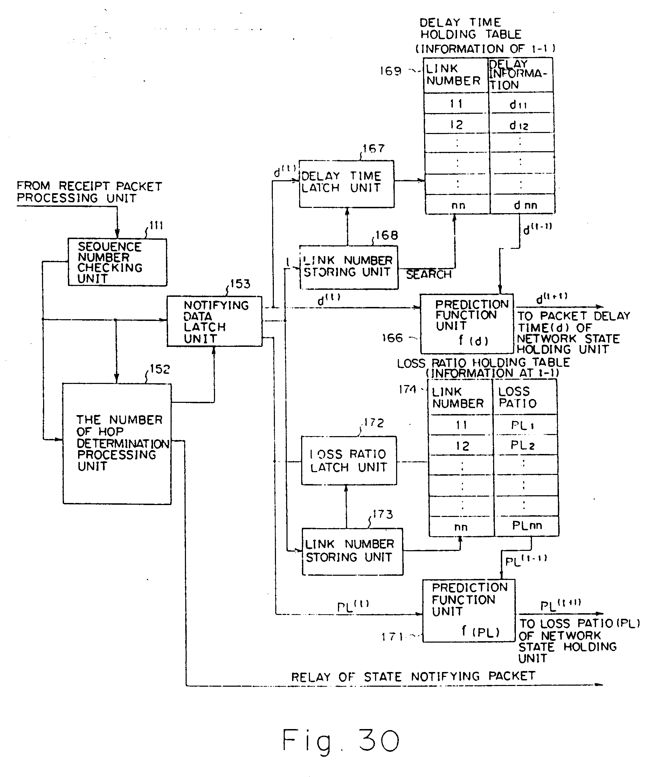

Figure 30 shows a block diagram of a detailed structure of the state notifying packet processing unit, namely, the block 37 of Figure 7 according to the fifth embodiment. In Figure 30, as in Figure 20 relating to the third embodiment, the state notifying packet from the received packet processing unit is subjected to the packet processing after the sequence number checking unit 111 checks the sequence number. In processing the packet, first the number-of-hop judgment processing unit 152 performs the judgment processing, described later. When the state information stored in the received packet is used for the routing in the self-node, the state information is stored in the notifying data latch unit 153, and, when the notifying-range thou number-of-hops is not 0, the state notifying packet is relayed. Where the state information is not used for the routing in the self-node as a result of the judgment by the number-of-hop judgment processing unit 152, the state notifying packet is only relayed if necessary. The process following the output of notifying data latch unit 153 will be explained later.

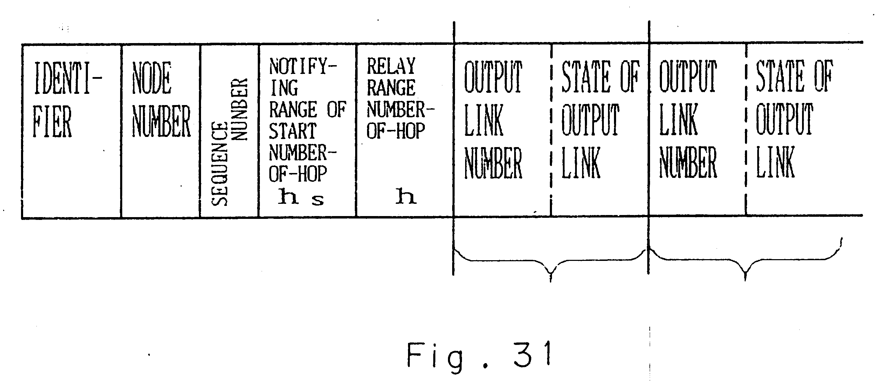

Figure 31 shows a format of an embodiment of the state notifying packet according to the fifth embodiment. Figure 31 is different from Figure 23 relating to the fourth embodiment in that the number of hops $h_s$ from the node using the state information upon performing the routing is added to Figure 23. This means no use of the state information from the packet creating node up to the number of hops$_{hs-1}$.

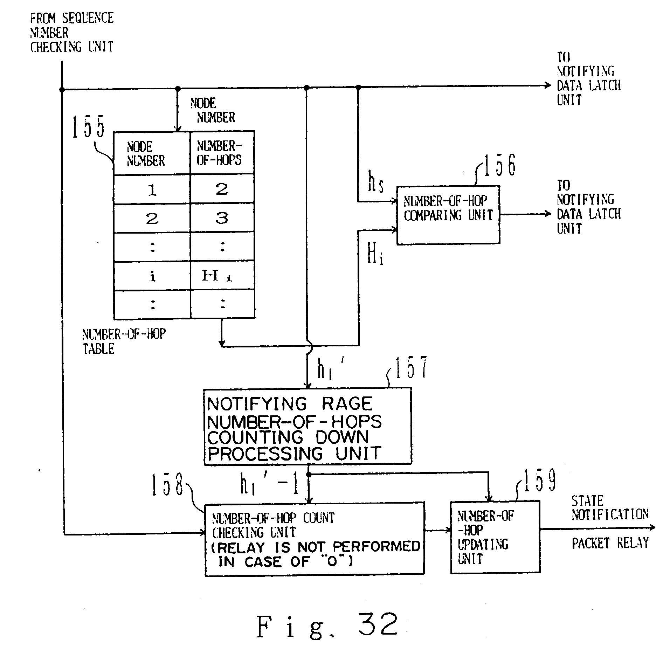

Figure 32 represents a block diagram of a detailed structure of the number-of-hop judgment processing unit 152 in Figure 30. In Figure 32, the number-of-hop judgment processing unit comprises the number-of-hop table 155 for holding the number of hops from the self-node to the respective nodes in the network; the number-of-hop comparing unit 156 for comparing the number of hops $h_s$ from the self-node to the state information using node stored in the received packet with the searched number of hops $h_i$ searched from the number-of-hop table 155; a relay-range number-of-hop count down processing unit 157 for subtracting 1 from the relay range number-of-hop $h_1'$, for example,

stored in the received packet; the number-of-hop count checking unit 158 for judging, based on the output of processing unit 157, whether the received state notifying packet is relayed or not; and number-of-hop updating unit 159 for updating the relay-range the number-of-the-hops in the received data packet input through the checking unit 158 and for outputting the state notifying packet to the adjacent node, when the checking unit 158 judges that the state notifying packet should be relayed.

In Figure 32, the number of hops $h_s$ from the packet creating node to the node in which the state information stored in the packet is used for routing is detected from the received state notifying packet; the number of hop comparing unit 156 compares the number of hops $h_s$ with the number of the searched number of hops $H_i$ provided from the self-node to the packet creating node and stored in the number-of-hop table 155. When the value of the number of the hops $h_s$ stored in the received packet is less than the searched number of hops $H_i$ detected from the number-of-hop table 155, the notifying data latch unit 153 shown in Figure 30 outputs the notifying data so that the state information stored in the packet is used for the routing. In contrast, when the number of hops $h_s$ is more than the searched number of hops $H_i$ detected from the number-of-hop table, the notifying data is kept held in the notifying data latch unit 153 without using the notifying data for the routing.

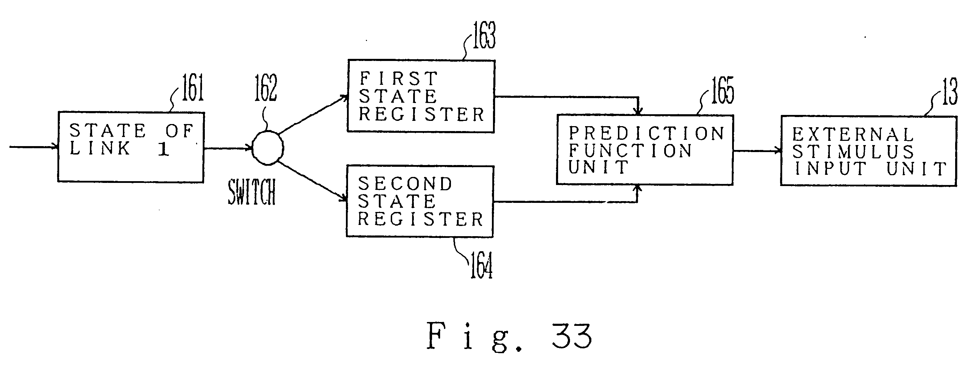

According to the fifth embodiment, where the distance from the self-node is large and the notifying interval of the state information is long, the state information is predicted so that the change of the state information value during the period of the notifying interval can be predicted. Figure 33 shows an explanatory view of a concept of the state information prediction. In Figure 33, state 161 of link l is stored in the first state register 163 or the second state register 164 through the switch 162. When the state value at time t-1 is stored in the first state register 163 and the state value at t is stored in the second state register 164, the state value at t+1 is predicted by prediction function unit 165 by using these two state values at time t-1 and t. The state values are provided to external stimulus input unit 13 and used for the routing of the packet. The prediction function to be used by prediction function unit 165 is as follows with an example of a linear prediction being performed:

$$F(t+1) = \frac{F(t)-F(t-1)}{t-(t-1)}[t-(t-1)]+F(t) \tag{9}$$

In Figure 30, the packet delay time d in the state information output by notifying data latch unit 153 for use in the routing in the self-node is provided to the prediction function unit 166, the delay time latch unit 167, and the packet loss ratio PL. Such state information is input to prediction function unit 171 and loss ratio latch unit 172. Simultaneously, notifying data latch unit 153 provides the corresponding link number to link number storing units 168 and 173. The data latched in the delay time latch unit 167 and loss ratio latch unit 172 are stored in delay time holding table 169 and loss ratio holding table 174 with a certain time delay. When the state information input to prediction function units 166 and 171 define the state at time t, the state information output from tables 169 and 174 relates to the state at time t-1. By using the values of the state information at these two times, the prediction values of the packet delay time and packet loss ratio at time t+1 are output to the network state holding unit.

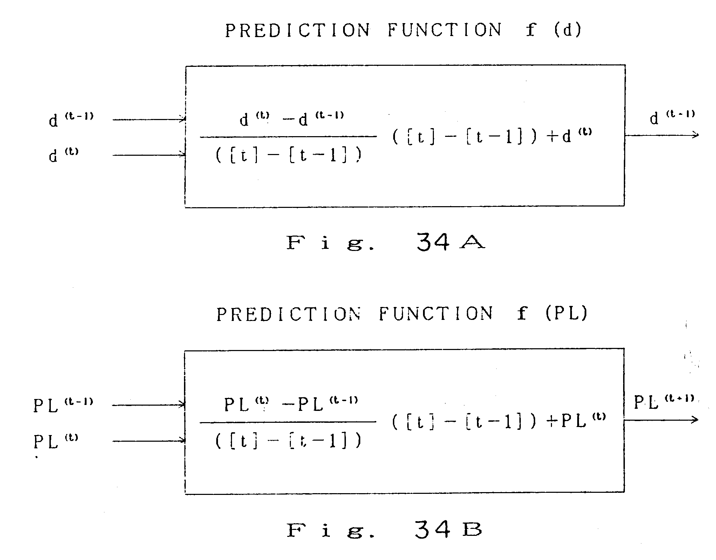

Figures 34A and 34B show an embodiment of the prediction function to be used in prediction function units 166 and 171. Figure 34A designates a prediction function of the packet delay time and Figure 34B represents a prediction function used for predicting the packet loss ratio. A linear prediction is used in these prediction functions.

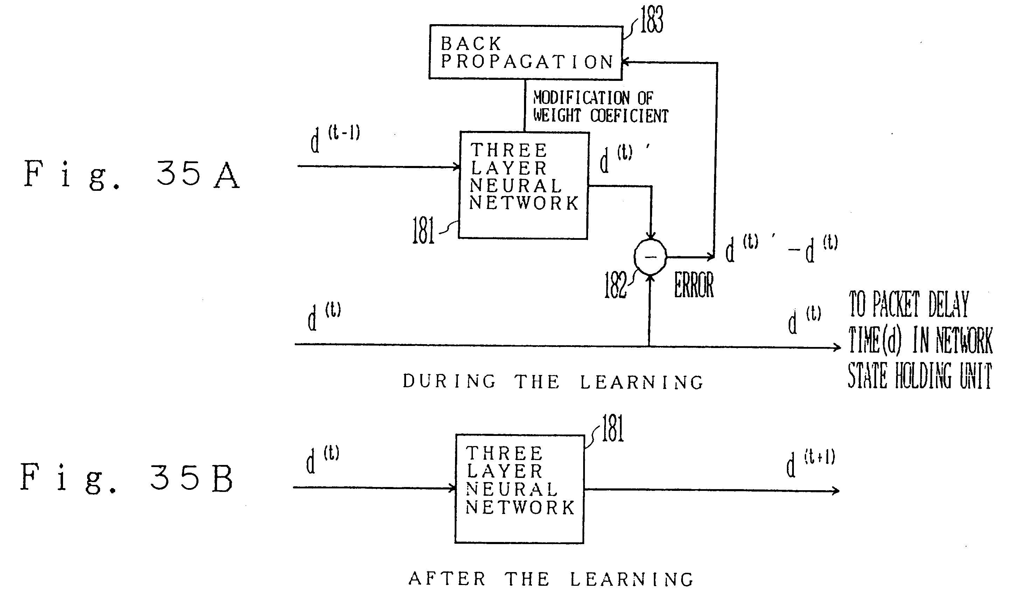

Figures 35A and 35B show an embodiment of a neural network for use in the prediction function unit. Figure 35A represents a structure during the learning. The value of the packet delay time d at time t-1 is provided to an input layer unit of three layer neural network 181, and the output layer unit outputs the prediction value at time t. Subtracter 182 obtains the error between the prediction value and the actual value of the packet delay time at time t, and based on this error, the weight coefficient in three layer neural network 181 is updated through back propagation 183. Figure 35B shows a state after the learning is completed. The packet delay time d at time t is input to three layer neural network 181 and the value of the packet delay time at time t+1 is output from the neural network 181. The prediction function unit can similarly be formed using the three layer neural network with regard to the packet loss ratio.

Figures 35A and 35B show a structure in which the packet delay time and the packet loss ratio are separately input to the three layer neural network but it is naturally possible to concurrently input the packet delay time and packet loss ratio to the same three layer neural network.

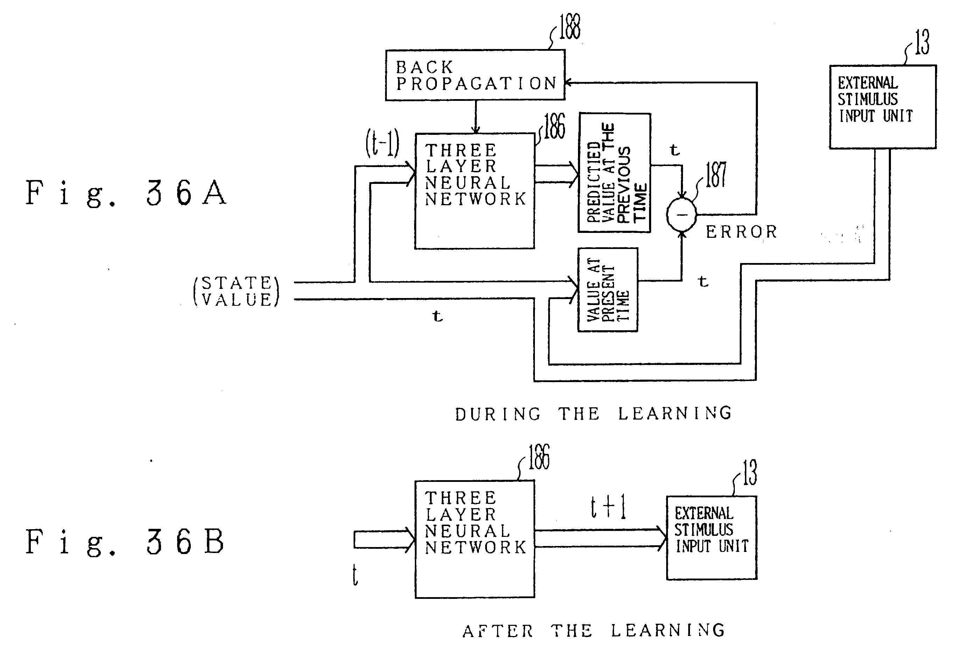

Figures 36A and 36B show an embodiment of the prediction function unit in which the packet delay time and the packet loss ratio are input to the same three layer neural network. In Figure 36A and 36B, three layer neural network 186 comprises an input layer and output layer, each having the units whose number is equal to the number of the output links from the self-node. The packet delay time and packet loss ratio of respective links are input to respective units, thereby enabling their prediction values to be output from the output layer. During the learning period shown in Figure 36A, subtracter 187 obtains the errors, back propagation 188 updates the weight coefficient using the errors, and the state value at the present time t is output to the external stimulus input unit 13 so that it can be used for the routing of the packet. After the learning is completed as shown in Figure 36B, three layer neural network 186 receives the present state value at time t and outputs the state value at time t+1 to be provided to external stimulus input unit 13.

An embodiment of the sixth embodiment will be explained below. The principle block diagram of the sixth embodiment is similar to Figure 4A representing the principle of the first embodiment. The sixth embodiment is applied to the multi media integrated network using the virtual call method and as the state of the integrated network provided to the external stimulus unit 13, a capacity of respective links, the frequency band being presently used by respective links, a utilization ratio of respective links and the packet delay time in respective links in the integrated network and as the condition required by the media, the frequency band required by the media input from the terminal are used.

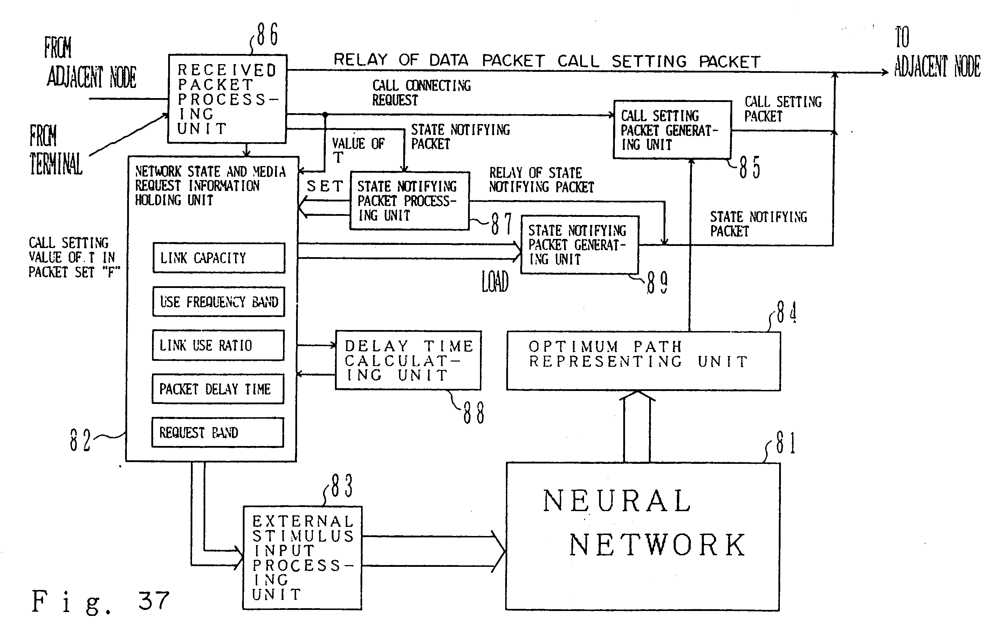

Figure 37 shows a block diagram of a structure of an embodiment of the node according to the sixth embodiment. Figure 37 is different from Figure 7 showing the first embodiment in that the packet output direction determining unit 35 and state information creating/notifying packet creating unit 38 do not exist, instead call setting packet creating unit 85, delay time calculating unit 88 and state notifying packet creating unit 89 are provided and the capacity of respective links, the frequency band being presently used, utilization ratio of the link, the packet delay time and the frequency band required by the media are held.

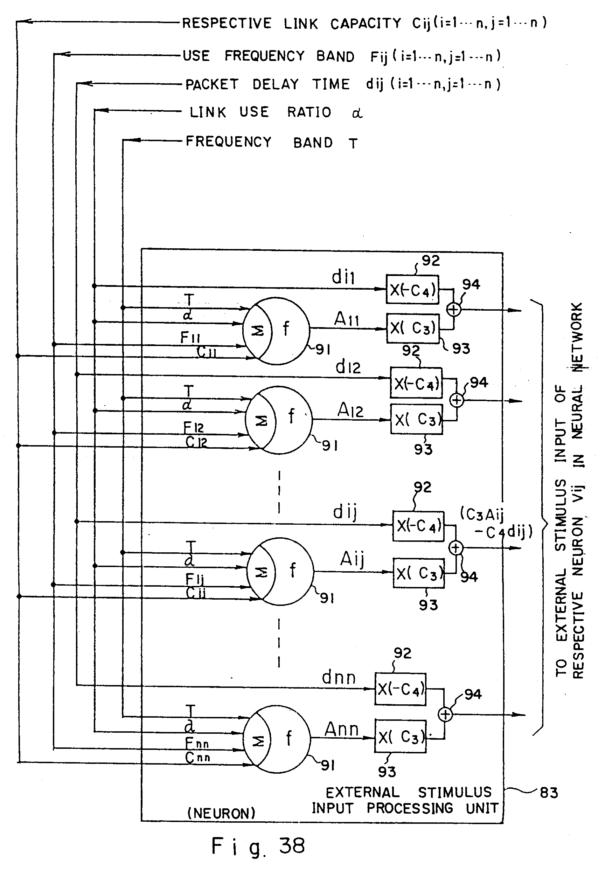

Figure 38 shows a block diagram of a structure of an example of the external stimulus input processing unit according to the sixth embodiment. In the virtual call method, the variable Aij representing whether the link ij is usable is obtained by the following expression.

$$A_{ij} = f\left[\alpha\left(C_{ij} - F_{ij}\right) - T\right] \tag{7}$$

where, T represents a frequency band required by the media, Cij capacity of the link ij, Fij a frequency band being presently used, and $\alpha$ the maximum allowable link use ratio.

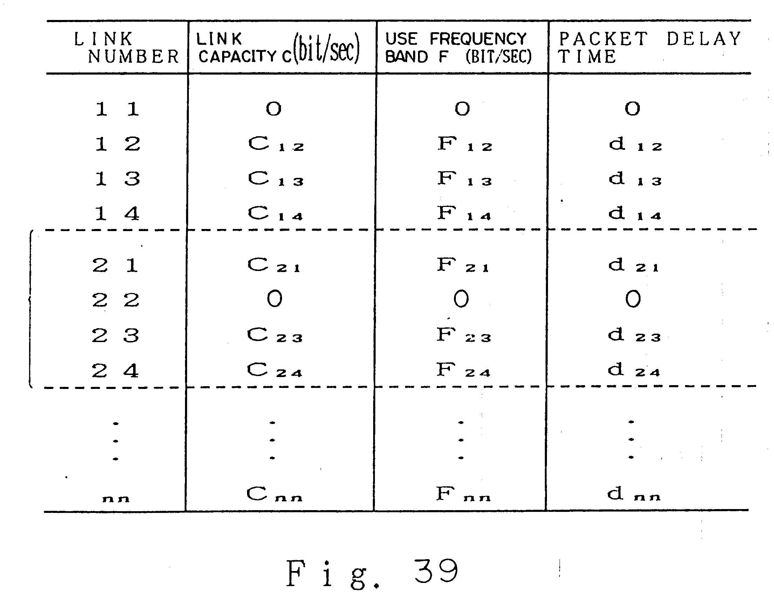

In Figure 38, as for the neurons 91 for inputting the external stimulus to the neuron corresponding to the link on a one-to-one basis in the neural network 81 in the node, the capacity Cij of respective links, the use frequency band Fij, the link use ratio $\alpha$ and the frequency band T required by the media are input to the neurons 91 and the value of the variable Aij is calculated in accordance with the expression (7), coefficient units 92 and 93, and adder 94 obtain the external stimulus of the expression (5) and output it as the external stimulus input to the neuron corresponding the link. Figure 39 designates a content stored in the network state holding unit according to the sixth embodiment. As is similar to Figure 12 relating to the first embodiment, in Figure 39 the network state holding unit stores the output links 11 to 14 of the self-node, and the link capacity, used frequency band and packet delay time for the output links 21 to 24 of the other nodes.

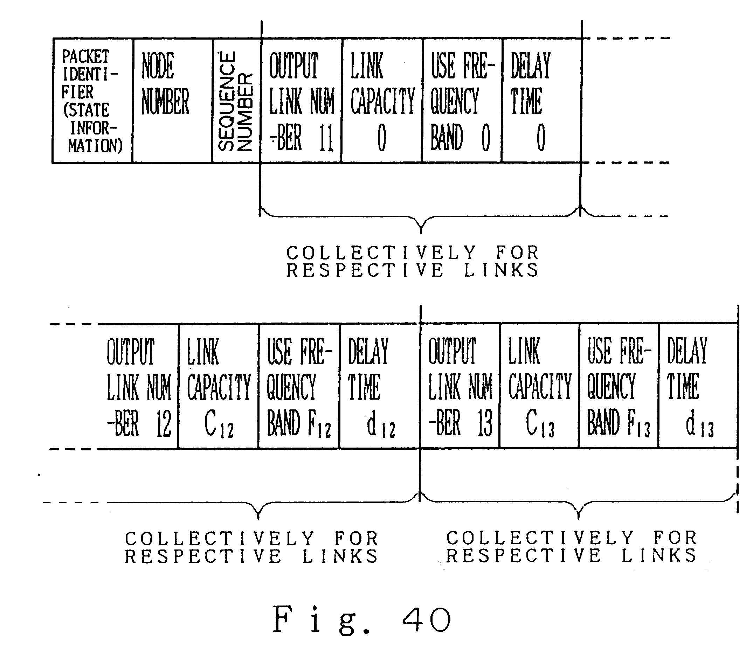

Figure 40 shows an embodiment of a format of the state notifying packet according to the sixth embodiment. The packet format shown in Figure 40 is different from Figure 11 relating to the first embodiment in that the network states stored corresponding to respective output links comprises the capacity, the use frequency band and the packet delay time of the links.

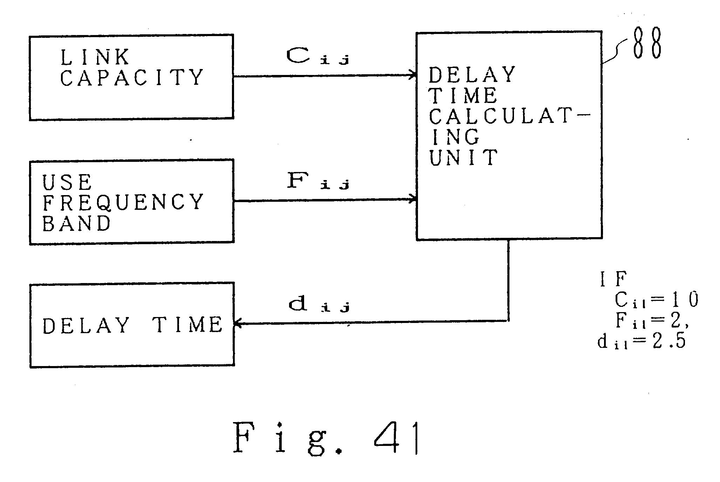

Figure 41 designates the explanatory view of the processing performed by the delay time calculating unit. In the virtual call method, the packet delay time Dij of respective links are obtained corresponding to respective links by the following expression and the respective nodes notify all the other nodes of the values of the packet delay time Dij by using the state notifying packet.

$$d_{ij} = \frac{P}{1-P}\, C_{ij}\ ,\ P = \frac{F_{ij}}{C_{ij}} \tag{8}$$

where Cij represents a link capacity and Fij represents a use frequency band.

In Figure 41, delay time calculating unit 88 calculates the packet delay time Dij in accordance with expression (8) by using the link capacity Cij and use frequency band Fij held in the network state and media requirement information holding unit 82 in the node shown in Figure 37. It outputs the result of the calculation to the network state and media requirement information holding unit 82.

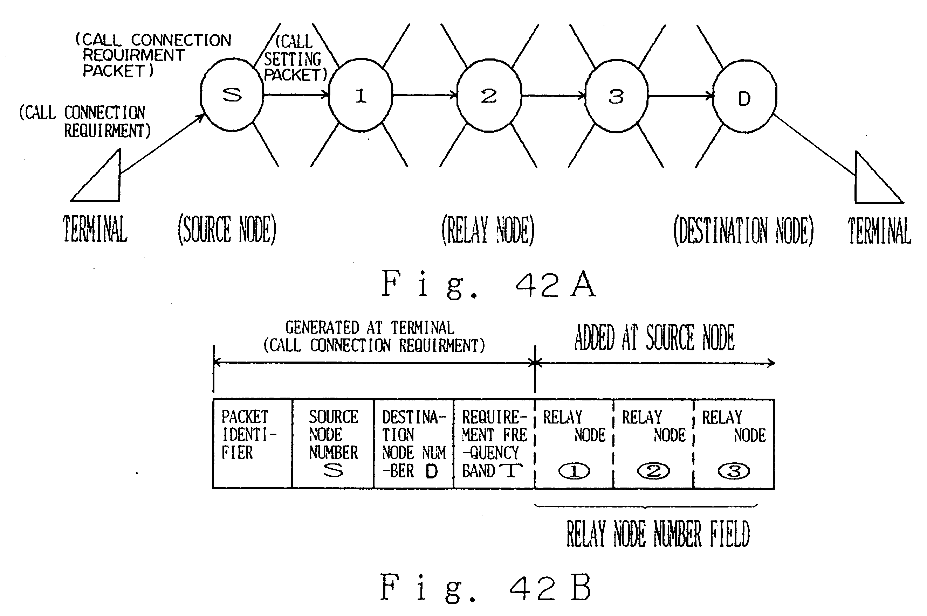

Figures 42A and 42B show an embodiment of the call connection requirement and a format of call setting packet. The virtual call method transmits the call setting packet from the source node to the destination node in the multimedia integrated network and establishes the connection of the call as a virtual call.

Figure 42A shows that the source terminal of the packet transmits a call connection requirement packet to the source node, including the terminal. The source node converts the call connection requirement packet into the call setting packet and then transmits it to the destination node through the relay nodes.

Figure 42B shows that the source terminal of the packet forms a call connection requirement packet in which an identifier designating a call connection requirement packet the source node number S and destination number D as the packet identifier, and the requirement frequency band T as the condition required by the media. This call connection requirement packet is then transmitted to the source node. The source node adds the relay node number to the following region and converts the packet identifier into an identifier designating, and thereby forming, the call setting packet.

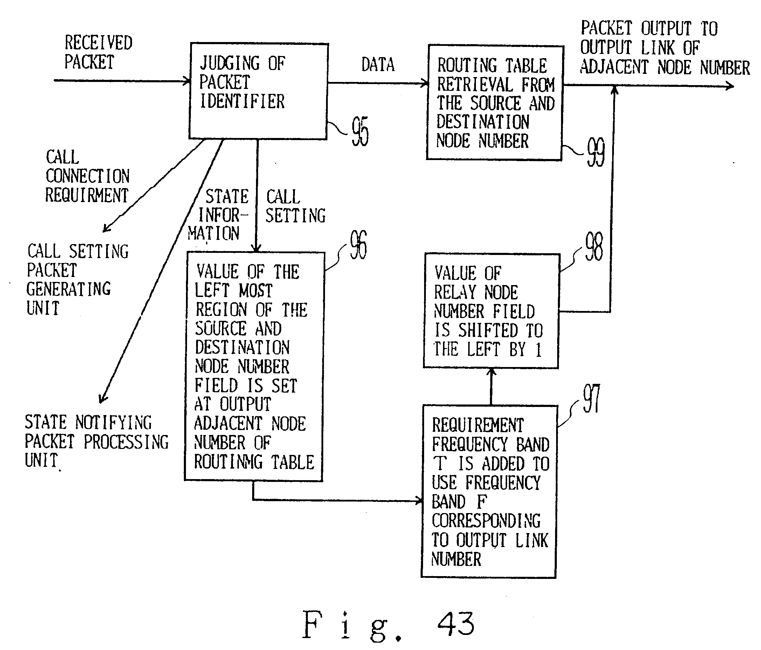

Figure 43 shows an explanatory view of the process by the received packet processing unit 86 within the node shown in figure 37. In Figure 43, the packet identifier judging unit 95 judges the packet identifier with regard to the packet received from the adjacent node or the terminal of the self-node. When the packet identifier designates the call connection requirement, the call connection requirement packet is transmitted to the call setting packet, creating unit 85, and is converted to the call setting packet which is output to the adjacent node.

When the packet identifier designates the state notifying packet received from the other nodes, the state notifying packet is output to state notifying packet processing unit 87.

Where the packet identifier designates the call setting packet, as shown by numeral 96, the source and destination number and the left end value of the relay node number field stored in the call setting packet are set in the routing table (described later). As shown by numeral 97, the frequency band T required by the media stored in the call setting packet is added to the use frequency band F corresponding to the output link number of the packet in the network state holding unit explained by referring to Figure 39. As shown by numeral 98, the relay node number stored in the relay node number field in the call setting packet is shifted to the left by 1, and selects the relay node number of the left end. Since the selected number represents the adjacent node number, the call setting packet is output to the output link of the adjacent node number.

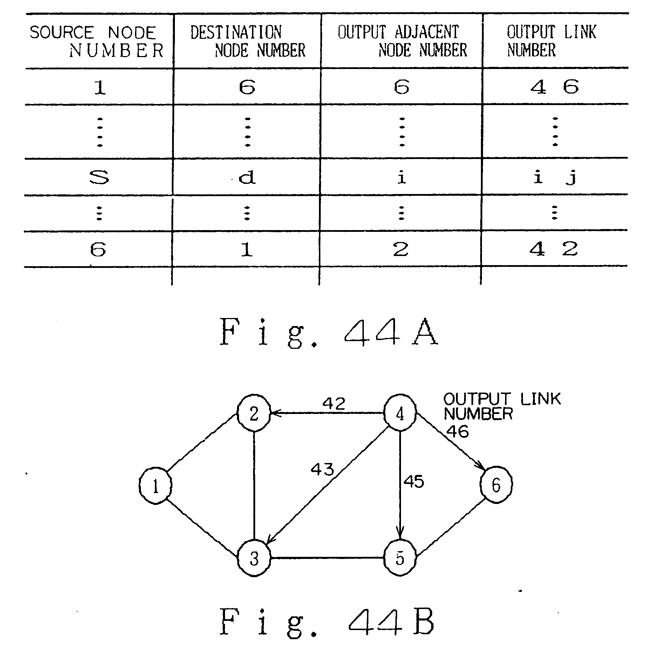

Figures 44A and 44B show an embodiment of the content stored in the routing table maintained in the received packet processing unit. Figure 44A represents an example of the routing table held in node 4 in the network with a topology shown in Figure 44B. As for the virtual call with the source node number of 1 and the destination node number of 6, for example, 6 is held as the output adjacent node number and 46 is held as the output link number. By storing such content in the routing table, the data packet is routed in accordance with the content of this routing table after the call setting packet is transmitted.

In Figure 43, when the packet identifier judging unit 95 in the received packet processing unit judges the received packet as the correct data packet, the source and destination node numbers are detected for the data packet. As shown by numeral 99, by using the results of the detection of the source and destination node number, the routing table is searched and the packet is output to the output link corresponding to the adjacent node number stored in the routing table.

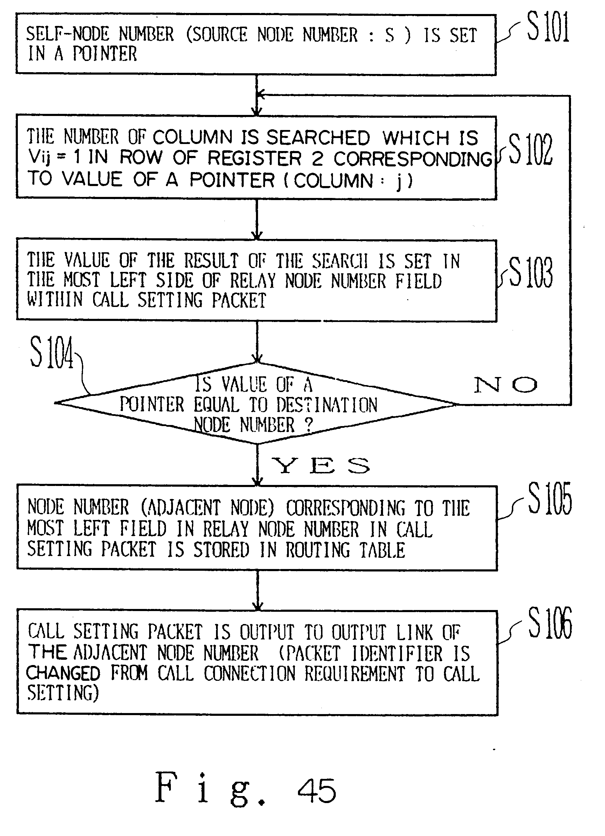

Figure 45 shows a flowchart of an example of creating a call setting packet 85 according to the sixth embodiment.

The content of the representation by the optimum pass representing unit 84 according to the sixth embodiment is the same as that shown in Figure 14 according to the first embodiment.

In Figure 45, step S101 sets the self-node number and the source node number S in a pointer in the second register 59 as shown in Figure 14. Sequentially, step S102 searches the number j of the column Vij of 1 in the row of the second register 59, which corresponds to the value of the pointer; step S103 sets the value of j in the pointer, and simultaneously the value of j is set in the most left side of the relay node number field within the call setting packet.

Next, step S104 judges whether or not the value of the pointer is equal to the value of the destination node number. If it is not equal to the value of the destination node number, the process, starting with step S102, is repeated to add the relay node number. However, in the second process of step S102, the value of the pointer is the number of columns searched by the first process of the step S102. The number of column designating the neuron whose output is 1, is searched from among the neurons, corresponding to the output links of the adjacent node corresponding to the number of column detected by the second process of step S102. Step S103 sets the value of the result of the search in the second region from the left fields of the relay node numbers.

When, in step S104, the value of the pointer is equal to the value of the destination node number, then in step S105 the most left node number in the relay node number field in the call setting packet, namely, the adjacent node number of the source node is held in the routing table. In step S106, a call setting packet is output to the output link corresponding to the adjacent node number. Prior to the output of the call setting packet, the packet identifier is changed from the call connection requirement to the call setting as described above.

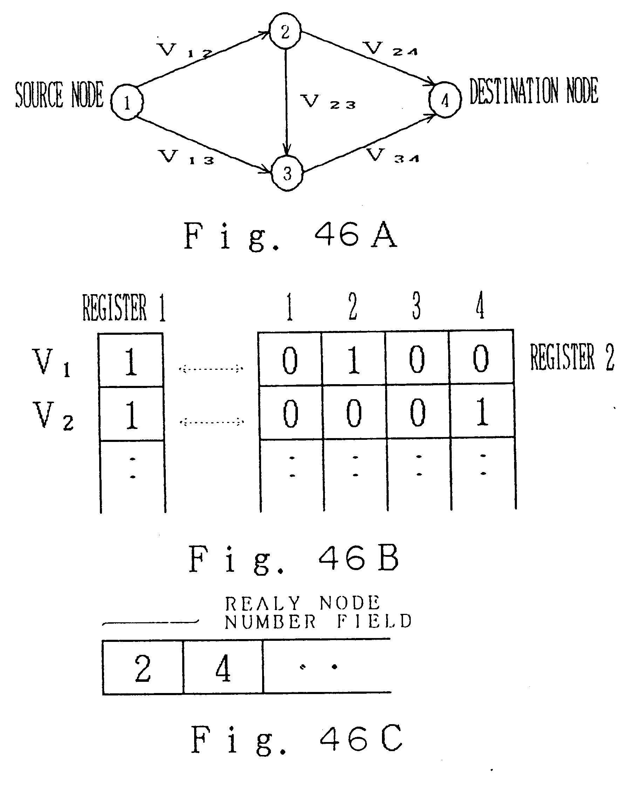

Figures 46A, 46B and 46C show an explanatory view of a concrete example of the call setting packet creation process. Suppose that the call is set from the source node 1 to destination nodes 4 through relay node 2 in the network shown in Figure 46A. First, in step S101 in Figure 45, the self-node number, namely 1 per this example, is set to the pointer; in step S102, the neuron corresponding to the link and whose output is 1 is searched from the row of the second register and corresponding to node 1 as shown in Figure 46B, thereby providing 2 as the column number. In step S103, the column number is set in the pointer and as shown in Figure 46C, is stored in the most left region of the relay node number field. In step S104, the value 2 of the pointer is not equal to the value 4 of the source node number; thus the process is again returned to step S102 and the number of the column of the link corresponding to the neuron whose output is 1, out of the second row of the second register and corresponding to the value 2 of the pointer, the number 4 is detected. In step S103, the column number is set in the pointer and is stored in the second region of the relay node number field. In step S104, the value 4 of the pointer is equal to the value 4 of the destination node number. After performing steps S105 and S106, the process of creating the call setting packet is completed.

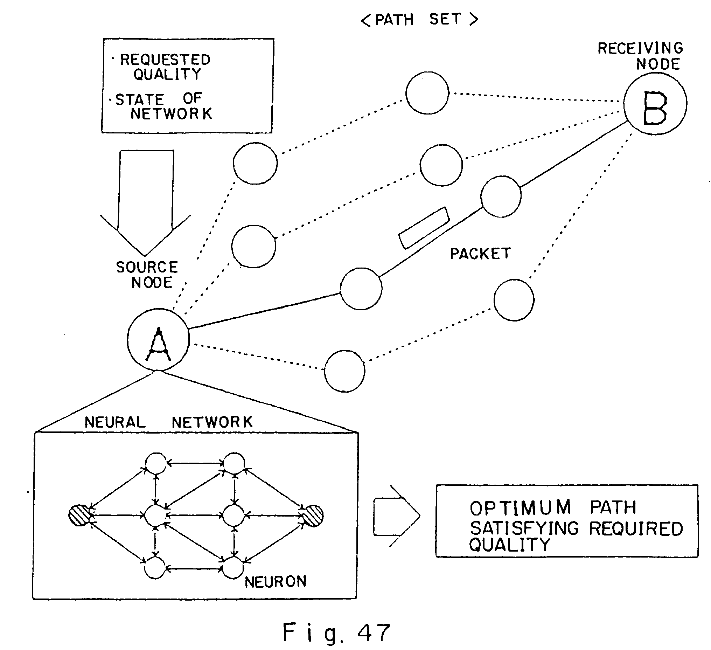

Figure 47 shows an embodiment of the call setting in the virtual call. Source node A provides the optimum path for producing the required quality by using the neural network in accordance with the quality required by the media and the present state of the network. Hence the optimum path is set as the path in the virtual call.

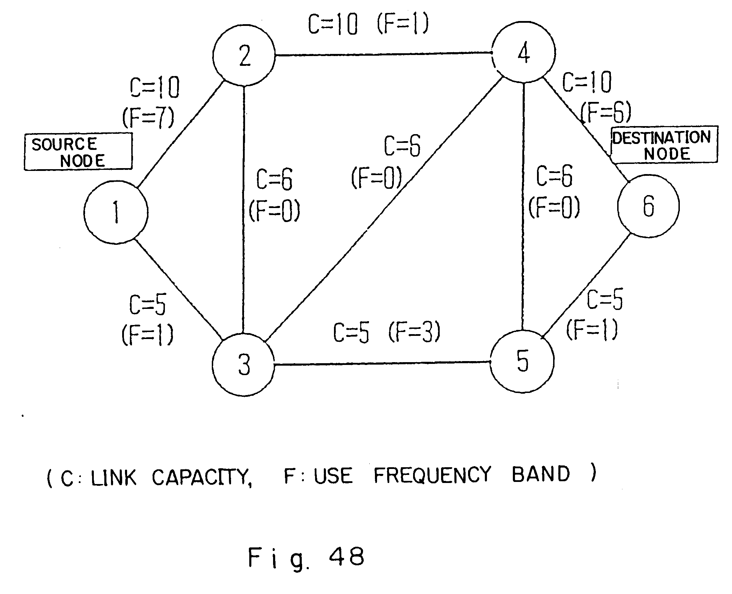

Figure 48 designates an embodiment of a simulation model in which the optimum path is set in the actual network comprising 6 nodes. In Figure 48, the path of the virtual call which minimizes the packet delay time in transmission from source node 1 to destination node 6 is obtained by simulation.

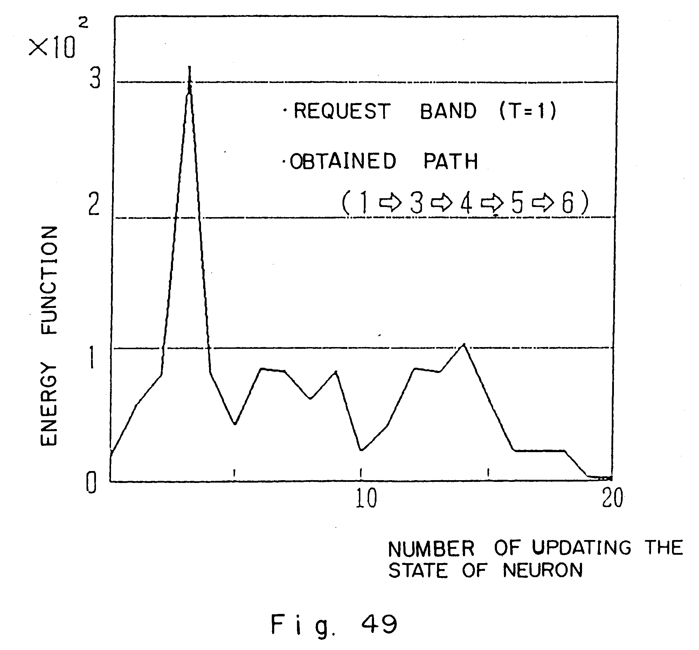

Figure 49 shows the result of the simulation. Figure 49 shows the change of the energy function in response to the number of updates of the state of the neuron until the optimum path is obtained in the neural network shown in Figure 31. After the updating of the state of the neuron is performed 19 times, the output of the neuron becomes stable and the nodes having the corresponding neurons whose outputs Vi are stabilized at 1 are 3, 4 and 5. The path using these nodes 3, 4 and 5 as the relay node is obtained as the optimum path in which the delay time is minimized.

Generally speaking, the capacity Cij of the link is not equal to the capacity Cji of the link in the reverse direction. However, in Figure 48 the bi-directional communication is considered as the premise and the simulation is performed under the presumption that, if the path is set from the source node to the destination node, the same path is set in the reversed direction.

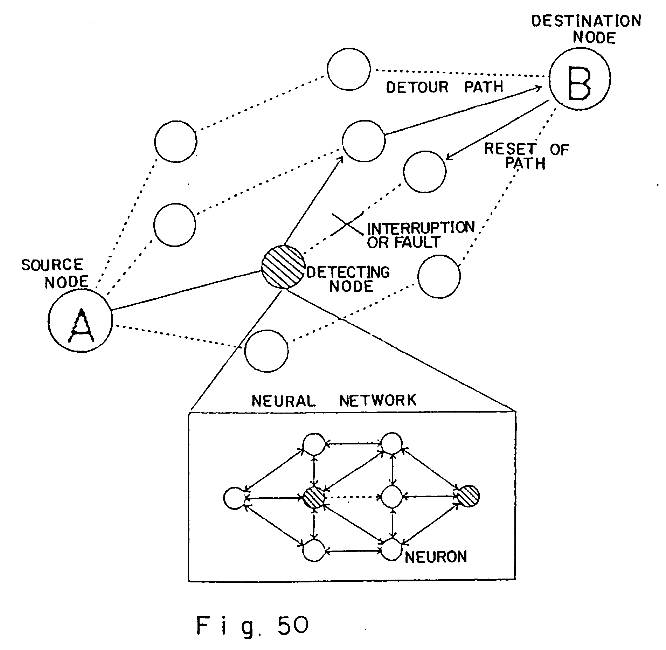

Figure 50 shows an embodiment of setting a detour path upon an occurrence of a link fault. In Figure 50, when a fault occurs in the link utilized for a communication according to the virtual call, the fault detecting node detecting the fault sets a detour path using the neural network provided in the self-node; therefore communication of the virtual call up to destination node B can continue without interruption.

In the sixth embodiment the state of information is also notified. The change of the state is affected only by a call setting and a call release and a time interval of the state variation is relatively long as compared with the datagram method, the notified state always reflects the state at that time. Accordingly, if the state information is modified as in the third to fifth embodiments relating to the state notifying is not suitable for the datagram method.

As described in detail above, this system makes it possible to realize the determination of the optimum output direction of the packet in the datagram method and the call setting in the virtual call which are adaptive to the state of the network changing with time thus satisfies a condition required by the media in the multimedia integrated network for various media.

Further, by limiting the state information notifying range in the network or decreasing the state information value obtained from the other nodes in accordance with the distance between nodes, the increase of the traffic due to the state notification is prevented and the routing is not affected by the state of the apart nodes, thereby realizing an adaptive routing and thus contributing to an efficient utilization of the network and the improvement of the reliability of the communication.

Using the systems described above, respective nodes include neural networks of the same structural characteristics and a calculation of each of the neural networks can be performed within the respective nodes. This structure of the system enables a routing to be adaptive to the variation of the state of the network independently from the distance between the nodes.

This invention can be utilized in packet routing for the multimedia integrated network including various medias such as voice, image and data in the packet form. This invention can be applied to, for instance, a computer network in which the data is transmitted in a burst manner as well as to the multimedia integrated network.

**Claims**

1. A routing system for use in a packet switching network for performing communication of media in a packet format, comprising a neural network:
   characterized by

   the neural network being an inter connection type neural network (12) for enabling respective nodes forming the packet switching network to determine an output direction of a packet from the self-node; and
   an external stimulus input means (13) for outputting an external stimulus to a neuron forming said neural network (12) in accordance with the present state of the packet switching network and a condition required by a medium included in the switching network,
   thereby enabling an optimum direction to be in a packet output direction in accordance with the present state of the packet switching network and the condition required by the media.

2. A routing system according to claim 1, wherein

the packet switching network is for performing a communication by virtual call system.

3. A routing system according to claim 1, further comprising:

a state information notifying means (17,19) for notifying a state of respective output links of the self-node to all the nodes forming the packet switching network; and
other node state information value decreasing means (18,20) for decreasing the value of the state information notified by the state information notifying means of the other node in accordance with a distance from the self-node to the other node,
thereby making the influence of the state of the other node small with an increase of a distance from the self-node to the other node and enabling the determination of an optimum packet output direction suitable for the present state of the packet switching network and the condition required by the media.

4. A routing system according to claim 3, wherein

the state information notifying means (17,19) further notifies a range in which the state is notified within the switching network to all the nodes forming the switching network, and the other node state information value decreasing means (18,20) further decreases the value of the notifying range in accordance with the distance from the self-node to the other node, notifies the result of the decrease of said both values to the adjacent node and outputs the result of the decrease to the external stimulus input means in the self-node when the result of the decrease of the notifying range is not 0, and outputs the result of the result of the decrease of said both values to the external stimulus input means within the self-node without notifying the result of the decrease to the adjacent node when the result of the decrease of the notifying range is 0, thereby decreasing the influence of the state of the other node with an increase of the distance from the self-node to the other node and enabling a direction most suitable for the present state of the packet switching network and a condition required by the media to be used as the packet output direction.

5. A routing system according to claim 1, wherein

the packet switching network is a multi media integrated network.

6. A routing system according to claim 5, wherein

said neural network (12) comprises two kinds of neurons comprising a neuron corresponding one-to-one to each of nodes forming the multi media integrated network and a neuron corresponding one-to-one to each of links connected between said respective nodes and said external stimulus input means (13) outputs an external stimulus to the neuron corresponding one-to-one to each of said links,
respective neurons in said neural network (12) add inputs from the other neurons to the external stimulus after an input weighting operation is performed, said result of the addition is subjected to a threshold process, thereby outputting 0 or 1, after repeating the above operation, and
the node corresponding to said node correspondence neuron whose output is stabilized at 1 is determined as a node in a packet output direction, and a link corresponding to the link correspondence neuron whose output is stabilized at 1 is determined as a link in a packet output direction.

7. A routing system according to claim 5 or 6 wherein

said media accommodates voice, image and data.

8. A routing system according to any one of claims 5 to 7 wherein

in respective nodes (11) forming said multi media integrated network (10), upon every input of the packet, the output direction of the packet in which a delay time of the packet from the self-node to a destination node becomes minimum is determined in accordance with the present state of the network and a condition required by said media by using said neural network (12) and external stimulus input means (13), and said output direction determining operation is repeated in respective nodes every time when the packet is moved in said multi media integrated network (10) so that the packet can reach the destination node through an optimum path which is, in real time, adaptive to the variation of the state of the multi media integrated network and satisfies a condition required by the media.

9. A routing system according to any one of claims 5 to 8 wherein

said external stimulus input means (13) inputs a packet loss ratio and packet delay time for respective links forming the integrated network as the state of the integrated network (10), and inputs an allowable packet loss ratio designated by said media as the condition required by media.

10. A routing system according to claim 9, wherein

said external stimulus input means (13) is provided with a neuron corresponding one-to-one to a neuron which corresponds to each of links forming the integrated network (10) when the neuron provided in the external stimulus input means (13) receives a packet loss ratio for respective links and an allowable packet loss ratio designated by the media, the neuron outputs 1 if the link can receive the packet from the media and outputs 0 if the link cannot receive the packet from the media, and the output from the neuron provided in the external stimulus means (13) is added to said packet delay time after weighting operation is performed as the external stimulus to the neuron corresponding to the link.

11. A routing system according to claim 6, wherein

said node is identified by a node identifier and further comprises a packet passing node number detecting and inserting means (15) for detecting the node number of the node through which the packet has passed, based on the input packet and inserting the self-node number to the packet, thereby transmitting the packet to the adjacent node, and a neuron output fixing means (16) for fixing the output of the neuron corresponding to one-to-one to the node through which the input packet has passed, to be 0,
thereby performing a routing of the input packet by excluding a path going through a node through which the input packet has passed and thus decreasing the calculation time of the neural network.

12. A routing system according to claim 11, wherein

said packet passing node number detecting and inserting means (15) detects only the adjacent node to the self-node out of the packet passing nodes and said neuron output fixing means (16) fixes the output of the neuron corresponding one-to-one to the adjacent node to be 0.

13. A routing system according to claim 11, wherein

said packet passing node number detecting and inserting means (15) detects only the number of the source node of the packet out of the packet passing nodes and said neuron output fixing means (16) fixes the output of the neuron corresponding one-to-one to the source node, to be 0.

14. A routing system according to claim 5, further comprising:

a state information notifying means (17,19) for notifying a state of respective output link of the self-node to all the nodes forming the integrated network; and
other node state information value decreasing means (18) for decreasing the value of the state information notified by the state information notifying means (17,19) of the other node in accordance with a distance from the self-node to the other node,
thereby making the influence of the state of the other node small with an increase of a distance from the self-node to the other node and enabling the determination of optimum packet output direction suitable for the present state of the integrated network and the condition required by the media.

15. A routing system according to claim 14, wherein

said state information notifying means (17,19) notifies a packet delay time and a packet loss ratio for the respective output links from the self-node as the state information, a state information notifying packet processing unit forming the other node state information value decreasing means (18) provides the state information notified from the other node comprising a packet delay time and packet loss ratio for respective output links of the other node by the number of hops equal to the number of the relay links from the self-node to the other node, thereby outputting the result of the division to said external stimulus input means.

**16.** A routing system according to claim 5, further comprising:

a state information notifying mean (19) for notifying all the nodes forming the integrated network (10) of the state of respective output links of the self-node and a range in which the state is notified within the integrated network (10); and

other node state information and notifying range value decreasing means (20) for decreasing the value of the state information notified from the state information notifying means (19) of the other node and the value of the notifying range in accordance with the distance from the result of the decrease of said both values to the adjacent node and outputting the result of the decrease to the external stimulus input means in the self-node when the result of the decrease of the notifying range is not 0, for outputting the result of the decrease of said both values to the external stimulus input means within the self-node without notifying the result of the decrease to the adjacent node when the result of the decrease of the notifying range is 0,

thereby decreasing the influence of the state of the other node with an increase of the distance from the self-node to the other node and enabling a multi media integrated network and a condition required by the media to be used as the packet output direction.

**17.** A routing system according to claim 5, further comprising:

state information averaging and notifying means (21) for performing an average operation of the state of the respective output links of the self-node with regard to a plurality of kinds of periods, and for notifying respective nodes forming the integrated network (10) of the value of the relay range which changes according to the periods, in which the result of the average is relayed within the network and, a notifying range for designating the range of the node in which the result of the average is used for the routing and which changes according to the period, and the result of the average, with regard to a plurality of kinds of the periods; and

other node state information receiving processing means (22) for decreasing the value of the relay range received from the other-node-state information average and notifying means by one, for outputting the result of the decrease of the relay range, the notifying range, and the average value of the state information to all the adjacent nodes when the result of the decrease is not 0 and for outputting the value of the average of the state information to said external stimulus input means (13) when the self-node is located within said notifying range, thereby preventing an increase of a traffic due to the state notification and enabling a direction most suitable for the present state of the integrated network and the condition required by the media to be used as the packet output direction.

**18.** A routing system according to claim 5, wherein

the multi media integrated network is for performing a communication by virtual call system.

**19.** A routing system according to claim 18, wherein

said media accommodates audio, sound, image and data.

**20.** A routing system according to claim 18, wherein

said neural network (12) comprises two kinds of neurons comprising a neuron corresponding one-to-one to each of nodes forming the multi media integrated network and a neuron corresponding one-to-one to each of links connected between said respective nodes and said external stimulus input means (13) outputs an external stimulus to the neurons corresponding one-to-one to each of said links,

respective neurons in said neural network add inputs from the other neurons to the external stimulus after a weighting operation is performed, said result of the addition is subjected to the threshold process, thereby outputting 0 or 1, after repeating the above operation, and

the node corresponding to said node correspondence neuron whose output is stabilized at 1 is determined as a node in a packet output direction, and a link corresponding to the link correspondence neuron whose output is stabilized at 1 is determined as a link in a packet output direction.

**21.** A routing system according to claim 18, wherein

upon setting a call for a virtual call, said neural network (12) and external stimulus input means (13)in the source node of the virtual call obtains the call path from the source node to the destination node so that the whole path is suitable for a condition required by the media of the virtual call and the present state of the network.

22. A routing system according to claim 18, wherein

in order to obtain the path of a virtual call which is, in real time, adaptive to the state of the multi media integrated network (10), said external stimulus input means (13) receives a capacity of respective links between respective nodes forming the integrated network (10), a frequency band being used, an allowable usage ratio of the link and a packet delay time as the present state of the integrated network (10), and receives a frequency band required by the media as a condition required by the media for the virtual call.

23. A routing system according to claim 22, wherein

said external stimulus input means (13) is provided with a neuron corresponding one-to-one to the link correspondence neuron in said neural network, said neuron in the external stimulus input means (13) receives the capacity, a frequency band being used, an allowable usage ratio of a link and a frequency band required by a media for the virtual call, thereby outputting 1 to the link corresponding to the neuron when the frequency band required by the media is acceptable and outputting 0 to the link corresponding to the neuron when the frequency band required by the media is not acceptable, and the external stimulus corresponding to the output of the neuron and the packet delay time of respective links is output to the link correspondence neuron.

24. A routing system according to claim 18, wherein

said neural network (12) and external stimulus input means (13) provides a path satisfying a frequency band required by the media for a virtual call and minimizing the delay time from the source node to the destination node for the virtual call.

25. A routing system according to claim 20, wherein

the node corresponding to the node correspondence neuron whose output is stabilized at 1 in the neural network (12) in the source node for the virtual call is determined a relay node forming a path of the virtual call, and a call setting packet holding the number of the relay node is created and the call setting packet is transmitted to the destination node of the virtual call, thereby setting a call for the virtual call.

26. A routing system according to claim 20, wherein

when a fault of the link or node occurs during a communication by the virtual call, the node detecting the fault becomes the source node in a pseudo manner, the pseudo source node obtains the whole detour path from the self-node to the destination node by using the neural network provided in the self-node for fixing the output of the neuron corresponding to the fault link or fault node to be 0 and the external stimulus input means (13) provided in the self-node, and the call setting packet is transmitted from the self-node to the destination node through the relay nodes along the obtained detour path, thereby setting the detour path without causing a communication of the virtual call to stop.

**Patentansprüche**

1. Wegleitungssystem zur Verwendung in einem Paketvermittlungsnetz zum Ausführen einer Kommunikation von Medien in einem Paketformat, umfassend ein neuronales Netz:
   ***dadurch gekennzeichnet, dass***

   das neuronale Netz ein neuronales Netz des Zwischenverbindungstyps (12) ist, um jeweilige Knoten, die das Paketvermittlungsnetz bilden, in die Lage zu versetzen, eine Ausgaberichtung eines Pakets von dem Selbstknoten zu bestimmen, und
   durch eine Externstimulus-Eingabeeinheit (13) zum Ausgeben eines externen Stimulus an ein Neuron, das das neuronale Netz (12) bildet, in Abhängigkeit von dem gegenwärtigen Zustand des Paketvermittlungsnetzes und einer Bedingung, die von einem Medium angefordert wird, das in dem Vermittlungsnetz enthalten ist;
   wodurch ermöglicht wird, dass eine optimale Ausgaberichtung in Abhängigkeit von dem gegenwärtigen Zustand des Paketvermittlungsnetzes und der Bedingung, die von dem Medium angefordert wird, in einer Paketausgaberichtung ist.

2.  Wegleitungssystem nach Anspruch 1,
    ***dadurch gekennzeichnet, dass***

    das Paketvermittlungsnetz zum Ausführen einer Kommunikation durch ein virtuelles Anrufsystem vorgesehen ist.

3.  Wegleitungsystem nach Anspruch 1, ferner umfassend:

    eine Zustandsinformations-Benachrichtigungseinrichtung (17, 19) zum Berichten eines Zustands von jeweiligen Ausgangsverbindungen des Selbstknotens an sämtliche Knoten, die das Paketvermittlungsnetz bilden;

    eine Verkleinerungseinrichtung (18, 20) für den Zustandsinformationswert eines anderen Knotens zum Verkleinern des Werts der Zustandsinformation, die von der Zustandsinformations-Benachrichtigungseinrichtung des anderen Knotens berichtet wird, in Abhängigkeit von einem Abstand von dem Selbstknoten zu dem anderen Knoten;

    wodurch der Einfluss des Zustand des anderen Knotens mit einer Zunahme des Abstands von dem Selbstknoten zu dem anderen Knoten klein gemacht wird und die Bestimmung einer optimalen Paketausgaberichtung, die sich für den gegenwärtigen Zustand des Paketvermittlungsnetzes und die Bedingung, die von dem Medium angefordert wird, eignet, ermöglicht wird.

4.  Wegleitungssystem nach Anspruch 3,
    ***dadurch gekennzeichnet dass***

    die Zustandsinformations-Benachrichtigungseinrichtung (17, 19) ferner einem Bereich berichtet, in dem der Zustand innerhalb des Vermittlungsnetzes an sämtliche Knoten berichtet wird, die das Vermittlungsnetz bilden, und die Verkleinerungseinrichtung (18, 20) für den Zustandsinformationswert des anderen Knotens den Wert des Benachrichtigungsbereichs in Abhängigkeit von dem Abstand von dem Selbstknoten zu dem anderen Knoten weiter verkleinert, das Ergebnis der Verkleinerung der beiden Werte an den benachbarten Knoten berichtet und das Ergebnis der Verkleinerung der beiden Werte an die Externstimulus-Eingabeeinheit in den Selbstknoten ausgibt, wenn das Ergebnis der Verkleinerung im Benachrichtigungsbereich nicht 0 ist, und das Ergebnis des Ergebnisses der Verkleinerung von den beiden Werten an die Externstimulus-Eingabeeinheit innerhalb des Selbstknotens ausgibt, ohne das Ergebnis der Verkleinerung an den benachbarten Knoten zu berichten, wenn das Ergebnis der Verkleinerung des Benachrichtungsbereichs 0 ist, wodurch der Einfluss des Zustands des anderen Knoten mit einer Zunahme des Abstands von dem Selbstknoten zu dem anderen Knoten verkleinert wird und ermöglicht wird, dass eine für den gegenwärtigen Zustand des Paketvermittlungsnetzes und eine Bedingung, die von dem Medium angefordert wird, am besten geeignete Richtung für die Paketausgaberichtung verwendet wird.

5.  Wegleitungssystem nach Anspruch 1,
    ***dadurch gekennzeichnet, dass***

    das Paketvermittlungsnetz ein Multimedia-Integrationsnetz ist.

6.  Wegleitungssystem nach Anspruch 5,
    ***dadurch gekennzeichnet, dass***

    das neuronale Netz (12) zwei Arten von Neuronen umfasst, umfassend ein Neuron, das eins-zu-eins jedem der Knoten, die das Multimedia-Integrationsnetz bilden, entspricht und ein Neuron, das eins-zu eins jeder der Verbindungen entspricht, die zwischen den jeweiligen Knoten verbunden sind, und die Externstimulus-Eingabeeinheit (13) einen externen Stimulus an das Neuron ausgibt, das eins-zu-eins jeder der Verbindungen entspricht;

    jeweilige Neuronen in dem neuronalen Netz (12) Eingänge von den Neuronen zu dem externen Stimulus hinzufügen, nachdem ein Eingabegewichtungsbetrieb ausgeführt wird, und das Ergebnis der Addition einem Schwellwertprozeß unterzogen wird, wodurch nach Wiederholung des obigen Betriebs 0 oder 1 ausgegeben wird; und

der Knoten, der dem Knotenentsprechungsneuron entspricht, dessen Ausgang auf 1 stabilisiert ist, als ein Knoten in einer Paketausgaberichtung bestimmt wird, und eine Verbindung, die dem Verbindungsentsprechungsneuron entspricht, dessen Ausgang auf 1 stabilisiert ist, als eine Verbindung in einer Paketausgaberichtung bestimmt wird.

7. Wegleitungssystem nach Anspruch 5 oder 6,
   *dadurch gekennzeichnet, dass*

   die Medien Sprache, Bilder und Daten unterhalten.

8. Wegleitungssystem nach einem der Ansprüche 5 bis 7,
   *dadurch gekennzeichnet, dass*

   in jeweiligen Knoten (11), die das Multimedia-Integrationsnetz (10) bilden, auf jede Eingabe des Pakets hin die Ausgaberichtung des Pakets, in dem eine Verzögerungszeit des Pakets von dem Selbstknoten zu dem Zielknoten minimal wird, in Abhängigkeit von dem gegenwärtigen Zustand des Netzes und einer Bedingung, die von dem Medium benötigt wird, durch Verwendung des neuronalen Netzes (12) und der Externstimulus-Eingabeeinheit (13) bestimmt wird, der Ausgaberichtungs-Bestimmungsbetrieb in jeweiligen Knoten jedesmal wiederholt wird, wenn das Paket in dem Multimedia-Integrationsnetz (10) bewegt wird, so dass das Paket den Zielknoten durch einen optimalen Pfad erreichen kann, der in Echtzeit auf die Änderung des Zustands des Multimedia-Integrationsnetzes adaptiv ist und eine Bedingung, die von dem Medium benötigt wird, erfüllt.

9. Wegleitungssystem nach einem der Ansprüche 5 bis 8,
   *dadurch gekennzeichnet, dass*

   die Externstimulus-Eingabeeinheit (13) ein Paketverlustverhältnis und eine Paketverzögerungszeit für jeweilige Verbindungen, die das Integrationsnetz bilden, als den Zustand des Integrationsnetzes (10) eingibt, und ein zulässiges Paketverlustverhältnis, das von den Medien bestimmt wird, als die Bedingung eingibt, die von dem Medium angefordert wird.

10. Wegleitungssystem nach Anspruch 9,
    *dadurch gekennzeichnet, dass*

    die Externstimulus-Eingabeeinheit (13) mit einem Neuron versehen ist, welches eins-zu-eins einem Neuron entspricht, dass jeder der Verbindungen entspricht, die das integrierte Netz (10) bilden, wenn das Neuron, das in der Externstimulus-Eingabeeinheit (13) vorgesehen ist, ein Paketverlustverhältnis für jeweilige Verbindungen und ein zulässiges Paketverlustverhältnis, welches durch das Medium bestimmt wird, empfängt, das Neuron 1 ausgibt, wenn die Verbindung das Paket von dem Medium empfangen kann, und 0 ausgibt, wenn die Verbindung das Paket von den Medien nicht erkennen kann, und der Ausgang von dem Neuron, das in der Externstimulus-Eingabeeinheit (13) vorgesehen ist, zu der Paketverzögerungszeit addiert wird, nachdem ein Gewichtungsbetrieb für den externen Stimulus zu dem Neuron ausgeführt wird, das der Verbindung entspricht.

11. Wegleitungssystem nach Anspruch 6,
    *dadurch gekennzeichnet, dass*

    der Knoten von einem Knotenidentifizierer identifiziert wird und ferner eine Paketdurchlaufknotennummernerfassungs- und Einfügungseinrichtung (15) zum Erfassen der Knotennummer des Knotens, durch das das Paket gelaufen ist, auf Grundlage des eingegebenen Pakets und zum Einfügen der Selbstknotennummer in das Paket, wodurch das Paket an dem benachbarten Knoten gesendet wird, und eine Neuronenausgabe-Festlegungseinrichtung (16) zum Festlegen des Ausgangs des Neurons, das eins-zu-eins dem Knoten entspricht, durch den das Eingangspaket gelaufen ist, um 0 zu sein, umfasst;
    wodurch eine Wegleitung des eingegebenen Pakets durch Ausschließen eines Pfads, der durch einen Knoten geht, durch den das eingegebenen Paket gelaufen ist, ausgeführt und somit die Berechnungszeit des neuronalen Netzes verkleinert wird.

12. Wegleitungssystem nach Anspruch 11,

*dadurch gekennzeichnet, dass*

die Paketdurchlaufknotennummernerfassungs- und Einfügungseinrichtung (15) von den Paketdurchlaufknoten nur den benachbarten Knoten zu dem Selbstknoten erfasst und die Neuronenausgabe-Festlegungseinrichtung (16) die Ausgabe des Neurons, das eins-zu-eins dem benachbarten Knoten entspricht, festlegt, um 0 zu sein.

**13.** Wegleitungssystem nach Anspruch 11,
*dadurch gekennzeichnet, dass*

die Paketdurchlaufknotennummernerfassungs- und Einfügungseinrichtung (15) von den Paketdurchlaufknoten nur die Nummer des Quellenknotens des Pakets erfasst und die Neuronenausgabe-Festlegungseinrichtung (16) den Ausgang des Neurons, das eins-zu-eins dem Quellenknoten entspricht, festlegt, um 0 zu sein.

**14.** Wegleitungssystem nach Anspruch 5, ferner umfassend:

eine Zustandsinformations-Benachrichtigungseinrichtung (17, 19) zum Berichten eines Zustands einer jeweiligen Ausgangsverbindung des Selbstknotens an sämtliche Knoten, die das integrierte Netz bilden; und

eine Verkleinerungseinrichtung (18) für den Zustandsinformationswert eines anderen Knotens zum Verkleinern des Werts der Zustandsinformation, die von der Zustandsinformationsbenachrichtigungseinrichtung (17, 19) des anderen Knotens berichtet wird, in Abhängigkeit von einem Abstand von dem Selbstknoten zu dem anderen Knoten,

wodurch der Einfluss des Zustands des anderen Knotens mit einer Zunahme eines Abstands von dem Selbstknoten zu dem anderen Knoten kleingemacht wird und die Bestimmung einer optimalen Paketausgaberichtung, die für den gegenwärtigen Zustand des integrierten Netzes und die Bedingung, die von dem Medium angefordert wird, geeignet ist, ermöglicht wird.

**15.** Wegleitung nach Anspruch 14,
*dadurch gekennzeichnet, dass*

die Zustandsinformations-Benachrichtigungseinrichtung (17, 19) eine Paketverzögerungszeit und ein Paketverlustverhältnis für die jeweiligen Ausgangsverbindungen von dem Selbstknoten als die Zustandsinformation berichtet, eine Zustandsinformationbenachrichtigungspaket-Verarbeitungseinheit, die die Verkleinerungseinrichtung (18) für den Zustandsinformationswert eines anderen Knotens bildet, die von dem anderen Knoten berichtete Zustandsinformation, die eine Paketverzögerungszeit und ein Paketverlustverhältnis für jeweilige Ausgangsverbindungen des anderen Knoten umfasst, durch die Anzahl von Sprüngen gleich zu der Anzahl der Weitergabeverbindungen von dem Selbstknoten zu dem anderen Knoten, bereitstellt, wodurch das Ergebnis der Teilung an die Externstimulus-Eingabeeinheit ausgegeben wird.

**16.** Wegleitungssystem nach Anspruch 5, ferner umfassend:

eine Zustandsinformations-Benachrichtigungseinrichtung (19), um sämtliche Knoten, die das integrierte Netz (10) bilden, über den Zustand von jeweiligen Ausgangsverbindungen des Selbstknotens und einen Bereich, in dem der Zustand innerhalb des integrierten Netzes (10) berichtet wird, zu berichten; und

eine Verkleinerungseinrichtung (20) für den Zustandsinformations- und Benachrichtigungsbereichswert eines anderen Knotens zum Verkleinern des Werts der Zustandsinformation, die von der Zustandsinformations-Benachrichtigungseinrichtung (19) des anderen Knotens berichtet wird, und des Werts des Benachrichtigungsbereichs in Abhängigkeit von dem Abstand aus dem Ergebnis der Verkleinerung der beiden Werte zu dem benachbarten Knoten und zum Ausgeben des Ergebnisses der Verkleinerung an die Externstimulus-Eingabe in dem Selbstknoten, wenn das Ergebnis der Verkleinerung des Benachrichtigungsbereichs nicht 0 ist, zum Ausgeben des Ergebnisses der Verkleinerung der beiden Werte an die Externstimulus-Eingabeeinheit innerhalb des Selbstknotens ohne Modifizieren des Ergebnisses der Verkleinerung an die benachbarten Knoten, wenn das Ergebnis der Verkleinerung des Benachrichtigungsbereichs 0 ist,

wodurch der Einfluss des Zustands des anderen Knotens mit einer Zunahme des Abstands von dem Selbstknoten zu dem anderen Knoten verkleinert wird und ermöglicht wird, dass ein Multimedia-Integrationsnetz (10) und eine Bedingung, die von dem Medium angefordert wird, als die Paketausgaberichtung verwendet wird.

17. Wegleitungssystem nach Anspruch 5, ferner umfassend:

eine Zustandsinformationsmittelungs- und Benachrichtigungseinrichtung (21) zum Ausführen eines Mittelungsbetriebs des Zustands der jeweiligen Ausgangsverbindungen des Selbstknotens bezüglich einer Vielzahl von Arten von Perioden, und zum Benachrichtigen von jeweiligen Knoten, die das integrierte Netz (10) bilden, über den Wert des Weitergabebereichs, der sich in Abhängigkeit von den Perioden ändert, in dem das Ergebnis der Mittelung innerhalb des Netzes weitergegeben wird, und eines Benachrichtigungsbereichs zum Bestimmen des Bereichs des Knotens, in dem das Ergebnis der Mittelung für die Wegleitung verwendet wird und der sich in Abhängigkeit von der Periode ändert, und des Ergebnisses der Mittelung, bezüglich einer Vielzahl von Arten der Perioden; und

eine Empfangsverarbeitungseinrichtung (22) für die Zustandsinformation eines anderen Knotens zum Verkleinern des Werts des Weitergabebereichs, der von der Zustandsinformationsmittelungs- und Benachrichtigungseinrichtung des anderen Knotens empfangen wird, um 1, um das Ergebnis der Verkleinerung des Weitergabebereichs, den Benachrichtigungsbereich und den Mittelungswert der Zustandsinformation an sämtliche benachbarten Knoten auszugeben, wenn das Ergebnis der Verkleinerung nicht 0 ist, und um den Wert der Mittelung der Zustandsinformation an die Externstimulus-Eingabeeinheit (13) auszugeben, wenn der Selbstknoten sich innerhalb des Benachrichtigungsbereichs befindet;

wodurch eine Zunahme eines Verkehrs aufgrund der Zustandsbenachrichtigung verhindert wird und ermöglicht wird, dass eine Richtung, die sich für den gegenwärtigen Zustand des integrierten Netzes und die Bedingung, die von den Medien benötigt wird, am besten eignet, als die Paketausgaberichtung verwendet werden.

18. Wegleitungssystem nach Anspruch 5,
*dadurch gekennzeichnet, dass*

das Multimedia-Integrationsnetz zum Ausführen einer Kommunikation durch ein Virtuellanrufsystem vorgesehen ist.

19. Wegleitungssystem nach Anspruch 18,
*dadurch gekennzeichnet, dass*

die Medien Audio, Schall, Bilder und Daten unterhalten.

20. Wegleitungssystem nach Anspruch 18,
*dadurch gekennzeichnet, dass*

das neuronale Netz (12) zwei Arten von Neuronen umfasst, umfassend ein Neuron, das eins-zu-eins jedem der Knoten, die das Multimedia-Integrationsnetz bilden, entspricht und ein Neuron, das eins-zu-eins jeder der Verbindungen, die zwischen den jeweiligen Knoten verbunden sind, entspricht und die Externstimulus-Eingabeeinheit (13) einen externen Stimulus an die Neuronen ausgibt, die eins-zu-eins jeder der Verbindungen entsprechen,

jeweilige Neuronen in dem neuronalen Netz Eingänge von den anderen Neuronen zu dem externen Stimulus addieren, nachdem ein Gewichtungsbetrieb ausgeführt wird, wobei das Ergebnis der Addition dem Schwellwertprozeß unterzogen wird, wodurch 0 oder 1 ausgegeben wird, nachdem der obige Betrieb wiederholt wird; und

der Knoten, der dem Knotenentsprechungsneuron entspricht, dessen Ausgang auf 1 stabilisiert ist, als ein Knoten in der Paketausgaberichtung bestimmt wird, und eine Verbindung, die dem Verbindungsentsprechungsneuron entspricht, dessen Ausgang auf 1 stabilisiert ist, als eine Verbindung in der Paketausgaberichtung bestimmt wird.

21. Wegleitungssystem nach Anspruch 18
*dadurch gekennzeichnet, dass*

auf eine Einstellung eines Anrufs für einen virtuellen Anruf hin, das neuronalen Netz (12) und die Externstimulus-Eingabeeinheit (13) in dem Quellenknoten des virtuellen Anrufs den Anrufpfad von dem Quellenknoten zu dem Zielknoten so ermittelt, dass der gesamte Pfad für eine Bedingung geeignet ist, die von den Medien des virtuellen Anrufs von dem gegenwärtigen Zustand des Netzes benötigt wird.

22. Wegleitungssystem nach Anspruch 18,
*dadurch gekennzeichnet, dass*

zum Erhalten des Pfads eines virtuellen Anrufs, der in Echtzeit auf den Zustand des Multimedia-Integrationsnetzes (10) adaptiv ist, die Externstimulus-Eingabeeinheit (13) eine Kapazität von jeweiligen Verbindungen zwischen jeweiligen Knoten, die das integrierte Netz (10) bilden, ein Frequenzband, welches gerade verwendet wird, ein zulässiges Verwendungsverhältnis der Verbindung und eine Paketverzögerungszeit für den gegenwärtigen Zustand des integrierten Netzes (10) empfängt und ein Frequenzband, das von dem Medium benötigt wird, als eine Bedingung, die von dem Medium für den virtuellen Anruf benötigt wird, empfängt.

23. Wegleitungssystem nach Anspruch 22,
*dadurch gekennzeichnet, dass*

die Externstimulus-Eingabeeinheit (13) mit einem Neuron, das eins-zu-eins dem Verbindungsentsprechungsneuron in dem neuronalen Netz entspricht, vorgesehen ist, das Neuron in der Externstimulus-Eingabeeinheit (13) die Kapazität, ein gerade verwendetes Frequenzband, ein zulässiges Verwendungsverhältnis einer Verbindung und ein von einem Medium für den virtuellen Anruf benötigtes Frequenzband empfängt, wodurch 1 an die Verbindung entsprechend zu dem Neuron ausgegeben wird, wenn das Frequenzband, das von dem Medium benötigt wird, akzeptabel ist, und 0 an die Verbindung entsprechend zu dem Neuron ausgegeben wird, wenn das Frequenzband, das von dem Medium benötigt wird, nicht akzeptabel ist, und der externe Stimulus entsprechend zu dem Ausgang des Neurons und der Paketverzögerungszeit von jeweiligen Verbindungen an das Verbindungsentsprechungsneuron ausgegeben wird.

24. Wegleitungssystem nach Anspruch 18,
*dadurch gekennzeichnet, dass*

das neuronale Netz (12) und die Externstimulus-Eingabeeinheit (13) einen Pfad bereitstellt, der ein von dem Medium für einen virtuellen Anruf angefordertes Frequenzband erfüllt und die Verzögerungszeit von dem Quellenknoten zu dem Zielknoten für den virtuellen Anruf minimiert.

25. Wegleitungssystem nach Anspruch 20,
*dadurch gekennzeichnet, dass*

der Knoten, der dem Knotenentsprechungsneuron entspricht, dessen Ausgang auf 1 stabilisiert ist, in dem neuronalen Netz (12) in dem Quellenknoten für den virtuellen Anruf als ein Weitergabeknoten bestimmt wird, der einen Pfad des virtuellen Anrufs bildet, und ein Anrufeinstellungspaket, das die Nummer des Weitergabeknotens enthält, erzeugt wird und das Anrufeinstellungspaket an den Zielknoten des virtuellen Anrufs übertragen wird, wodurch ein Anruf für den virtuellen Anruf eingestellt wird.

26. Wegleitungssystem nach Anspruch 20,
*dadurch gekennzeichnet, dass*

wenn ein Fehler der Verbindung oder des Knotens während einer Kommunikation durch den virtuellen Anruf auftritt, der Knoten, der den Fehler erfasst, der Quellenknoten in einer Pseudoweise wird, der Pseudoquellenknoten den gesamten Umleitungspfad von dem Selbstknoten zu dem Zielknoten durch Verwendung des neuronalen Netzes, das in dem Selbstknoten vorgesehen ist, ermittelt, um den Ausgang des Neurons, das der Fehlerverbindung oder dem Fehlerknoten entspricht, auf 0 und die Externstimulus-Eingabeeinheit (13), die in dem Selbstknoten vorgesehen ist, festzulegen, und das Anrufeinstellungspaket von dem Quellenknoten zu dem Zielknoten durch die Weitergabeknoten entlang des ermittelten Umleitungspfads überträgt, wodurch der Umleitungspfad eingestellt wird, ohne zu bewirken, dass eine Kommunikation des virtuellen Anrufs anhält.

**Revendications**

1. Système de routage destiné à être utilisé dans un réseau de commutation par paquets destiné à exécuter des communications de supports sous un format de paquets, comprenant un réseau neuronal :

   caractérisé en ce que

   le réseau neuronal est un réseau neuronal du type interconnexion (12) destiné à permettre que des noeuds respectifs formant le réseau de commutation par paquets déterminent une direction de sortie d'un paquet provenant du noeud lui-même, et
   un moyen d'entrée de stimulus externe (13) destiné à fournir en sortie un stimulus externe à un neurone formant ledit réseau neuronal (12) conformément à l'état actuel du réseau de commutation par paquets et à une condition requise par un support inclus dans le réseau de commutation,
   en permettant ainsi qu'une direction optimum soit une direction de sortie de paquet conformément à l'état actuel du réseau de commutation par paquets et à la condition requise par les supports.

2. Système de routage selon la revendication 1, dans lequel le réseau de commutation par paquets est destiné à exécuter une communication par un système d'appel virtuel.

3. Système de routage selon la revendication 1, comprenant en outre :

   un moyen de notification d'informations d'état (17, 19) destiné à notifier un état des liaisons de sortie respectives du noeud lui-même à tous les noeuds formant le réseau de commutation par paquets, et
   un moyen de diminution de valeur d'informations d'état d'un autre noeud (18, 20) destiné à diminuer la valeur des informations d'état notifiées par le moyen de notification d'informations d'état de l'autre noeud conformément à une distance entre le noeud lui-même et l'autre noeud,
   en rendant ainsi l'influence de l'état de l'autre noeud faible avec une augmentation d'une distance entre le noeud lui-même et l'autre noeud et en permettant la détermination d'une direction de sortie de paquet optimum convenant à l'état actuel du réseau de commutation par paquets et à la condition requise par les supports.

4. Système de routage selon la revendication 3, dans lequel

   le moyen de notification d'informations d'état (17, 19) notifie en outre une portée suivant laquelle l'état est notifié à l'intérieur du réseau de commutation vers tous les noeuds formant le réseau de commutation, et le moyen de diminution de valeur d'informations d'état de l'autre noeud (18, 20) diminue en outre la valeur de la portée de notification conformément à la distance entre le noeud lui-même et l'autre noeud, notifie le résultat de la diminution desdites deux valeurs au noeud adjacent et fournit en sortie le résultat de la diminution au moyen d'entrée de stimulus externe dans le noeud lui-même lorsque le résultat de la diminution de la portée de notification n'est pas 0, et fournit en sortie le résultat correspondant au résultat de la diminution desdites deux valeurs au moyen d'entrée de stimulus externe à l'intérieur du noeud lui-même sans notifier le résultat de la diminution au noeud adjacent lorsque le résultat de la diminution de la portée de notification est 0, en diminuant ainsi l'influence de l'état de l'autre noeud avec une augmentation de la distance entre le noeud lui-même et l'autre noeud, et en permettant qu'une direction la plus appropriée pour l'état actuel du réseau de commutation par paquets et une condition requise par les supports soit utilisée en tant que direction de sortie de paquet.

5. Système de routage selon la revendication 1, dans lequel le réseau de commutation par paquets est un réseau intégré multimédia.

6. Système de routage selon la revendication 5, dans lequel

   ledit réseau neuronal (12) comprend deux types de neurones comportant un neurone en correspondance biunivoque avec chacun des noeuds formant le réseau intégré multimédia et un neurone en correspondance biunivoque avec chacune des liaisons connectées entre lesdits noeuds respectifs, et ledit moyen d'entrée de stimulus externe (13) fournit en sortie un stimulus externe au neurone en correspondance biunivoque avec chacune desdites liaisons,
   des neurones respectifs dans ledit réseau neuronal (12) ajoutent des entrées provenant des autres neurones au stimulus externe après qu'une opération de pondération d'entrée soit exécutée, ledit résultat de l'addition est soumis à un traitement d'application de seuil, en fournissant ainsi en sortie 0 ou 1, après répétition de l'opération ci-dessus, et

le noeud correspondant audit neurone en correspondance avec le noeud dont la sortie est stabilisée à 1 est déterminé comme étant un noeud dans une direction de sortie de paquet, et une liaison correspondant au neurone en correspondance avec la liaison dont la sortie est stabilisée à 1 est déterminée comme étant une liaison dans une direction de sortie de paquet.

7. Système de routage selon la revendication 5 ou 6, dans lequel

   lesdits supports prennent en compte de la voix, des images et des données.

8. Système de routage selon l'une quelconque des revendications 5 à 7, dans lequel

   dans des noeuds respectifs (11) formant ledit réseau intégré multimédia (10), après chaque entrée du paquet, la direction de sortie du paquet selon laquelle un temps de propagation du paquet depuis le noeud lui-même vers un noeud de destination devient minimum, est déterminée conformément à l'état actuel du réseau et une condition requise par lesdits supports en utilisant lesdits réseau neuronal (12) et moyen d'entrée de stimulus externe (13), et ladite opération de détermination de direction de sortie est répétée dans des noeuds respectifs à chaque fois que le paquet est déplacé dans ledit réseau intégré multimédia (10) de sorte que le paquet puisse atteindre le noeud de destination par l'intermédiaire d'une voie optimum qui est, en temps réel, adaptative vis-à-vis de la variation de l'état du réseau intégré multimédia et satisfait une condition requise par les supports.

9. Système de routage selon l'une quelconque des revendications 5 à 8, dans lequel

   ledit moyen d'entrée de stimulus externe (13) reçoit en entrée un taux de perte de paquets et un temps de propagation de paquet pour les liaisons respectives formant le réseau intégré en tant qu'état du réseau intégré (10), et reçoit en entrée un taux de perte de paquets autorisable désigné par lesdits supports en tant que condition requise par les supports.

10. Système de routage selon la revendication 9, dans lequel

    ledit moyen d'entrée de stimulus externe (13) est muni d'un neurone en correspondance biunivoque avec un neurone qui correspond à chacune des liaisons formant le réseau intégré (10) lorsque le neurone prévu dans le moyen d'entrée de stimulus externe (13) reçoit un taux de perte de paquets pour des liaisons respectives et un taux de perte de paquets autorisable désigné par les supports, le neurone fournit en sortie 1 si la liaison peut recevoir le paquet depuis les supports et fournit en sortie 0 si la liaison ne peut pas recevoir le paquet depuis les supports, et la sortie provenant du neurone prévu dans le moyen de stimulus externe (13) est ajoutée audit temps de propagation de paquet après que l'opération de pondération est exécutée en tant que stimulus externe du neurone correspondant à la liaison.

11. Système de routage selon la revendication 6, dans lequel

    ledit noeud est identifié par un identificateur de noeud et comprend en outre un moyen de détection et d'insertion de numéro de noeud de passage de paquet (15) destiné à détecter le numéro de noeud du noeud au travers duquel le paquet est passé, sur la base du paquet d'entrée et insérer le numéro de noeud lui-même dans le paquet en transmettant ainsi le paquet au noeud adjacent, et un moyen de fixation de sortie de neurone (16) destiné à fixer la sortie du neurone en correspondance biunivoque avec le noeud au travers duquel le paquet d'entrée est passé, pour qu'elle soit à 0,
    en exécutant ainsi un routage du paquet d'entrée en excluant une voie passant par un noeud au travers duquel le paquet d'entrée est passé et en diminuant ainsi le temps de calcul du réseau neuronal.

12. Système de routage selon la revendication 11, dans lequel

    ledit moyen de détection et d'insertion de numéro de noeud de passage de paquet (15) détecte uniquement le noeud adjacent du noeud lui-même parmi les noeuds de passage de paquet et ledit moyen de fixation de sortie de neurone (16) fixe la sortie du neurone en correspondance biunivoque avec le noeud adjacent, pour qu'elle soit à 0.

**13.** Système de routage selon la revendication 11, dans lequel

ledit moyen de détection et d'insertion de numéro de noeud de passage de paquet (15) détecte uniquement le numéro du noeud source du paquet parmi les noeuds de passage de paquet et ledit moyen de fixation de sortie de neurone (16) fixe la sortie du neurone en correspondance biunivoque avec le noeud source, pour qu'elle soit à 0.

**14.** Système de routage selon la revendication 5, comprenant en outre :

un moyen de notification d'informations d'état (17, 19) destiné à notifier un état de liaisons de sortie respectives du noeud lui-même à tous les noeuds formant le réseau intégré, et
un moyen de diminution de valeur d'informations d'état d'un autre noeud (18) destiné à diminuer la valeur des informations d'état notifiées par le moyen de notification d'informations d'état (17, 19) de l'autre noeud conformément à une distance entre le noeud lui-même et l'autre noeud,
en rendant ainsi l'influence de l'état de l'autre noeud faible avec une augmentation d'une distance entre le noeud lui-même et l'autre noeud et en permettant la détermination d'une direction de sortie de paquet optimum convenant à l'état actuel du réseau intégré et à la condition requise par les supports.

**15.** Système de routage selon la revendication 14, dans lequel

ledit moyen de notification d'informations d'état (17, 19) notifie un temps de propagation de paquet et un taux de perte de paquets pour les liaisons de sortie respectives depuis le noeud lui-même en tant qu'informations d'état, une unité de traitement de paquet de notification d'informations d'état formant le moyen de diminution de valeur d'informations d'état de l'un autre noeud (18) fournit les informations d'état notifiées à partir de l'autre noeud, comprenant un temps de propagation de paquet et un taux de perte de paquets pour les liaisons de sortie respectives de l'autre noeud grâce au nombre de sauts égal au nombre des liaisons de relais depuis le noeud lui-même vers l'autre noeud, en fournissant ainsi en sortie le résultat de la division audit moyen d'entrée de stimulus externe.

**16.** Système de routage selon la revendication 5, comprenant en outre :

un moyen de notification d'informations d'état (19) destiné à notifier à tous les noeuds formant le réseau intégré (10) l'état des liaisons de sortie respectives du noeud lui-même et une portée suivant laquelle l'état est notifié à l'intérieur du réseau intégré (10), et
un moyen de diminution de valeurs d'informations d'état d'un autre noeud et de portée de notification (20) destiné à diminuer la valeur des informations d'état notifiées à partir du moyen de notification d'informations d'état (19) de l'autre noeud et la valeur de la portée de notification conformément à la distance, à partir du résultat de la diminution desdites deux valeurs au noeud adjacent et de fournir en sortie le résultat de la diminution au moyen d'entrée de stimulus externe dans le noeud lui-même lorsque le résultat de la diminution de la portée de notification n'est pas 0, afin de fournir en sortie le résultat de la diminution desdites deux valeurs au moyen d'entrée de stimulus externe à l'intérieur du noeud lui-même sans notifier le résultat de la diminution au noeud adjacent lorsque le résultat de la diminution de la portée de notification est 0,
en diminuant ainsi l'influence de l'état de l'autre noeud avec une augmentation de la distance entre le noeud lui-même et l'autre noeud et en permettant qu'un réseau intégré multimédia et une condition requise par les supports soient utilisés pour la direction de sortie du paquet.

**17.** Système de routage selon la revendication 5, comprenant en outre :

un moyen d'application de moyenne et de notification d'informations d'état (21) destiné à exécuter une opération de moyenne de l'état des liaisons de sortie respectives du noeud lui-même en ce qui concerne une pluralité de types de périodes, et destiné à notifier aux noeuds respectifs formant le réseau intégré (10) la valeur de la portée du relais qui varie conformément aux périodes, dans lequel le résultat de la moyenne est relayé à l'intérieur du réseau et, une portée de notification destinée à désigner la portée du noeud dans lequel le résultat de la moyenne est utilisé pour le routage et qui varie conformément à la période, et le résultat de la moyenne, en ce qui concerne une pluralité de types de périodes, et
un moyen de traitement de réception d'informations d'état d'un autre noeud (22) destiné à diminuer la valeur de la portée de relais reçue du moyen d'application de moyenne et de notification d'informations d'état d'un autre noeud de un, destiné à fournir en sortie le résultat de la diminution de la portée du relais, la portée de notification, et la valeur moyenne des informations d'état à tous les noeuds adjacents lorsque le résultat de la diminution n'est pas 0 et destiné à fournir en sortie la valeur de la moyenne des informations d'état audit moyen d'entrée de stimulus externe (13) lorsque le noeud lui-même est situé à l'intérieur de ladite portée de notification,

en empêchant ainsi une augmentation d'un trafic due à la notification d'état et en permettant qu'une direction la plus appropriée pour l'état actuel du réseau intégré et la condition requise par les supports, soit utilisée en tant que direction de sortie de paquet.

**18.** Système de routage selon la revendication 5, dans lequel

le réseau intégré multimédia est destiné à exécuter une communication par un système d'appel virtuel.

**19.** Système de routage selon la revendication 18, dans lequel

lesdits supports prennent en compte des éléments audio, de son, d'image et des données.

**20.** Système de routage selon la revendication 18, dans lequel

ledit réseau neuronal (12) comprend deux types de neurones comportant un neurone en correspondance biunivoque avec chacun des noeuds formant le réseau intégré multimédia et un neurone en correspondance biunivoque avec chacune des liaisons connectées entre lesdits noeuds respectifs, et ledit moyen d'entrée de stimulus externe (13) fournit en sortie un stimulus externe aux neurones en correspondance biunivoque avec chacune desdites liaisons,

des neurones respectifs dans ledit réseau neuronal ajoutent des entrées provenant des autres neurones au stimulus externe après qu'une opération de pondération soit exécutée, ledit résultat de l'addition est soumis à un traitement d'application de seuil, en fournissant ainsi en sortie 0 ou 1, après répétition de l'opération ci-dessus, et

le noeud correspondant audit neurone en correspondance avec le noeud dont la sortie est stabilisée à 1 est déterminé comme étant un noeud dans une direction de sortie de paquet, et une liaison correspondant au neurone en correspondance avec la liaison dont la sortie est stabilisée à 1 est déterminée comme étant une liaison dans une direction de sortie de paquet.

**21.** Système de routage selon la revendication 18, dans lequel

lors de l'établissement d'un appel pour un appel virtuel, lesdits réseau neuronal (12) et moyen d'entrée de stimulus externe (13) dans le noeud source de l'appel virtuel obtiennent la voie de l'appel depuis le noeud source vers le noeud de destination de sorte que la voie complète convient pour une condition requise par les supports de l'appel virtuel et l'état actuel du réseau.

**22.** Système de routage selon la revendication 18, dans lequel

de manière à obtenir la voie d'un appel virtuel qui est, en temps réel, adaptative vis-à-vis de l'état du réseau intégré multimédia (10), ledit moyen d'entrée de stimulus externe (13) reçoit une capacité de liaisons respectives entre des noeuds respectifs formant le réseau intégré (10), une bande de fréquences qui est utilisé, un taux d'utilisation autorisable de la liaison et un temps de propagation de paquet en tant qu'état actuel du réseau intégré (10), et reçoit une bande de fréquences requise par les supports en tant que condition requise par les supports pour l'appel virtuel.

**23.** Système de routage selon la revendication 22, dans lequel

ledit moyen d'entrée de stimulus externe (13) est muni d'un neurone en correspondance biunivoque avec le neurone correspondant à la liaison dans ledit réseau neuronal, ledit neurone dans le moyen d'entrée de stimulus externe (13) reçoit la capacité, une bande de fréquences qui est utilisée, un taux d'utilisation autorisable d'une liaison et une bande de fréquences requise par les supports pour l'appel virtuel, en fournissant ainsi en sortie la valeur 1 à la liaison correspondant au neurone lorsque la bande de fréquences requise par les supports est acceptable et en fournissant en sortie la valeur 0 à la liaison correspondant au neurone lorsque la bande de fréquences requise par les supports n'est pas acceptable, et le stimulus externe correspondant à la sortie du neurone et le temps de propagation de paquet des liaisons respectives sont fournis en sortie au neurone correspondant à la liaison.

24. Système de routage selon la revendication 18, dans lequel

lesdits réseau neuronal (12) et moyen d'entrée de stimulus externe (13) fournissent une voie satisfaisant une bande de fréquences requise par les supports pour un appel virtuel et minimisant le temps de propagation depuis le noeud source vers le noeud de destination pour l'appel virtuel.

25. Système de routage selon la revendication 20, dans lequel

le noeud correspondant au neurone correspondant au noeud dont la sortie est stabilisée à 1 dans le réseau neuronal (12) dans le noeud source pour l'appel virtuel est défini comme étant un noeud relais formant une voie de l'appel virtuel, et un paquet d'établissement d'appel contenant le numéro du noeud relais est créé et le paquet d'établissement d'appel est transmis vers le noeud de destination de l'appel virtuel, en établissant ainsi un appel pour l'appel virtuel.

26. Système de routage selon la revendication 20, dans lequel

lorsqu'un défaut de la liaison ou du noeud se produit durant une communication par l'appel virtuel, le noeud détectant le défaut devient le noeud source d'une manière factice, le pseudo noeud source obtient la voie de contournement complète depuis le noeud lui-même vers le noeud de destination en utilisant le réseau neuronal prévu dans le noeud lui-même pour fixer la sortie du neurone correspondant à la liaison défaillante ou au noeud défaillant pour qu'elle soit à 0 et le moyen d'entrée de stimulus externe (13) prévu dans le noeud lui-même, et le paquet d'établissement d'appel est transmis depuis le noeud lui-même vers le noeud de destination par l'intermédiaire des noeuds relais le long de la voie de contournement obtenue, en établissant ainsi la voie de contournement sans provoquer l'arrêt d'une communication de l'appel virtuel.

- REQUESTED
  QUALITY

  - BAND
  - DELAY
  - PRIORITY

RECEIVING
NODE

PATH ①

PATH ②

PATH ③

PACKET

PATH ⓝ

PROVIDING
PATH

SENDING
NODE

PER REQUESTED
QUALITY OF
INFORMATION

ROUTING TABLE
(OPTIMUM PATH
IS STORED IN TABLE)

Fig. 1

Fig. 2

RECEIVING
(OR DESTINATION)
NODE

VARIATION OF
STATE OF
NETWORK

OUTPUT PATH

SENDING(OR SOUCE)
NODE

ROUTING
TABLE

PERIODICAL UPDATING
OF ROUTING TABLE

Fig. 3

EP 0 475 233 B1

MULTI MEDIA
INTEGRATED NETWORK

10

NODE

11

LINK

14

14

11

14

11

11

NEURAL NETWORK

13 EXTERNAL
STIMULUS
INPUT
UNIT

12

NEURON

HELD INSIDE
RESPECTIVE NODES

Fig. 4A

**MULTI MEDIA INTEGRATED NETWORK**

10

NODE

11 — LINK — 14

11

14 — 14

11

13

NEURAL NETWORK

EXTERNAL
STIMULUS
INPUT
UNIT

12

NEURON

HELD INSIDE
RESPECTIVE NODES

PACKET PASSING NODE
NUMBER DETECTION
AND ADDITION UNIT

15

NEURON OUTPUT
FIXING UNIT

16

Fig. 4B

## MULTI MEDIA INTEGRATED NETWORK

10

NODE

11  LINK  14

14

14

11

11

NEURAL NETWORK

| OTHER NODE STATE INFORMATION VALUE DECREASING UNIT | EXTERNAL STIMULUS INPUT UNIT | NEURAL NETWORK NEURON | STATE INFORMATION NOTIFYING UNIT |

18  13  12  17

HELD INSIDE RESPECTIVE NODE

Fig. 4C

**MULTI MEDIA INTEGRATED NETWORK**

10

NODE

11 — LINK — 14

11 — 14 — 14

11 — NEURAL NETWORK

20 — OTHER NODE STATE INFORMATION AND NOTIFYING RANGE VALUE DECREASING UNIT

13 — EXTERNAL STIMULUS INPUT UNIT

12 — NEURON

9 — STATE INFORMATION NOTIFYING UNIT

HELD INSIDE RESPECTIVE NODE

Fig. 4D

EP 0 475 233 B1

10

MULTI MEDIA INTEGRATED NETWORK

NODE

11 ○ LINK 14

14

14

11

14

11

22 OTHER NODE STATE INFORMATION RECEIPT PROCESSING UNIT

13 EXTERNAL STIMULUS INPUT UNIT

NEURAL NETWORK

12

NEURON

21 STATE INFORMATION AVERAGE AND NOTIFYING UNIT

HELD INSIDE RESPECTIVE NODE

Fig. 4E

NEURON UV

NEURON XY

$V_{UV}$

$T_{UV, XY}$

CONNECTION
COEFFICIENT

M

F

$V_{XY}$

EXTERNAL INPUT

$I_{XY}$

Fig. 5

Fig. 6

Fig. 7

THE PACKET DELAY TIME (d$_{11}$ ~ d$_{nn}$)

PACKET LOSS RATIO (PL$_{11}$ ~ PL$_{nn}$)

ALLOWABLE LOSS RATIO (L)

EXTERNAL STIMULUS INPUT OF RESPECTIVE NEURON Vij IN THE NEURAL NETWORK

(NEURON) 41    (MULTIPLIER) 43 (ADDER)

Fig. 8

C1, C2 IS WEIGHT COEFFICIENT ; OBTAINING VALUE OF "0"
WHERE THERE IS NO
CONNECTION DUE TO
TOPOLOGY OF ACTUAL
NETWORK

Fig. 9

| IDENTIFIER (DATA) | SOURCE NODE NUMBER | DESTINATION NODE NUMBER | ALLOWABLE PACKET LOSS RATIO (L) | DATA UNIT |
| --- | --- | --- | --- | --- |

Fig. 10

| IDENTIFIER (STATE INFORMATION) | THE NODE NUMBER | SEQU-ENCE NUMBER | THE OUTPUT LINK NUMBER 11 | PACKET DELAY TIME 0 | LOSS RATIO 0 | THE OUTPUT LINK NUMBER 12 | PACKET DELAY TIME $d_{12}$ | LOSS RATIO $PL_{12}$ | |
|---|---|---|---|---|---|---|---|---|---|

RESPECTIVE LINKS          RESPECTIVE LINKS

Fig. 11

EP 0 475 233 B1

| LINK NUMBER | PACKET DELAY TIME | LOSS RATIO |
|---|---|---|
| 1 1 | 0 | 0 |
| 1 2 | $d_{12}$ | $PL_{12}$ |
| 1 3 | $d_{13}$ | $PL_{13}$ |
| 1 4 | $d_{14}$ | $PL_{14}$ |
| 2 1 | $d_{21}$ | $PL_{21}$ |
| 2 2 | $d_{22}$ | $PL_{22}$ |
| 2 3 | $d_{23}$ | $PL_{23}$ |
| 2 4 | $d_{24}$ | $PL_{24}$ |
| $\vdots$ | $\vdots$ | $\vdots$ |
| nn | $d_{nn}$ | $PL_{nn}$ |

Fig. 12

EP 0 475 233 B1

OUTPUT LINK PACKET WAITING
        CAPACITY HOLDING UNIT

| OUTPUT LINK No. | WAITING CAPACITY (BIT) |
|---|---|
| 11 | 0 |
| 12 | $Q_{12}$ |
| : | : |
| $1_n$ | $Q_{1n}$ |

~50

OUTPUT LINK CAPACITY
              HOLDING UNIT

| OUTPUT LINK No. | LINK CAPACIYT |
|---|---|
| 11 | 0 |
| 12 | $C_{12}$ |
| : | : |
| $1_n$ | $C_{1n}$ |

~51

DELAY TIME
CALCULATING UNIT
$Q_{1i}/C_{1i}$
( i = 1 ⋯ n )

~52

TO DELAY TIME
OF NETWORK
STATE HOLDING
UNIT

$d_{1i}$ ( i = 1 ⋯ n )

$d_{1i}$(i = 1 ⋯ n), THAT IS $d_{1i}$ ~ $d_{1n}$

LOSS IN OUTPUT LINK AND INPUT PACKET
                  CAPACITY HOLDING UNIT

| OUTPUT LINK No. | PACKET LOSS CAPACITY (BIT) | INPUT PACKET CAPACITY (BIT) |
|---|---|---|
| 11 | 0 | 0 |
| 12 | $LN_{12}$ | $IP_{12}$ |
| : | : | : |
| $1_n$ | $LN_{1n}$ | $IP_{1n}$ |

53

STATE
NOTIFYING
PACKET
ASSEMBLY
UNIT

~56

TO
ADJACENT
NODE

SEQUENCE NUMBER
HOLDING UNIT

~55

$PL_{1i}$(i = 1 ⋯ n), THAT IS $PL_{1i}$ ~ $PL_{1n}$

LOSS RATIO
CALCULATING UNIT
$LN_{1i}/IP_{1i}$
( i = 1 ⋯ n )

~54

TO LOSS RATIO OF
NETWORK STATE
HOLDING UNIT

$PL_{1i}$(i = 1 ⋯ n)

F i g.  1 3

EP 0 475 233 B1

REGISTER 1

58

| $V_1$ |
|:---:|
| ⋮ |
| $V_i$ |
| ⋮ |
| $V_n$ |

(NEURON
CORRESPOND-
ING TO NODE)

REGISTER 2

59

| $V_{11}$ | · · · | $V_{1j}$ | · · · | $V_{1n}$ |
|:---:|:---:|:---:|:---:|:---:|
| ⋮ | | ⋮ | | ⋮ |
| $V_{i1}$ | · · · | $V_{ij}$ | · · · | $V_{in}$ |
| ⋮ | | ⋮ | | ⋮ |
| $V_{n1}$ | · · · | $V_{nj}$ | · · · | $V_{nn}$ |

(NEURON
CORRESPOND-
ING TO LINK)

# Fig. 14

SET POINTER AT ROW CORRESPONDING TO
SELF-NODE NUMBER i IN THE SECOND
REGISTER → i-TH ROW (Vi$^x$) — S 6 1

SEARCH NUMBER j OF COLUMN IN WHICH
OUTPUT $V_{ij}$ OF NEURON IS "1", AMONG
THE ABOVE i-TH ROW (j COLUMN) — S 6 2

OUTPUT PACKET TO OUTPUT LINK WHOSE
ADJACENT NODE NUMBER IS j — S 6 3

# F i g. 1 5

| IDEN-TIFIER | NUMBER OF PASSED NODES | NODE NUMBER 1 | NODE NUMBER 2 | NODE NUMBER 3 | NODE NUMBER 4 | NODE NUMBER 5 | OTHER HEADER INFORMATION |
|---|---|---|---|---|---|---|---|
| | | 1 | 2 | 3 | 4 | 5 | |

Fig. 16A

| IDEN-TIFIER | AD-JACENT NODE NUMBER | OTHER HEADER INFORMATION |
|---|---|---|

Fig. 16B

| IDEN-TIFIER | SOURCE NODE NUMBER | OTHER HEADER INFORMATION |
|---|---|---|

Fig. 16C

50

Fig. 17

FROM RECEIVED PACKET
PROCESSING UNIT

TO PACKET OUTPUT
DIRECTION DETERMINING UNIT

NODE NUMBER
UPDATING
UNIT — 77

ADJACENT
NODE NUMBER
DETECTING
UNIT — 76

NODE No.

| 1 | I | O | → $V_1$ |
|---|---|---|---|
| 2 | I | O | → $V_2$ |
| . | | O | → $V_3$ |
| i | I | I | → $V_i$ |
| . | | | |
| n | I | O | → $V_n$ |

i →

73 EXTERNAL
STIMULUS
HOLDING UNIT

TO EXTERNAL
STIMULUS
OF
RESPECTIVE
NEURONS

F i g .  1 8

EP 0 475 233 B1

FROM RECEIVED PACKET
PROCESSING UNIT

TO PACKET OUTPUT
DIRECTION DETERMINING UNIT

SOURCE NODE
NUMBER
DETECTING UNIT  78

NODE No.

| 1 | I | O → $V_1$ |
| 2 | I | O → $V_2$ |
| . | | |
| i | I | I → $V_i$ |
| . | | |
| n | I | O → $V_n$ |

i →

TO EXTERNAL
STIMULUS
INPUT OF
RESPECTIVE
NEURON

73 EXTERNAL
STIMULUS
HOLDING UNIT

F i g .  1 9

STATE NOTIFYING PACKET PROCESSING UNIT

F i g. 20

EP 0 475 233 B1

Fig. 21

Fig. 22

| IDENTI-FIER (STATE INFOR-MATION) | NODE NUMBER OF NODE ① | SEQUENCE NUMBER | NOTIFY-ING RANGE NUMBER-OF-HOP H | OUTPUT LINK NUMBER 11 | PACKET DELAY TIME 0 | LOSS RATIO 0 | OUTPUT LINK NUMBER 12 | PACKET DELAY TIME $d_{12}$ | LOSS RATIO $PL_{12}$ | . . . |
|---|---|---|---|---|---|---|---|---|---|---|

Fig. 23

DELAY TIME IN
RESPECTIVE OUTPUT LINKS

LOSS RATIO IN
RESPECTIVE OUTPUT LINKS

STATE
NOTIFYING
PACKET
ASSEMBLING
UNIT

_121_

TO
ADJACENT NODE

_122_

H HOP

NOTIFYING RANGE
NUMBER-OF-HOP
HOLDING UNIT

_55_

SEQUENCE NUMBER
HOLDING UNIT

F i g .  2 4

EP 0 475 233 B1

NOTIFYING DATA
DECREASING UNIT

FROM RECEIVED PACKET
PROCESSING UNIT

NOTIFYING
DATA LATCH
UNIT

125

$d_{in} / (H_R - H_1 + 1)$ → $d_{in}'$

$H_1$ (NUMBER OF HOPS)　　　$H_1$

$PL_{in} / (H_R - H_1 + 1)$ → $PL_{in}'$

NOTIFYING RANGE
NUMBER-OF-HOP COUNT
DOWN PROCESSING UNIT

126

129

NOTIFYING RANGE
HOLDING REGISTER
$H_R$

$H_R$

130

VALUE
OF $H_1 - 1$

127

HOP COUNT
CHECKING
UNIT
(NOT TO RELAY IF 0)

128

NUMBER-
OF-HOP
UPDATING
UNIT

RELAY OF STATE
NOTIFYING PACKET

TO
ADJACENT NODE

TO NETWORK
STATE
HOLDING UNIT

Fig. 25

STATE OF LINK 1  131

HOP COUNTER  $h_1$  135₁

TIME AVERAGE UNIT  132  STATE  PACKET TRANSMITTING UNIT  136  CLASS 1

RESET

NOTIFYING INTERVAL CONTROL (COUNTER)  134

TRANSMISSION INSTRUCTION

RELAYED WITHIN HOP COUNT $h_1$

133₁  NOTIFYING INTERVAL  $n_1$

HOP COUNTER  $h_2$  135₂

TIME AVERAGE UNIT  132  STATE α  PACKET TRANSMITTING UNIT  136  CLASS 2

RESET

NOTIFYING INTERVAL CONTROL (COUNTER)  134

TRANSMISSION INSTRUCTION

RELAYED WITHIN HOP COUNT $h_2$

133₂  NOTIFYING INTERVAL  $n_2$

CLASS i

RELAYED WITHIN HOP COUNT $h_i$

F i g. 26

EP 0 475 233 B1

STATE
NOTIFYING
PACKET
GENERATING
NODE

| 1 | 2 | 3 | 4 | 5 | 6 |

| NUMBER-OF-HOP | NUMBER-OF-HOP | NUMBER-OF-HOP | NUMBER-OF-HOP | NUMBER-OF-HOP |
|---|---|---|---|---|
| 1 | 2 | 3 | 4 | 5 |

EQUAL TO ← NUMBER OF SEARCH HOP

FIRST PACKET

| $h_{1s}$ | $h_1$ |
|---|---|
| 1 | 3 |

RANGE OF HOP COUNTS 1 TO 3

$h_1 = 2$    $h_1 = 1$    NOT TO TRANSMIT BECAUSE $h_1 = 0$

SECOND PACKET

| $h_{2s}$ | $h_2$ |
|---|---|
| 4 | 5 |

$h_2 = 4$    $h_2 = 3$    $h_2 = 2$    $h_2 = 1$    NOT TO TRANSMIT BECAUSE $h_2 = 0$

$h_{1s} \leqq$ SEARCHED NUMBER-OF-HOPS

$h_{2s} >$ SEARCHED NUMBER-OF-HOPS

$h_{2s} \leqq$ SEARCHED NUMBER-OF-HOPS

ONLY FIRST PACKET IS USED FOR ROUTING

SECOND PACKET IS USED FOR ROUTING

Fig. 27

Fig. 28

Fig. 29

Fig. 30

| IDENTI-FIER | NODE NUMBER | SEQUENCE NUMBER | NOTIFY-ING RANGE OF START NUMBER-OF-HOP h s | RELAY RANGE NUMBER-OF-HOP h | OUTPUT LINK NUMBER | STATE OF OUTPUT LINK | OUTPUT LINK NUMBER | STATE OF OUTPUT LINK |
|---|---|---|---|---|---|---|---|---|
| | | | | | | | | |

Fig. 31

FROM SEQUENCE
NUMBER
CHECKING UNIT

TO
NOTIFYING
DATA LATCH
UNIT

155

NODE
NUMBER

| NODE NUMBER | NUMBER-OF-HOPS |
|---|---|
| 1 | 2 |
| 2 | 3 |
| : | : |
| i | H i |
| : | : |

NUMBER-OF-HOP
TABLE

hs

156

NUMBER-OF-HOP
COMPARING UNIT

TO
NOTIFYING
DATA LATCH
UNIT

Hi

hi'

157

NOTIFYING RAGE
NUMBER-OF-HOPS
COUNTING DOWN
PROCESSING UNIT

158

hi' -1

NUMBER-OF-HOP COUNT
CHECKING UNIT
(RELAY IS NOT PERFORMED
IN CASE OF "0")

159

NUMBER-OF
-HOP
UPDATING
UNIT

STATE
NOTIFICATION

PACKET RELAY

F i g . 32

EP 0 475 233 B1

66

Fig. 33

EP 0 475 233 B1

PREDICTION FUNCTION f (d)

$$\frac{d^{(t)} - d^{(t-1)}}{([t] - [t-1])} ([t] - [t-1]) + d^{(t)}$$

d $^{(t-1)}$ →

d $^{(t)}$ →

→ d $^{(t-1)}$

F i g. 34 A

PREDICTION FUNCTION f (PL)

$$\frac{PL^{(t)} - PL^{(t-1)}}{([t] - [t-1])} ([t] - [t-1]) + PL^{(t)}$$

P L $^{(t-1)}$ →

P L $^{(t)}$ →

→ P L $^{(t+1)}$

F i g. 34 B

Fig. 35A

BACK PROPAGATION $\quad$ 183

MODIFICATION OF WEIGHT COEFICIENT

$d^{(t-1)}$

THREE LAYER NEURAL NETWORK $\quad$ 181

$d^{(t)\prime}$

182 $\quad$ ERROR

$d^{(t)\prime} - d^{(t)}$

$d^{(t)}$

$d^{(t)}$ TO PACKET DELAY TIME(d) IN NETWORK STATE HOLDING UNIT

DURING THE LEARNING

Fig. 35B

$d^{(t)}$

THREE LAYER NEURAL NETWORK $\quad$ 181

$d^{(t+1)}$

AFTER THE LEARNING

EP 0 475 233 B1

Fig. 36A

EP 0 475 233 B1

BACK PROPAGATION — 188

(t-1)

THREE LAYER NEURAL NETWORK — 186

PREDICTED VALUE AT THE PREVIOUS TIME

t

187

ERROR

(STATE) (VALUE)

VALUE AT PRESENT TIME

t

t

EXTERNAL STIMULUS INPUT UNIT — 13

DURING THE LEARNING

Fig. 36B

THREE LAYER NEURAL NETWORK — 186

t+1

EXTERNAL STIMULUS INPUT UNIT — 13

t

AFTER THE LEARNING

EP 0 475 233 B1

FROM
ADJACENT NODE

FROM
TERMINAL

CALL SETTING
VALUE OF T IN
PACKET SET "F"

RELAY OF DATA PACKET CALL SETTING PACKET

TO
ADJACENT NODE

86

RECEIVED
PACKET
PROCESS-
ING
UNIT

CALL CONNECTING
REQUEST

CALL SETTING
PACKET GENERAT-
ING UNIT

CALL SETTING
PACKET

85

VALUE OF
T

STATE NOTIFYING
PACKET

NETWORK STATE AND MEDIA
REQUEST INFORMATION
HOLDING UNIT

SET

STATE NOTIFYING
PACKET PROCESS-
ING UNIT

RELAY OF STATE
NOTIFYING PACKET

87

STATE NOTIFYING
PACKET GENERAT-
ING UNIT

STATE NOTIFYING
PACKET

LINK CAPACITY

USE FREQUENCY BAND

LINK USE RATIO

DELAY TIME
CALCULAT-
ING UNIT

LOAD

89

PACKET DELAY TIME

82

REQUEST BAND

OPTIMUM PATH
REPRESENTING UNIT

84

88

83

EXTERNAL
STIMULUS
INPUT
PROCESS-
ING
UNIT

NEURAL
NETWORK

81

Fig. 37

RESPECTIVE LINK CAPACITY $C_{ij}(i=1 \cdots n, j=1 \cdots n)$

USE FREQUENCY BAND $F_{ij}(i=1 \cdots n, j=1 \cdots n)$

PACKET DELAY TIME $d_{ij}(i=1 \cdots n, j=1 \cdots n)$

LINK USE RATIO $\alpha$

FREQUENCY BAND T

Fig. 38

| LINK NUMBER | LINK CAPACITY c (bit/sec) | USE FREQUENCY BAND F (BIT/SEC) | PACKET DELAY TIME |
|---|---|---|---|
| 1 1 | O | O | O |
| 1 2 | $C_{12}$ | $F_{12}$ | $d_{12}$ |
| 1 3 | $C_{13}$ | $F_{13}$ | $d_{13}$ |
| 1 4 | $C_{14}$ | $F_{14}$ | $d_{14}$ |
| 2 1 | $C_{21}$ | $F_{21}$ | $d_{21}$ |
| 2 2 | O | O | O |
| 2 3 | $C_{23}$ | $F_{23}$ | $d_{23}$ |
| 2 4 | $C_{24}$ | $F_{24}$ | $d_{24}$ |
| ⋮ | ⋮ | ⋮ | ⋮ |
| nn | $C_{nn}$ | $F_{nn}$ | $d_{nn}$ |

Fig. 39

EP 0 475 233 B1

EP 0 475 233 B1

| PACKET IDENTIFIER (STATE INFORMATION) | NODE NUMBER | SEQUENCE NUMBER | OUTPUT LINK NUMBER 11 | LINK CAPACITY 0 | USE FREQUENCY BAND 0 | DELAY TIME 0 |
|---|---|---|---|---|---|---|

COLLECTIVELY FOR
RESPECTIVE LINKS

| OUTPUT LINK NUMBER 12 | LINK CAPACITY $C_{12}$ | USE FREQUENCY BAND $F_{12}$ | DELAY TIME $d_{12}$ | OUTPUT LINK NUMBER 13 | LINK CAPACITY $C_{13}$ | USE FREQUENCY BAND $F_{13}$ | DELAY TIME $d_{13}$ |
|---|---|---|---|---|---|---|---|

COLLECTIVELY FOR       COLLECTIVELY FOR
RESPECTIVE LINKS     RESPECTIVE LINKS

Fig. 40

Fig. 41

TERMINAL

(DESTINATION NODE)

(RELAY NODE)

(SOURCE NODE)

(CALL SETTING PACKET)

(CALL CONNECTION REQUIREMENT PACKET)

(CALL CONNECTION REQUIREMENT)

TERMINAL

Fig. 42A

GENERATED AT TERMINAL
(CALL CONNECTION REQUIREMENT)

ADDED AT SOURCE NODE

| PACKET IDENTI-FIER | SOURCE NODE NUMBER S | DESTINA-TION NODE NUM-BER D | REQUIRE-MENT FRE-QUENCY BAND T | RELAY NODE ① | RELAY NODE ② | RELAY NODE ③ |
|---|---|---|---|---|---|---|

RELAY NODE NUMBER FIELD

Fig. 42B

76

RECEIVED
PACKET

JUDGING OF
PACKET
IDENTIFIER

95

DATA

ROUTING TABLE
RETRIEVAL FROM
THE SOURCE AND
DESTINATION
NODE NUMBER

99

PACKET OUTPUT TO
OUTPUT LINK OF
ADJACENT NODE NUMBER

CALL
CONNECTION
REQUIREMENT

STATE
INFOR-
MATION

CALL
SETTING

96

CALL SETTING
PACKET
GENERATING
UNIT

STATE NOTIFYING
PACKET PROCESSING
UNIT.

VALUE OF THE
LEFT MOST
REGION OF THE
SOURCE AND
DESTINATION
NODE NUMBER
FIELD IS SET
AT OUTPUT
ADJACENT NODE
NUMBER OF
ROUTINMG TABLE

VALUE OF
RELAY NODE
NUMBER FIELD
IS SHIFTED TO
THE LEFT BY 1

98

REQUIREMENT
FREQUENCY BAND
T IS ADDED TO
USE FREQUENCY
BAND F
CORRESPONDING
TO OUTPUT LINK
NUMBER

97

F i g. 43

| SOURCE NODE NUMBER | DESTINATION NODE NUMBER | OUTPUT ADJACENT NODE NUMBER | OUTPUT LINK NUMBER |
|---|---|---|---|
| 1 | 6 | 6 | 4 6 |
| ⋮ | ⋮ | ⋮ | ⋮ |
| S | d | i | i j |
| ⋮ | ⋮ | ⋮ | ⋮ |
| 6 | 1 | 2 | 4 2 |

F i g. 4 4 A

F i g. 4 4 B

SELF-NODE NUMBER (SOURCE NODE NUMBER : S ) IS SET IN A POINTER ⟋S101

THE NUMBER OF COLUMN IS SEARCHED WHICH IS Vij = 1 IN ROW OF REGISTER 2 CORRESPONDING TO VALUE OF A POINTER ( COLUMN : j ) ⟋S102

THE VALUE OF THE RESULT OF THE SEARCH IS SET IN THE MOST LEFT SIDE OF RELAY NODE NUMBER FIELD WITHIN CALL SETTING PACKET ⟋S103

S104 — IS VALUE OF A POINTER EQUAL TO DESTINATION NODE NUMBER ?

N O

Y E S

NODE NUMBER (ADJACENT NODE) CORRESPONDING TO THE MOST LEFT FIELD IN RELAY NODE NUMBER IN CALL SETTING PACKET IS STORED IN ROUTING TABLE ⟋S105

CALL SETTING PACKET IS OUTPUT TO OUTPUT LINK OF THE ADJACENT NODE NUMBER (PACKET IDENTIFIER IS CHANGED FROM CALL CONNECTION REQUIREMENT TO CALL SETTING) ⟋S106

# F i g. 45

Fig. 46A

Fig. 46B

REALY NODE
NUMBER FIELD

| 2 | 4 | .. |
|---|---|----|

Fig. 46C

Fig. 47

( C: LINK CAPACITY,   F: USE FREQUENCY BAND )

Fig. 48

Fig. 49

DESTINATION NODE

DETOUR PATH

RESET OF PATH

INTERRUPTION OR FAULT

DETECTING NODE

NEURAL NETWORK

NEURON

SOURCE NODE

Fig. 50